# EUROPEAN PATENT SPECIFICATION

(11) **EP 3 339 396 B1**
(45) Date of publication and mention of the grant of the patent: **16.10.2019**
(21) Application number: 17198951.0
(22) Date of filing: 27.10.2017
(51) Int. Cl.: C09K 19/30, C09K 19/20, C09K 19/12, C09K 19/04, C09K 19/56, G02F 1/1337, G02F 1/1343

(54) **LIQUID CRYSTAL DISPLAY DEVICE AND LIQUID CRYSTAL COMPOSITION INCLUDED THEREIN**
FLÜSSIGKRISTALLANZEIGEVORRICHTUNG UND FLÜSSIGKRISTALLZUSAMMENSETZUNG, DIE DARIN ENTHALTEN IST
DISPOSITIF D'AFFICHAGE À BASE DE CRISTAUX LIQUIDES ET COMPOSITION À BASE DE CRISTAUX LIQUIDES INCLUS DANS CELUI-CI

(30) Priority: 21.12.2016 KR 20160175936
(43) Date of publication of application: 27.06.2018
(73) Proprietor: Samsung Display Co., Ltd., Gyeonggi-Do (KR)
(72) Inventor: JANG, Ji Eun, Gyeonggi-do (KR); LEE, Chang Hun, Gyeonggi-do (KR); SON, Jong Ho, Gyeonggi-do (KR); KWON, Sun Young, Gyeonggi-do (KR); OH, Keun Chan, Gyeonggi-do (KR)
(74) Representative: Mounteney, Simon James

(56) References cited:
- EP-A2- 2 921 544
- US-A1- 2015 152 330
- US-A1- 2015 184 075

## Description

### 1. Technical Field

Embodiments of the present invention relate to a liquid crystal display, and more particularly to a liquid crystal composition included therein.

### 2. Discussion of Related Art

A liquid crystal display generally includes a first substrate having a plurality of pixel electrodes, a second substrate having a common electrode, and a liquid crystal layer disposed between the first substrate and the second substrate. The liquid crystal display may display an image by varying light transmittance of the liquid crystal layer according to an electric field formed between each of the pixel electrodes and the common electrode. The liquid crystal display may include a plurality of pixels, which each include the pixel electrode.
US 2015/184075 A1 relates to a liquid crystal composition having negative dielectric anisotropy.
US 2015/152330 A1 relates to a negative dielectric anisotropic liquid crystal compound containing 2,3-difluorophenyl.
EP 2 921 544 A2 relates to a liquid crystal composition and a liquid crystal display including the same.

### SUMMARY

An embodiment of the present invention provides a liquid crystal composition having a relatively high voltage holding ratio and a reduced surface afterimage, and a liquid crystal display including the same.

A liquid crystal display according to an embodiment of the present invention includes a first base substrate, a second base substrate facing the first base substrate, and an electrode unit disposed on at least one of the first base substrate and the second base substrate. A liquid crystal layer is positioned between the first base substrate and the second base substrate and includes a liquid crystal composition, and an alignment layer is positioned between at least one of the first base substrate and the liquid crystal layer or between the second base substrate and the third liquid crystal layer . The liquid crystal composition includes at least one of liquid crystal compound represented by Chemical Formula 1, at least one of liquid crystal compound represented by Chemical Formula 2-A, and at least one of liquid crystal compound represented by Chemical Formula 2-B. The liquid crystal compound of Chemical Formula 2-A includes a liquid crystal compound having both a cyclohexylene and a phenylene. 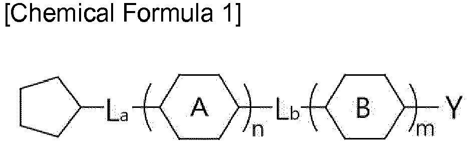 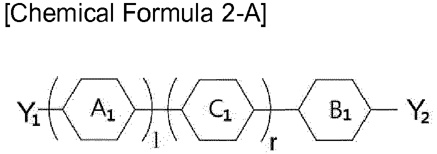 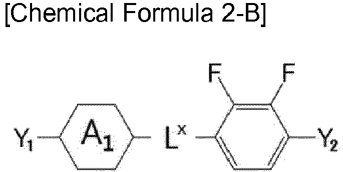
A and B are independently 1,4-cyclohexylene or 1,4-phenylene, and each - H of A and B is unsubstituted or is independently substituted with -F, -CI, -OCF₃, -CF₃, - CHF₂, -CH₂F, C₁-C₂ alkyl, or C₁-C₂ alkoxy,
Y is -H, C₁-C₅ alkyl, or C₁-C₅ alkoxy. When Y is C₁-C₅ alkyl, or C₁-C₅ alkoxy, each -CH₂- group of Y is unsubstituted or is independently substituted with -C≡C-,-CH=CH-, -CF₂O-, -O-, -CO-O-, -O-CO- or -O-CO-O- in such a way that oxygen atoms of adjacent groups are not directly connected to each other, and each hydrogen atom of Y is unsubstituted or is substituted with halogen,
n and m are independently an integer selected from 0 to 2,
Lₐ and L_{b} are independently a single bond, -C≡C-, -COO-, -OCO-, -CF₂O-,-OCF₂-, -CH₂O-, -CO-, -O-, -(CH₂)₂-, or -CH=CH-,
Y₁ and Y₂ are independently -H, -F, -CI, or C₁-C₁₅ alkyl, and when Y₁ and/or Y₂ is C₁-C₁₅ alkyl, each -CH₂- group is unsubstituted or is independently substituted with -C≡C-, -CF₂O-, -CH=CH-, -CO-, -O-, -CO-O-, -O-CO- or -O-CO-O- in such a way that oxygen atoms of adjacent groups are not directly connected to each other, and each hydrogen atom of Y₁ and/or Y₂ is unsubstituted or is substituted with halogen,
A₁, B₁, and C₁ are independently 1,4-cyclohexylene or 1,4-phenylene, - and each -H of A₁, B₁, and C₁ is unsubstituted or is independently substituted with -F, -CI, - OCF₃, -CF₃, -CHF₂, -CH₂F, C₁-C₂ alkyl, or C₁-C₂ alkoxy,
l and r are independently an integer selected from 0 to 2,
and L^{x} is a single bond, -C≡C-, -COO-, -OCO-, - CF₂O-, -OCF₂-, -CH₂O-, -CO-, - O-, -(CH₂)₂-,or -CH=CH-.

The alignment layer includes a polymer polymerized with a monomer represented by Chemical Formula 3 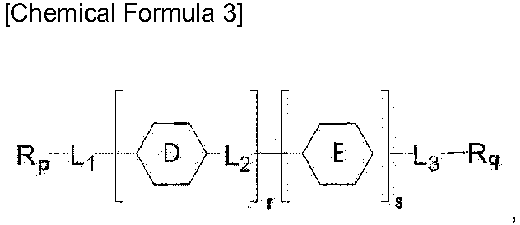
wherein D and E are independently cyclohexylene, phenylene, thiophenylene, benzothiophenylene, or polycyclic aromatic or aliphatic,
wherein each -H of D and E is unsubstituted or is independently substituted with -F, -CI, -OCF₃, -CF₃, -CHF₂, -CH₂F, C₁-C₂ alkyl, or C₁-C₂ alkoxy,
Rₚ and R_{q} are each a reactive group which independently causes polymerization, wherein Rₚ and R_{q} are independently an C₁-C₁₂ acrylate group, a methacrylate group, an epoxy group, an oxetane group, a vinyl-ether group, or a styrene group,
L₁ to L₃ are independently a single bond, C₁-C₅ alkylene, ether, carbonyl, or carboxyl,
wherein when L₁, L₂ or L₃ is C₁-C₅ alkylene or ether, each -CH₂- group is unsubstituted or is independently substituted with -CO-, -O-, -CO-O-, -O-CO- or -O-COO- in such a way that oxygen atoms of adjacent groups are not directly connected to each other, and each -H of L₁, L₂ or L₃ is unsubstituted or is substituted with -F, -Cl, - OCF₃, -CF₃, -CHF₂, or -CH₂,
and r and s are independently an integer selected from 0 to 2.

In an embodiment of the present invention, the liquid crystal compound of Chemical Formula 1 may include at least one of liquid crystal compounds represented by Chemical Formulae 1-1 to 1-6.

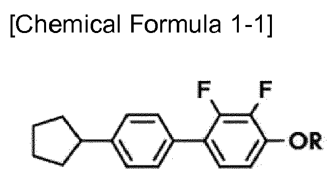

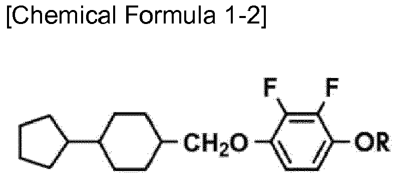

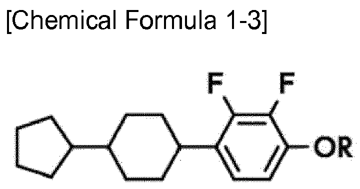

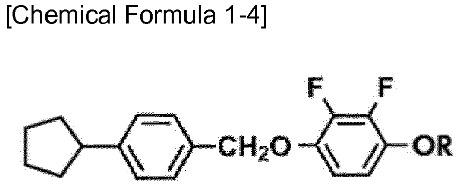

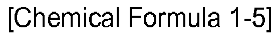

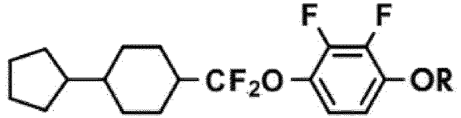

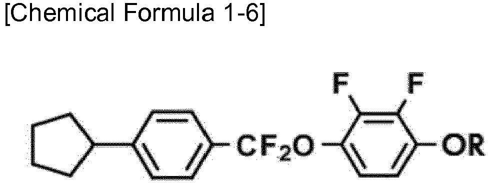

R may be -H or C1-C5 alkyl, and when R is C₁-C₅ alkyl, each -CH₂- group is unsubstituted or is independently substituted with -C≡C-, -CH=CH-, -CF₂O-, -O-, -CO-O-, -O-CO- or -O-CO-O- in such a way that oxygen atoms of adjacent groups are not directly connected to each other, and each hydrogen atom of R is unsubstituted or is substituted with halogen.

In an embodiment of the present invention, the liquid crystal compound of Chemical Formula 1 may include at least one of liquid crystal compounds represented by Chemical Formulae 1-1-A and 1-1-B.

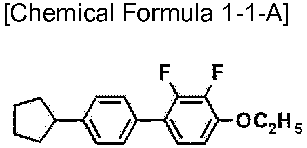

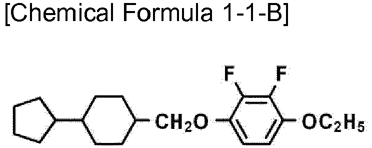

In an embodiment of the present invention, the liquid crystal composition may have negative dielectric anisotropy.

In a monomer of Chemical Formula 3, Rₚ and R_{q} are acrylate and/or methacrylate, and the monomer of Chemical Formula 3 may include at least one of monomers represented by Chemical Formulae 3-1 to 3-31.

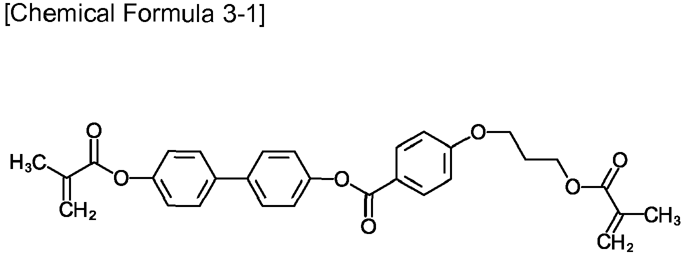

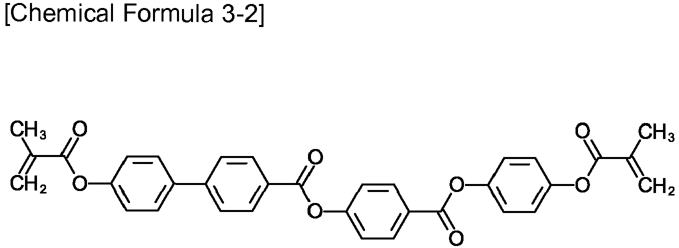

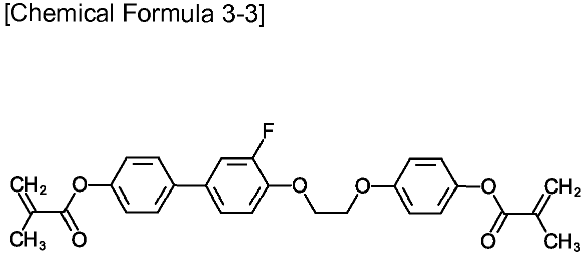

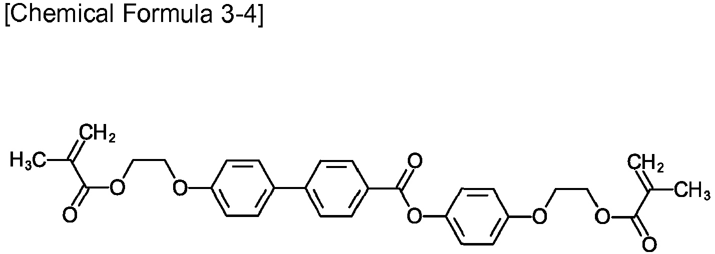

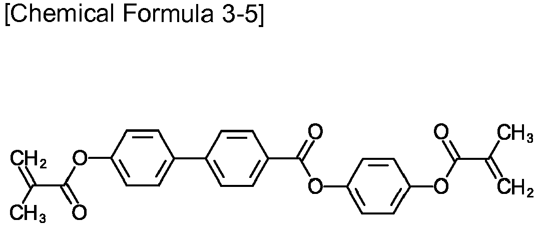

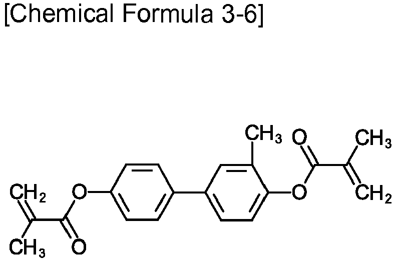

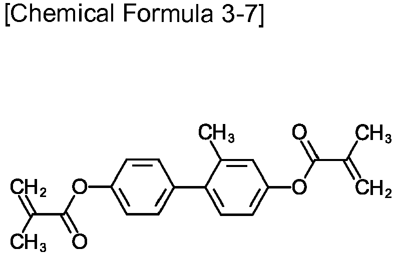

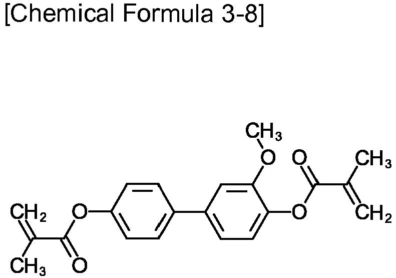

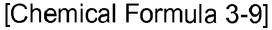

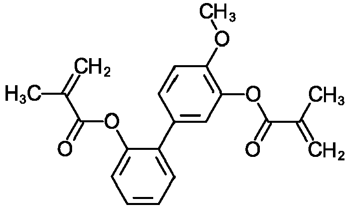

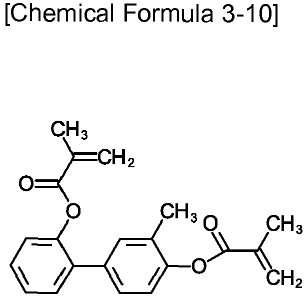

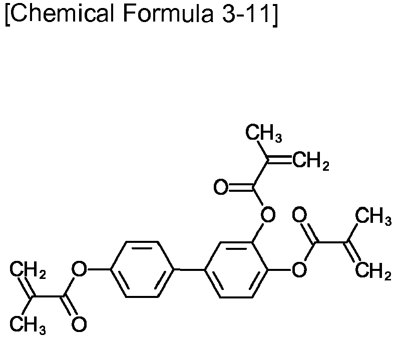

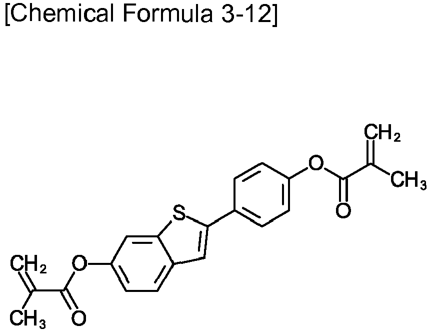

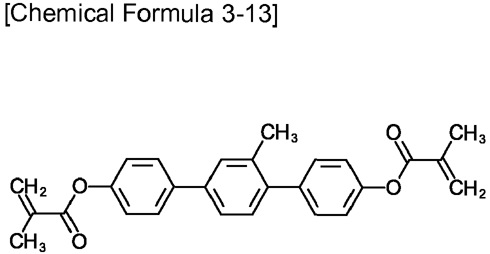

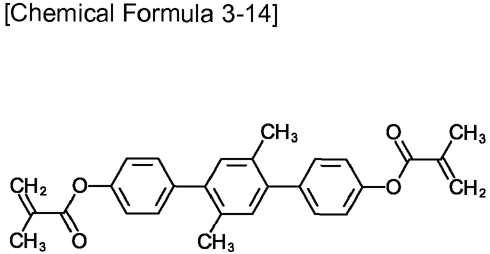

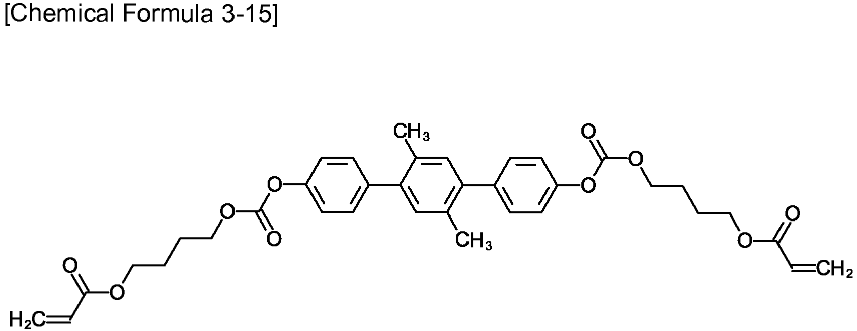

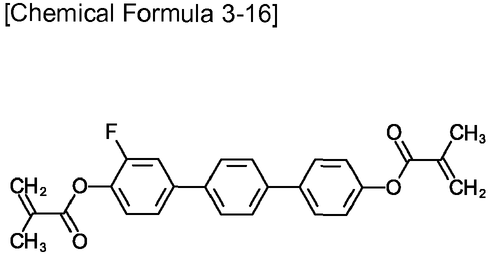

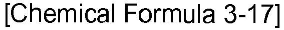

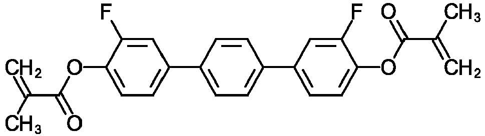

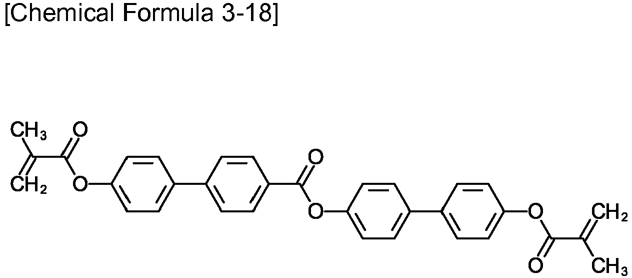

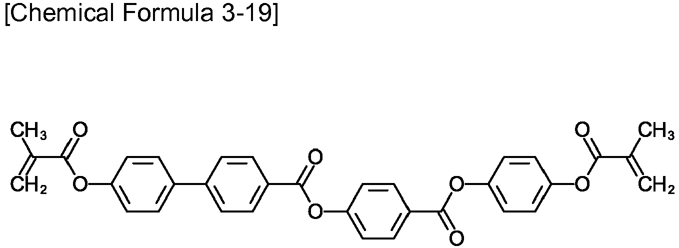

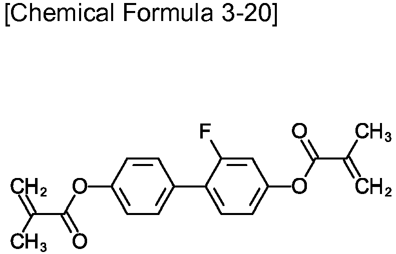

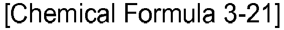

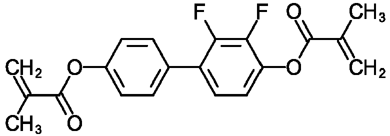

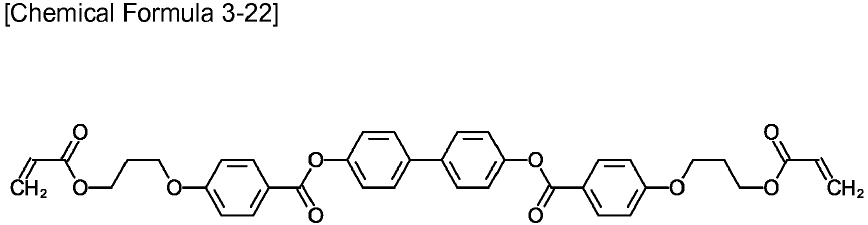

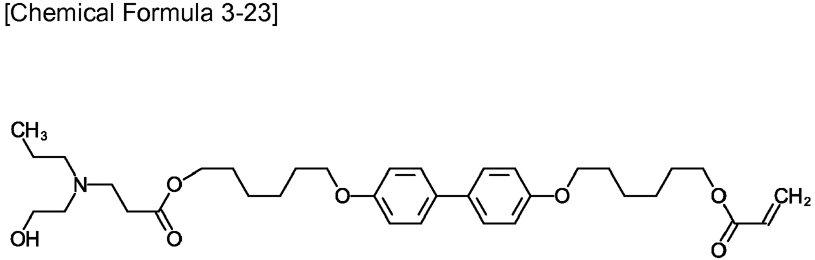

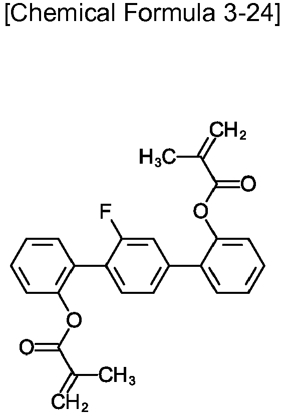

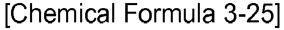

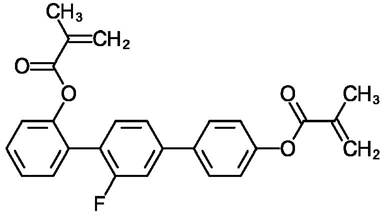

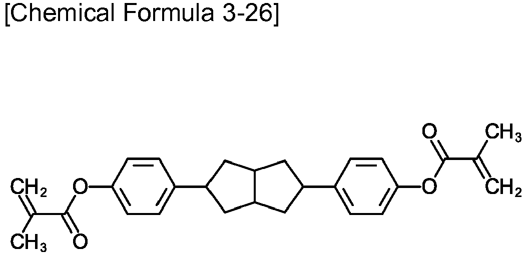

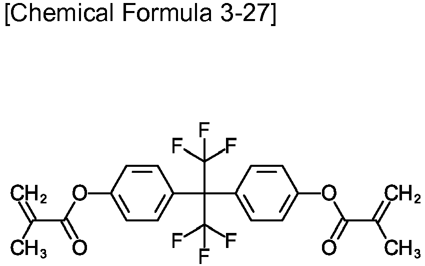

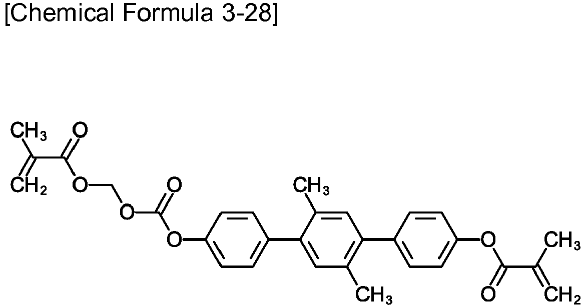

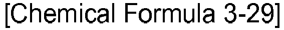

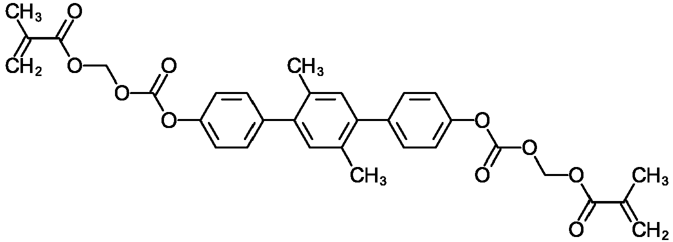

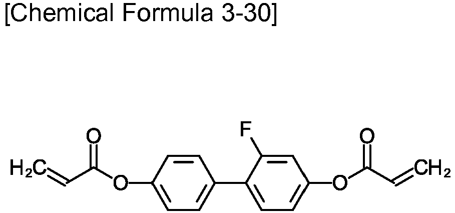

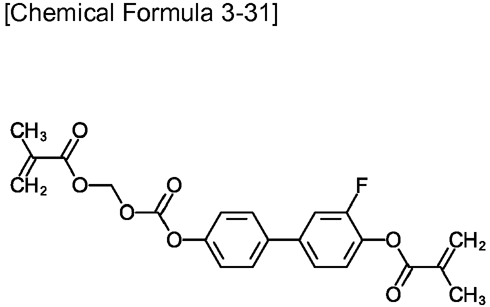

In an embodiment of the present invention, the liquid crystal layer may be driven in a vertical aligned mode.

An embodiment of the present invention provides a liquid crystal composition having a relatively high voltage holding ratio and a reduced surface afterimage, and a liquid crystal display including the same.

At least some of the above and other features of the invention are set out in the claims.

### BRIEF DESCRIPTION OF THE DRAWINGS

The above and other features of the present invention will become more apparent by describing in detail embodiments thereof with reference to the accompanying drawings, in which:
FIG.1 is a schematic block diagram of a liquid crystal display according to an embodiment of the present invention.
FIG.2 is a plan view of a liquid crystal display according to an embodiment of the present invention.
FIG.3 is a cross-sectional view of a liquid crystal display taken along line I-I' of FIG.2.
FIG.4 is a plan view of a liquid crystal display according to an embodiment of the present invention.
FIG.5 is a cross-sectional view of a liquid crystal display taken along line II-II' of FIG.4.
FIG.6 is a flowchart showing a manufacturing method of a liquid crystal display according to an embodiment of the present invention.
FIG.7 shows data of a voltage holding ratio of Comparative Example 2, Example 2, and Example 4.
FIG.8 shows data of a surface afterimage of Comparative Example 2, Example 2, and Example 4 described above.

### DETAILED DESCRIPTION OF THE EMBODIMENTS

Embodiments of the present invention will be described below in more detail with reference to the accompanying drawings. In this regard, the embodiments may have different forms and should not be construed as being limited to the embodiments of the present invention described herein.

Embodiments of the present invention relate to a liquid crystal composition included in a liquid crystal display. The liquid crystal composition may have a negative dielectric anisotropy.

A liquid crystal composition according to an embodiment of the present invention may include at least one of liquid crystal compounds including a cyclopentyl group. A liquid crystal compound including the cyclopentyl group according to an embodiment of the present invention may be represented by Chemical Formula 1.

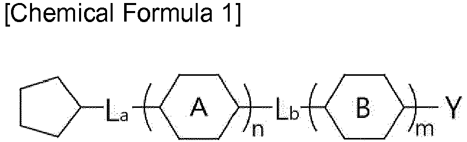

In Chemical Formula 1:
A and B are each independently 1,4-cyclohexylene or 1,4-phenylene, and each -H of A and B may be independently substituted with (*e.g.* replaced by) -F, -CI, - OCF₃, -CF₃, -CHF₂, -CH₂F, C₁-C₂ alkyl, or C₁-C₂ alkoxy,
Y is -H, C₁-C₅ alkyl, or C₁-C₅ alkoxy. When Y is C₁-C₅ alkyl, or C₁-C₅ alkoxy, one or more -CH₂- groups may be independently substituted with (*e.g.* replaced by) - C≡C-, -CH=CH-, -CF₂O-, -O-, -CO-O-, -O-CO- or -O-CO-O- in such a way that adjacent oxygen atoms are not directly connected to each other, and a hydrogen atom of Y may be substituted with halogen,
n and m are each independently an integer selected from of 0 to 2,
and Lₐ and L_{b} are each independently a single bond, -C≡C-, -COO-, -OCO-, -CF₂O-, -OCF₂-, -CH₂O-, -CO-, -O-, -(CH₂)₂-, or -CH=CH-.

In an embodiment of the present invention, a liquid crystal compound including a cyclopentyl group may be included in an amount of more than 0 wt% to about 60 wt% with respect to a total weight of the liquid crystal composition.

As an example, the liquid crystal compound of Chemical Formula 1 may be included in an amount of more than 0 wt% to about 60 wt% with respect to the total weight of the liquid crystal composition.

According to an embodiment of the present invention, when the liquid crystal compound of Chemical Formula 1 is not included, the following effect of the liquid crystal compound of Chemical Formula 1 is not shown, and when the amount of the liquid crystal compound of Chemical Formula 1 exceeds about 60 wt%, it is difficult to control a dielectric anisotropy, a refractive anisotropy, and rotational viscosity of the total liquid crystal composition.

However, a composition ratio of the liquid crystal compound of Chemical Formula 1 is not limited to the above-mentioned range, and other composition ratios can be obtained within a range in which effects described above can be obtained. In an embodiment of the present invention, the liquid crystal compound of Chemical Formula 1 may be included in an amount of from about 0.1 wt% to about 50 wt% with respect to the total weight of the liquid crystal composition. In an embodiment of the present invention, the liquid crystal compound of Chemical Formula 1 may be included in an amount of from about 5 wt% to about 25 wt% with respect to the total weight of the liquid crystal composition. For example, the liquid crystal compound of Chemical Formula 1 may be included in an amount of from about 7 wt% to about 23 wt%, from about 8 wt% to about 22 wt%, from about 9 wt% to about 21 wt% or from about 10 wt% to about 20 wt% with respect to the total weight of the liquid crystal composition.

In an embodiment of the present invention, the liquid crystal compound of Chemical Formula 1 may include at least one of liquid crystal compounds represented by Chemical Formulae 1-1 to 1-6.

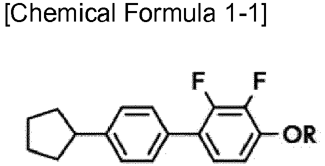

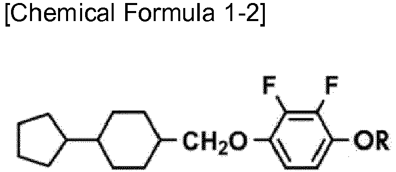

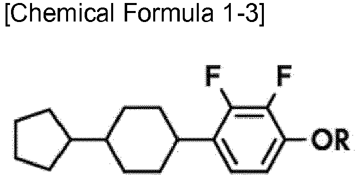

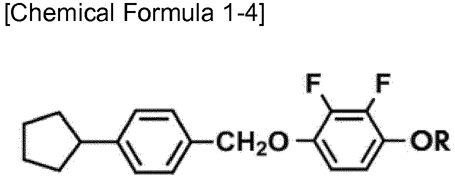

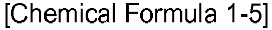

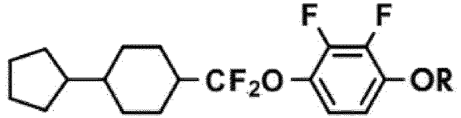

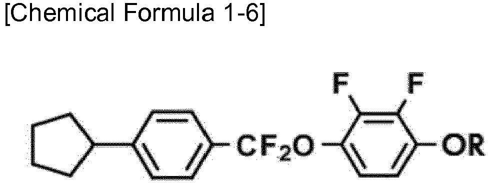

In Chemical Formulae 1-1 to 1-6: R may be -H or C₁-C₅ alkyl. For example, R may be H. For example, R may be C₁-C₅ alkyl. When R is C₁-C₅ alkyl, one or more - CH₂- groups may be independently substituted with (*e.g*. replaced by) -C≡C-, -CH=CH-, -CF₂O-, -O-, -CO-O-, -O-CO- or -O-CO-O- in such a way that adjacent oxygen atoms are not directly connected to each other, and a hydrogen atom of R may be substituted with halogen.

In an embodiment of the present invention, the liquid crystal compound of Chemical Formula 1 may include at least one of liquid crystal compounds represented by Chemical Formulae 1-1-A and 1-1-B.

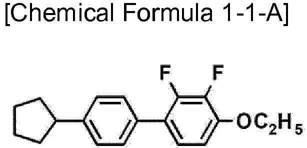

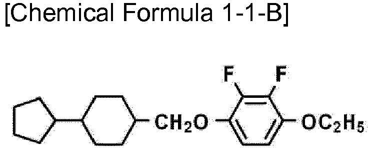

A liquid crystal composition according to an embodiment of the present invention may further include other liquid crystal compounds in addition to the liquid crystal compound described above, and may further include various additives which are commonly used in the art. Liquid crystal compounds and additives, other than the liquid crystal compound having the cyclopentyl group described above may be included in an amount of from about 40 wt% to about 99.9 wt%, for example, from about 50 wt% to about 99.9 wt% or from about 75 wt% to about 95 wt%, with respect to the total weight of the liquid crystal composition. A composition ratio of the liquid crystal compounds and a composition ratio of the additives may be adjusted, as desired.

A liquid crystal composition according to an embodiment of the present invention may further include at least one of liquid crystal compounds represented by Chemical Formula 2 together with the liquid crystal compound having the cyclopentyl group described above.

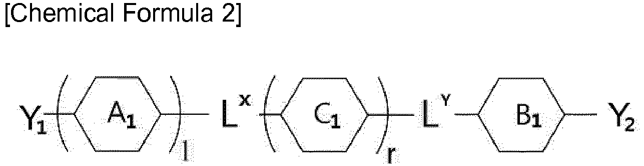

In Chemical Formula 2:
Y₁ and Y₂ may each independently be -H, -F, -CI, or C₁-C₁₅ alkyl. When Y₁ and/or Y₂ is C₁-C₁₅, one or more -CH₂- groups may be independently substituted with (e.g. replaced by) -C≡C-, -CF₂O-, -CH=CH-, -CO-, -O-, -CO-O-, -O-CO- or -O-CO-O- in such a way that adjacent oxygen atoms are not directly connected to each other, and a hydrogen atom of Y₁ and/or Y₂ may be substituted with halogen,
A₁, B₁, and C₁ may each independently be 1,4-cyclohexylene or 1,4-phenylene, -H of A₁, B₁, and C₁ may each be independently substituted with (*e.g*. replaced by) -F, -Cl, -OCF₃, -CF₃, -CHF₂, -CH₂F, C₁-C₂ alkyl, or C₁-C₂ alkoxy,
I and r may each independently be an integer selected from 0 to 2,
L^{x} and L^{Y} may each independently be a single bond, -C≡C-, -COO-, -OCO-, - CF2O-, -OCF2-, -CH2O-, -CO-, -O-, - (CH₂)₂-, or -CH=CH-.

In an embodiment of the present invention, a liquid crystal compound of Chemical Formula 2 may include at least one of liquid crystal compounds represented by Chemical Formula 2-A.

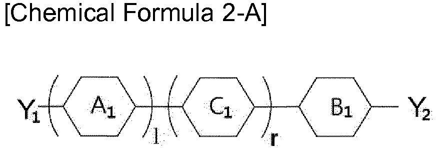

In Chemical Formula 2-A, Y₁, Y₂, A₁, B₁, C₁, I, and r are the same as defined in Chemical Formula 2.

The liquid crystal compound of Chemical Formula 2-A may include at least one of liquid crystal compounds represented by Chemical Formula 2-1 to 2-11.

The liquid crystal compound of Chemical Formula 2-A may include at least one of liquid crystal compound including both a cyclohexylene and a phenylene. In embodiments where the liquid crystal compound of Chemical Formula 2-A includes more than one liquid crystal compound (*e.g*. more than one of the liquid crystal compounds represented by Chemical Formula 2-1 to 2-11), one or more of the liquid crystal compounds may include including both a cyclohexylene and a phenylene. Alternatively, one or more of the liquid crystal compounds may include one or more cyclohexylene, and one or more of the other liquid crystal compounds may include one or more phenylene.

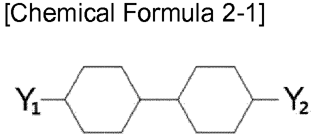

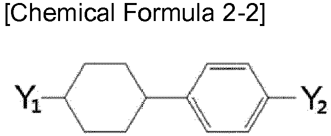

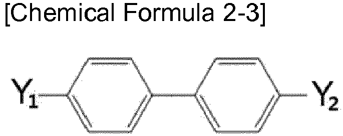

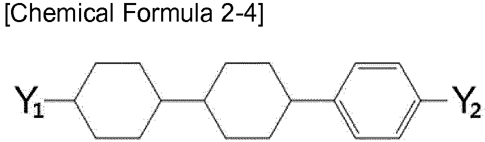

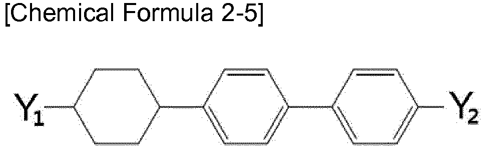

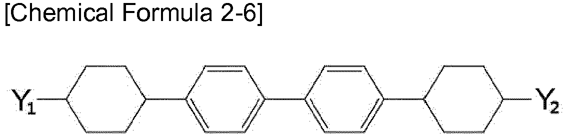

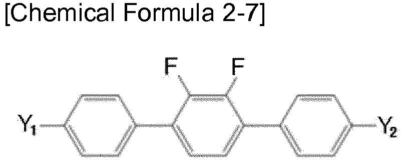

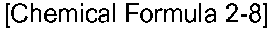

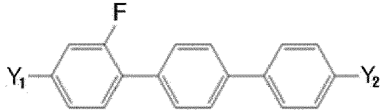

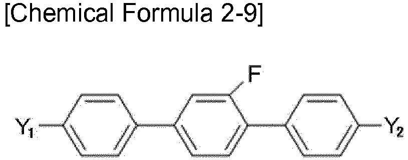

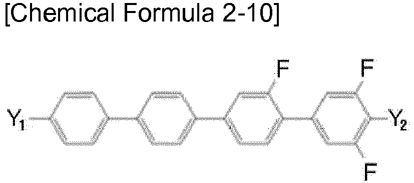

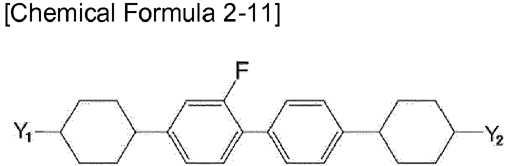

In Chemical Formula 2-1 to 2-11, Y₁ and Y₂ are the same as defined in Chemical Formula 2.

In an embodiment of the present invention, a liquid crystal compound of Chemical Formula 2-A may be included in an amount of from about 30 wt% to about 70 wt% with respect to the total weight of the liquid crystal composition. In an embodiment of the present invention, a liquid crystal compound of Chemical Formula 2-A may be included in an amount of from about 40 wt% to about 60 wt% with respect to the total weight of the liquid crystal composition. For example, a liquid crystal compound of Chemical Formula 2-A may be included in an amount of from about 45 wt% to about 60 wt% with respect to the total weight of the liquid crystal composition.

In an embodiment of the present invention, a liquid crystal compound of Chemical Formula 2 may include at least one of liquid crystal compounds represented by Chemical Formula 2-B.

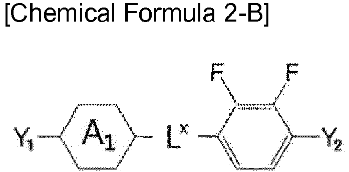

In Chemical Formula 2-B, Y₁, Y₂, A₁, L^{x} are the same as defined in Chemical Formula 2.

The liquid crystal compound of Chemical Formula 2-B may include at least one of liquid crystal compounds represented by Chemical Formulae 2-12 to 2-15.

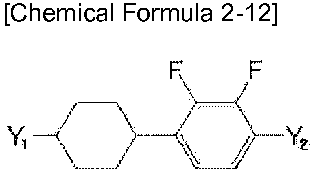

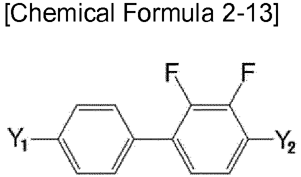

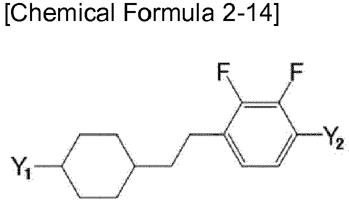

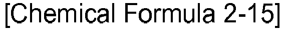

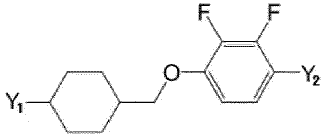

In Chemical Formulae 2-12 to 2-15, Y₁ and Y₂ are the same as defined in Chemical Formula 2.

In an embodiment of the present invention, a liquid crystal compound of Chemical Formula 2-B may be included in an amount of from about 1 wt% to about 30 wt% with respect to the total weight of the liquid crystal composition.

In an embodiment of the present invention, a liquid crystal compound of Chemical Formula 2-B may be included in an amount of from about 2 wt% to about 15 wt% with respect to the total weight of the liquid crystal composition. For example, a liquid crystal compound of Chemical Formula 2-B may be included in an amount of from about 3 wt% to about 14 wt% or from about 4 wt% to about 12 wt% with respect to the total weight of the liquid crystal composition.

In an embodiment of the present invention, a liquid crystal compound of Chemical Formula 2 may include at least one of liquid crystal compounds represented by Chemical Formula 2-C.

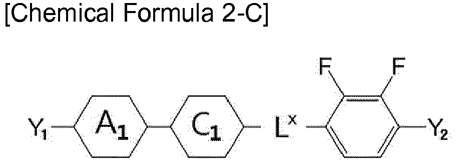

In Chemical Formula 2-C, Y₁, Y₂, A₁, C₁, L^{x} are the same as defined in Chemical Formula 2.

The liquid crystal compound of Chemical Formula 2-C may include at least one of liquid crystal compounds represented by Chemical Formulae 2-16 to 2-18.

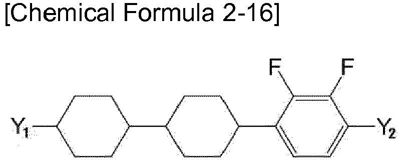

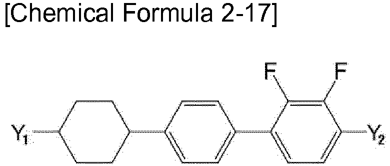

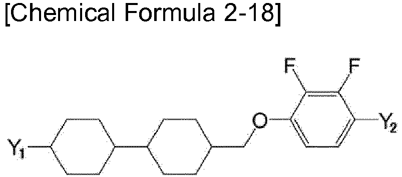

In Chemical Formulae 2-16 to 2-18, Y₁ and Y₂ are the same as defined in Chemical Formula 2.

In an embodiment of the present invention, a liquid crystal compound of Chemical Formula 2-C may be included in an amount of from about 1 wt% to about 40 wt% with respect to the total weight of the liquid crystal composition.

In an embodiment of the present invention, a liquid crystal compound of Chemical Formula 2-C may be included in an amount of from about 15 wt% to about 30 wt% with respect to the total weight of the liquid crystal composition. For example, a liquid crystal compound of Chemical Formula 2-C may be included in an amount of from about 20 wt% to about 30 wt%, or from about 20 wt% to about 25 wt% with respect to the total weight of the liquid crystal composition.

A liquid crystal composition according to an embodiment of the present invention includes at least one of liquid crystal compounds represented by Chemical Formula 2-A, and at least one of liquid crystal compounds represented by Chemical Formula 2-B.

A liquid crystal composition according to an embodiment of the present invention may further include at least one of liquid crystal compounds represented by Chemical Formula 2-C.

For example, a liquid crystal composition according to an embodiment of the present invention include at least one of liquid crystal compounds represented by Chemical Formulae 2-1 to 2-11 and at least one of liquid crystal compounds represented by Chemical Formulae 2-12 to 2-15, and may or may not include at least one of liquid crystal compounds represented by Chemical Formulae 2-16 to 2-18

A liquid crystal composition according to an embodiment of the present invention may have a negative dielectric anisotropy.

A portion of liquid crystal compounds may have a positive dielectric anisotropy, but a liquid crystal composition, which is a total sum of liquid crystal compounds, may have a negative dielectric anisotropy as a whole.

A liquid crystal composition according to an embodiment of the present invention may further include a monomer which is polymerized to form an alignment layer.

The monomer may be referred to as a photo-curable compound. The photo-curable compound may be formed by photo-crosslinking relatively low molecular weight or polymeric copolymers. The monomer may also be referred to as a reactive mesogen. The reactive mesogen may cause a chemical reaction when light having a specific wavelength, for example, ultraviolet light is applied thereto.

In an embodiment of the present invention, a monomer may be included in an amount of from about 0.01 wt% to about 5 wt% with respect to the total liquid crystal composition.

In an embodiment of the present invention, a monomer may be included in an amount of from about 0.1 wt% to about 1 wt% with respect to the total weight of the liquid crystal composition. In an embodiment of the present invention, a monomer may be included in an amount of from about 0.1 wt% to about 0.5 wt% with respect to the total weight of the liquid crystal composition.

The monomer may be represented by Chemical Formula 3.

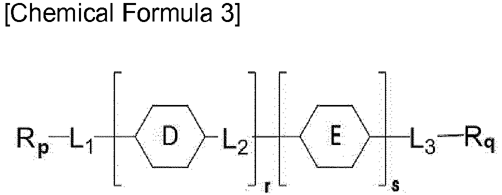

In Chemical Formula 3:
D and E are each independently cyclohexylene, phenylene, thiophenylene, benzothiophenylene, or polycyclic aromatic or aliphatic, -H of D and E may be independently substituted with (e.g. replaced by) -F, -Cl, -OCF₃, -CF₃, -CHF₂, -CH₂F, C₁-C₂ alkyl, or C₁-C₂ alkoxy,
Rₚ and R_{q} are each a reactive group which causes polymerization. The reactive groups Rₚ and R_{q} are each independently an C₁-C₁₂ acrylate group, a methacrylate group, an epoxy group, an oxetane group, a vinyl-ether group, or a styrene group,
L₁ to L₃ are each independently a single bond, C₁-C₅ alkylene, ether, carbonyl, or carboxyl. When L₁, L₂ or L₃ is C₁-C₅ alkylene or ether, each -CH₂- group is unsubstituted or is independently substituted with -CO-, -O-, -CO-O-, -O-CO- or -O-COO- in such a way that oxygen atoms of adjacent groups are not directly connected to each other, and each -H is unsubstituted or is independently substituted with -F, -Cl, - OCF₃, -CF₃, -CHF₂, or -CH₂ When L₁ and/or L₃ are C₁-C₅ alkylene or ether, one or more -CH₂- groups may be independently substituted with -CO-, -O-, -CO-O-, -O-CO- or -O-CO-O- in such a way that adjacent oxygen atoms are not directly connected to each other, and one or more -H groups of L₁ and/or L₃ may be independently substituted with -F, -Cl, -OCF₃, -CF₃, -CHF₂, or -CH₂F,
and r and s are each independently an integer selected from 0 to 2.

In an embodiment of the present invention, Rₚ and R_{q} may each be a reactive group which causes polymerization. The reactive groups may be a C₁-C₁₂ methacrylate group or a C₁-C₁₂ acrylate group. A monomer of Chemical Formula 3 may include a monomer represented by Chemical Formulae 3-1 to 3-31.

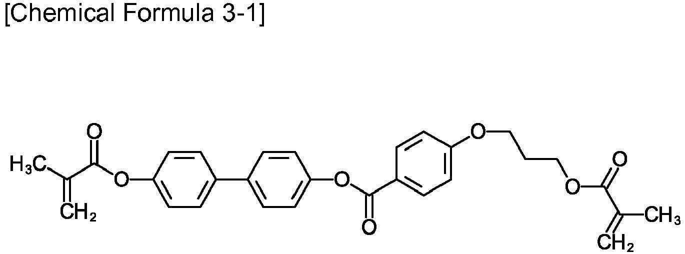

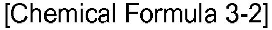

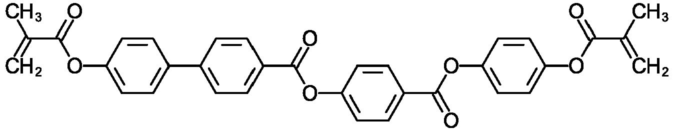

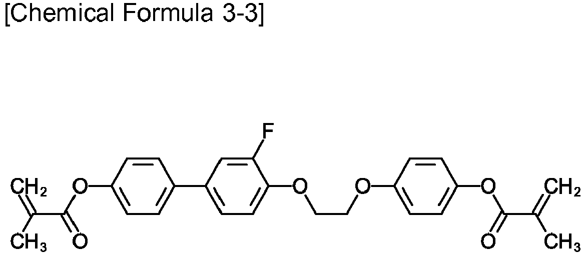

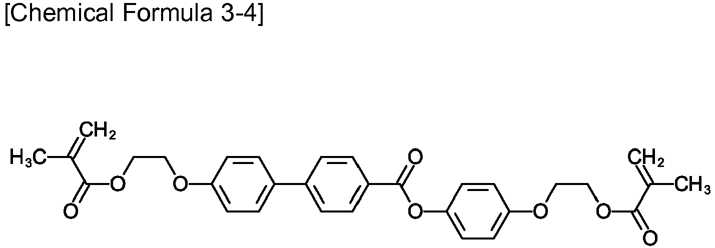

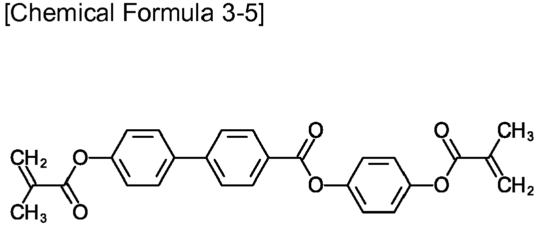

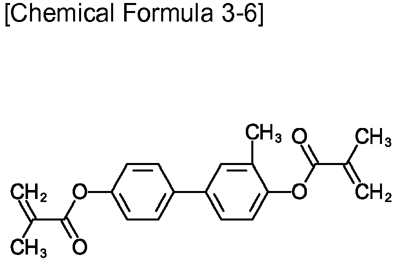

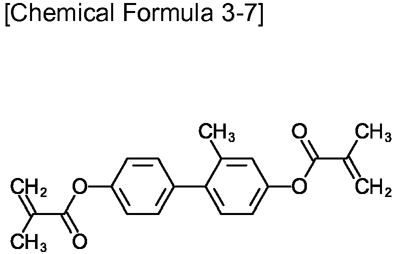

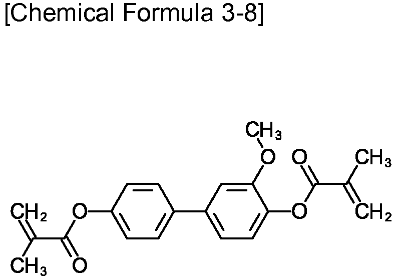

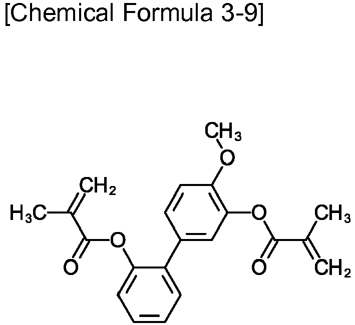

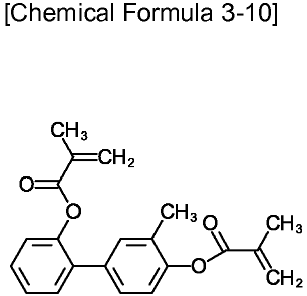

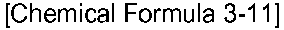

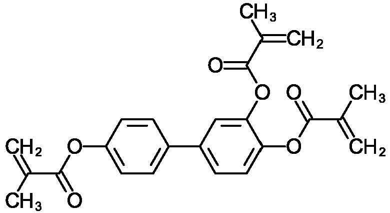

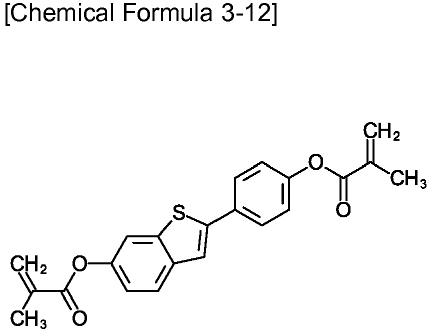

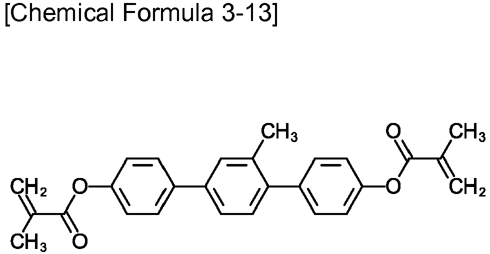

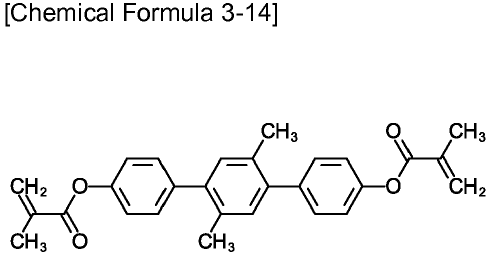

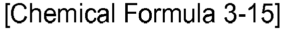

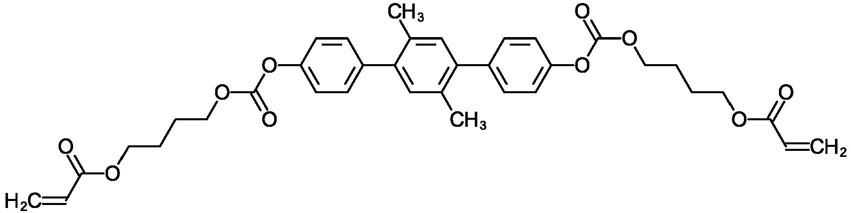

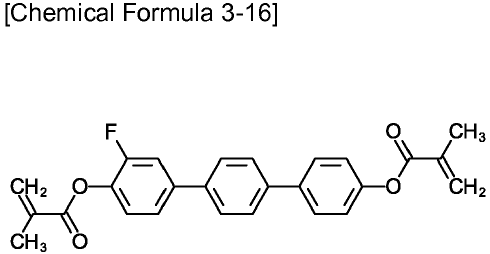

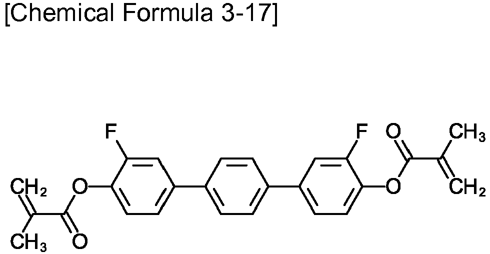

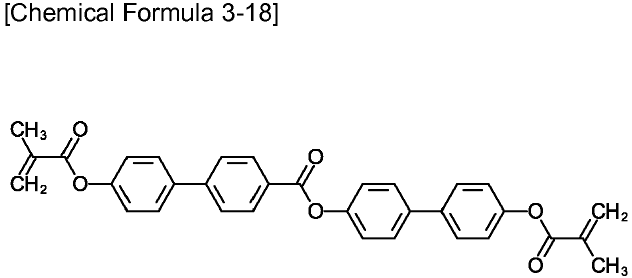

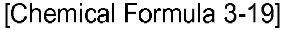

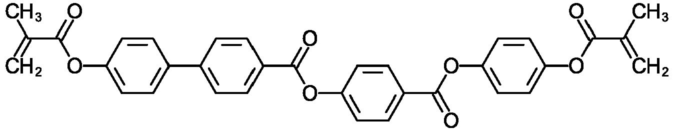

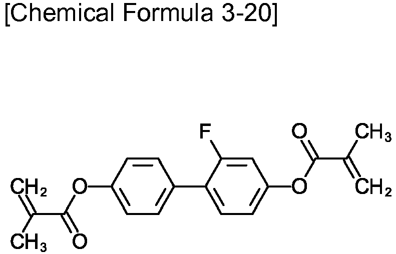

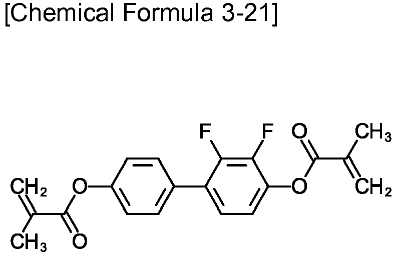

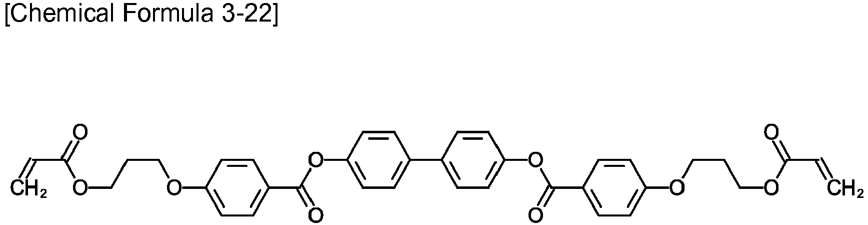

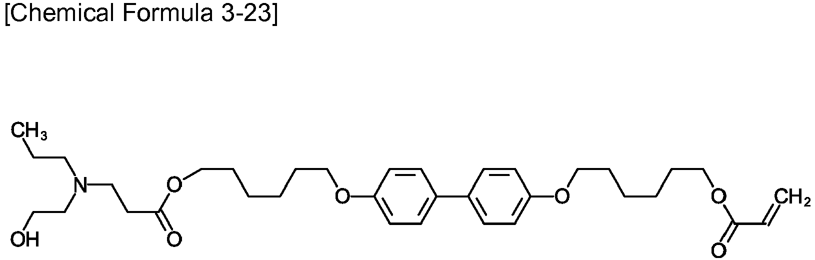

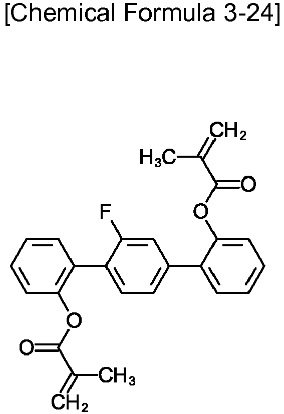

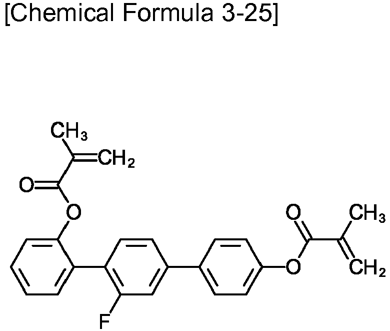

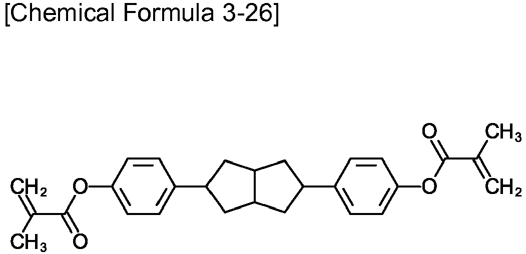

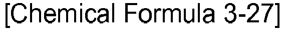

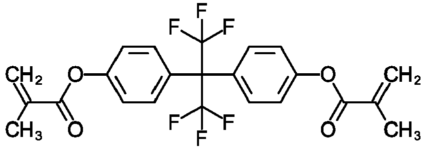

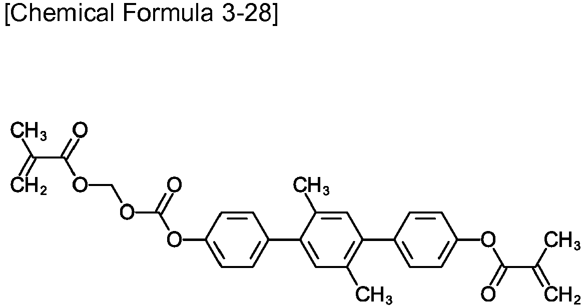

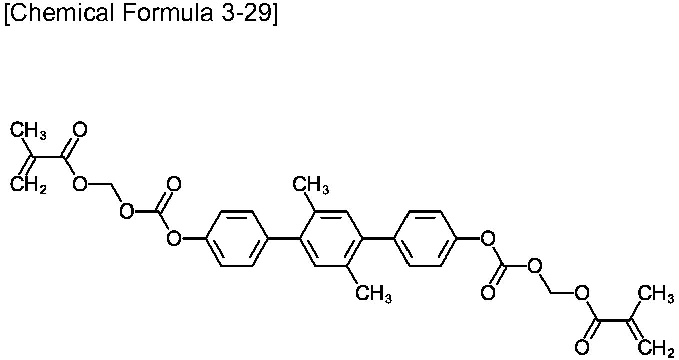

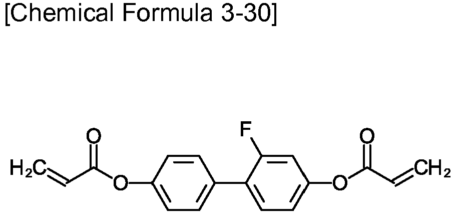

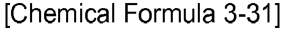

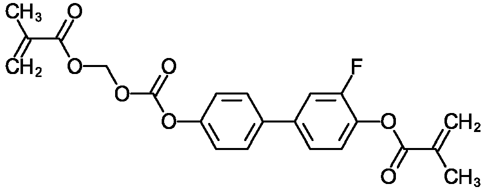

The monomer may be represented by Chemical Formulae 4-1 or 4-2.

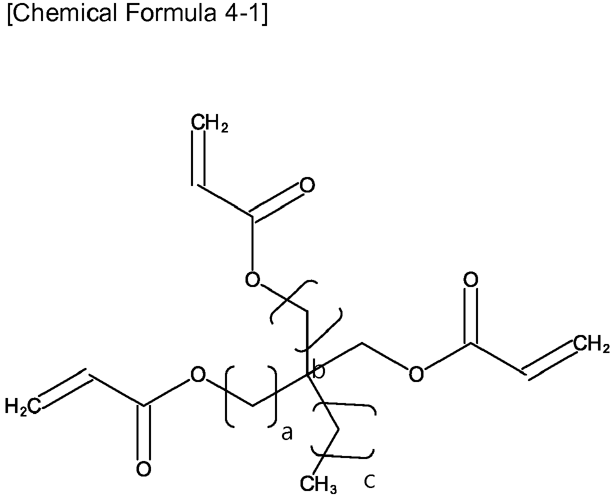

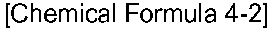

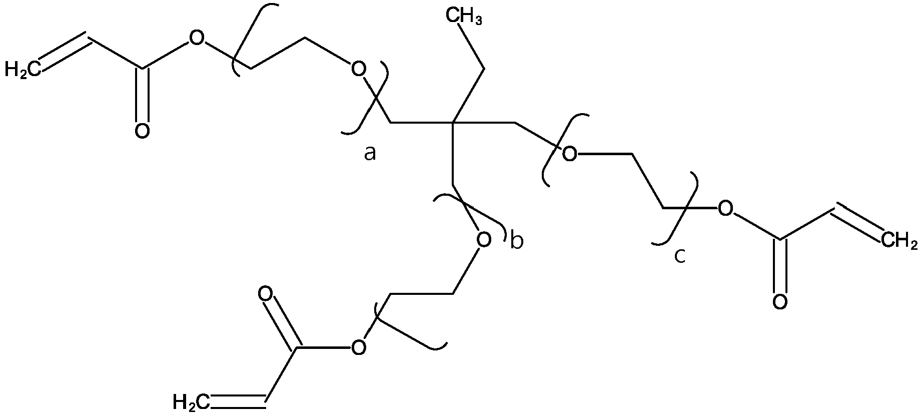

In Chemical Formulae 4-1 or 4-2, a, b and c may each independently be an integer selected from 0 to 3.

In an embodiment of the present invention, the liquid crystal composition may further include a photoinitiator for initiating a reaction between reactive mesogens.

The liquid crystal composition may further include various additives, and specifically, the liquid crystal composition may further include an antioxidant. In addition, the liquid crystal composition may further include a stabilizer. This stabilizer may include various materials, for example, a hindered amine light stabilizer (HALS).

The liquid crystal composition according to an embodiment of the present invention may be included in a liquid crystal display. The liquid crystal composition according to an embodiment of the present invention may be included in a liquid crystal display operating in one of various modes, e.g., a vertical aligned (VA) mode, a fringe field switching (FFS) mode, an in plane switching (IPS) mode, or a plane to light switching (PLS) mode. As an example, since the liquid crystal composition according to an embodiment of the present invention may have a relatively high negative dielectric anisotropy and a relatively high refractive anisotropy even at a relatively low rotational viscosity, the liquid crystal composition may be included in a liquid crystal display operating in a vertical aligned mode using a negative liquid crystal material, e.g., a multi-domain vertical aligned (MVA) mode, a patterned vertical aligned (PVA), or a polymer stabilized vertical aligned (PS-VA) mode. A liquid crystal composition according to an embodiment of the present invention may have a relatively high refractive anisotropy and a relatively low rotational viscosity, and thus in the case where the liquid crystal composition is included in a liquid crystal display operating in the vertical aligned mode, the liquid crystal display may provide an image of a relatively high quality.

The liquid crystal composition according to an embodiment of the present invention may be included in a liquid crystal layer of a liquid crystal display.

A liquid crystal composition according to an embodiment of the present invention included in a liquid crystal layer of a liquid crystal display will be described in more detail below with reference to the accompanying drawings.

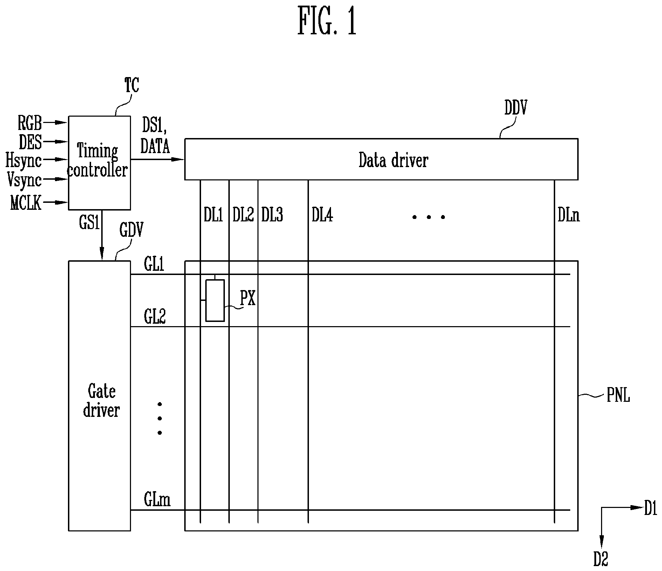

FIG.1 is a schematic block diagram of a liquid crystal display according to an embodiment of the present invention.

Referring to FIG.1, a liquid crystal display according to an embodiment of the present invention may include a display panel PNL, a timing controller TC, a gate driver GDV, and a data driver DDV.

The display panel PNL may be a liquid crystal panel including a first substrate, a second substrate, and a liquid crystal layer positioned between the first and second substrates.

The display panel PNL may include a plurality of gate lines GL1-GLm extending in a first direction D1 (e.g., in a row direction), and a plurality of data lines DL1-DLn extending in a second direction D2 (e.g., in a column direction) perpendicular to the first direction D1. The display panel PNL may include a plurality of pixels PX. The plurality of pixels PX may be arranged in the first direction D1 and the second direction D2.

The timing controller TC may receive image data RGB and a control signal from an external graphic controller. The control signal may include a vertical synchronization signal Vsync as a frame distinguishing signal, a horizontal synchronization signal Hsync as a row distinguishing signal, a data enable signal DES at a high level only for a period during which data is output to indicate an area where data is input, and a main clock signal MCLK.

The timing controller TC may convert the image data RGB according to specifications of the data driver DDV and may output a converted image data DATA to the data driver DDV. The timing controller TC may generate a gate control signal GS1 and a data control signal DS1 based on the control signal. The timing controller TC may output the gate control signal GS1 to the gate driver GDV and may output the data control signal DS1 to the data driver DDV. The gate control signal GS1 may be a signal for driving the gate driver GDV, and the data control signal DS1 may be a signal for driving the data driver DDV.

The gate driver GDV may generate a gate signal based on the gate control signal GS1, and may output the gate signal to the gate lines GL1 -GLm. The gate control signal GS1 may include a scan start signal indicating a start of scanning, at least one clock signal for controlling an output period of a gate-on voltage, and an output enable signal for confining duration of the gate-on voltage.

The data driver DDV may generate a gray voltage according to the image data DATA base on the data control signal DS1, and may output the gray voltage to the data lines DL1-DLn as a data voltage. The data voltage may include a positive data voltage having a positive value with respect to the common voltage and a negative data voltage having a negative value with respect to the common voltage. The data control signal DS1 may include a horizontal start signal indicating a start of transmission of the image data DATA to the data driver DDV, a load signal for applying a data voltage to the data lines DL1 to DLn, and an inversion signal for inverting a polarity of the data voltage with respect to the common voltage.

Each of the timing controller TC, the gate driver GDV, and the data driver DDV may be disposed on the display panel PNL in a form of at least one integrated circuit chip, disposed on a flexible printed circuit board to be attached to the display panel PNL in a form of a tape carrier package (TCP), or disposed on a separate printed circuit board. Alternatively, at least one of the gate driver GDV and the data driver DDV may be integrated on the display panel PNL together with the gate lines GL1-GLm, the data lines DL1-DLn, and the transistor. In addition, the timing controller TC, the gate driver GDV, and the data driver DDV may be integrated in a single chip.

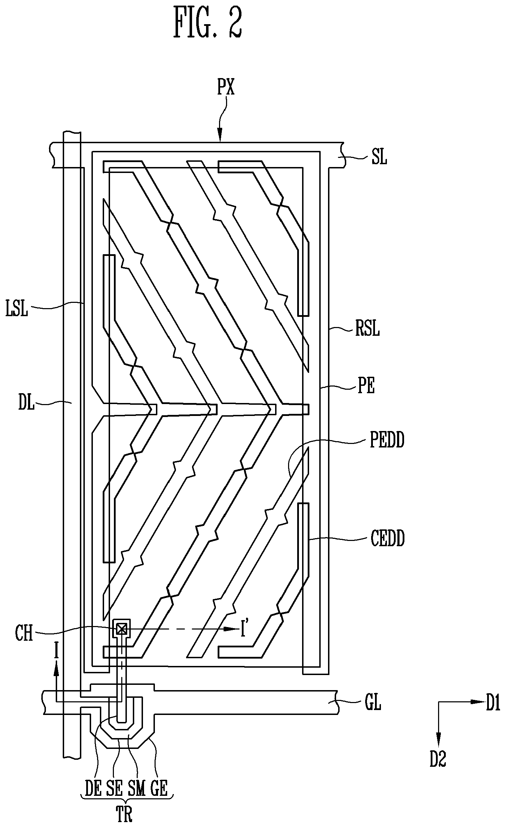

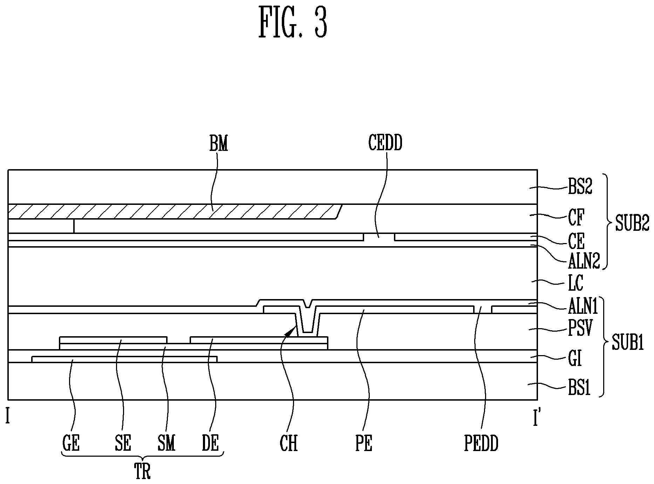

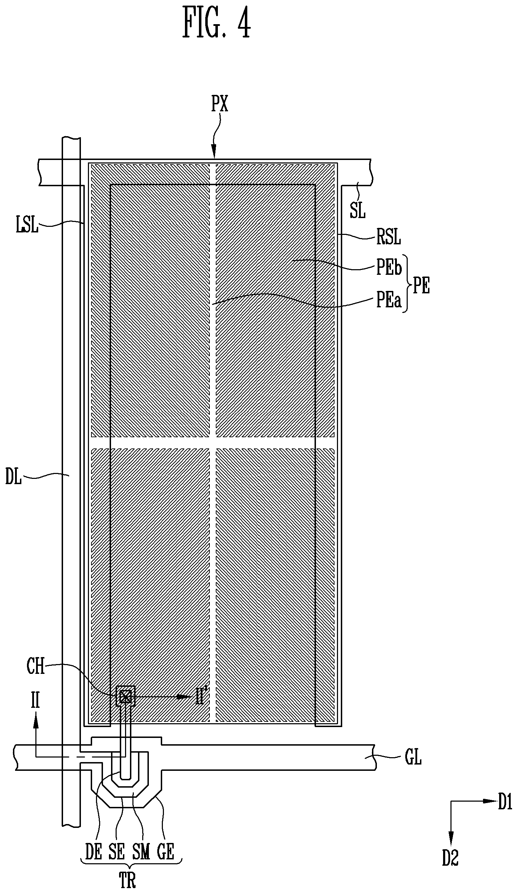

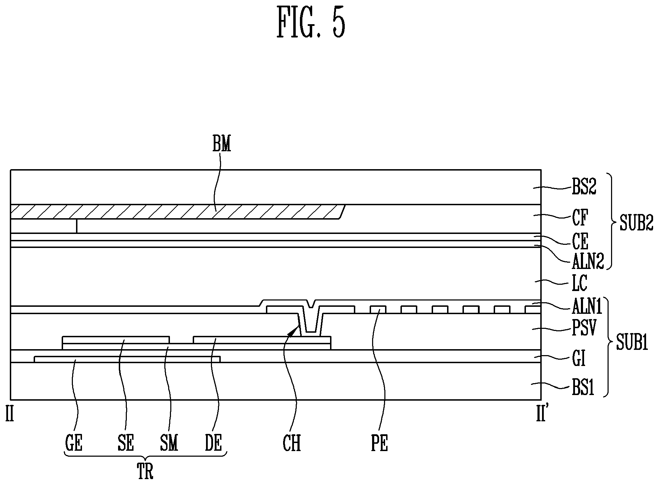

FIG.2 is a plan view of a liquid crystal display according to an embodiment of the present invention. FIG.3 is a cross-sectional view of a liquid crystal display taken along line I-I' of FIG.2. FIG.4 is a plan view of a liquid crystal display according to an embodiment of the present invention. FIG.5 is a cross-sectional view of a liquid crystal display taken along line II-II' of FIG.4.

Referring to FIGS.2 to 4, the liquid crystal display may include a first substrate SUB1, a second substrate SUB2 facing the first substrate SUB1, and a liquid crystal layer LC disposed between the first substrate SUB1 and the second substrate SUB2.

The first substrate SUB1 may include a first base substrate BS1, a plurality of gate lines GL, a plurality of data lines DL, a plurality of pixels PX, and a first alignment layer ALN1.

The first substrate SUB1 may include a plurality of pixel areas arranged in a matrix, and a plurality of pixels PX positioned in each of the plurality of pixel areas. Each pixel PX may be connected to a corresponding one of the data lines and a corresponding one of the gate lines. A gate line to which one pixel PX is connected may be referred to as a gate line GL, and a data line to which the one pixel PX is connected may be referred to as a data line DL.

The gate line GL may be positioned on the first base substrate BS1 in the first direction D1. A gate insulating layer GI may be positioned between the data line DL and the gate line GL. The data line DL may extend in the second direction D2 perpendicular to the first direction D1. The gate insulating layer GI may be formed on substantially an entire surface of the first base substrate BS1, and may substantially cover the gate line GL.

Each pixel PX may be connected to a corresponding one of the gate lines GL, and a corresponding one of the data lines DL.

The pixel PX includes a thin film transistor TR, a pixel electrode PE connected to the thin film transistor TR, and a storage electrode.

The thin film transistor TR may include a gate electrode GE, a semiconductor pattern SM, a source electrode SE, and a drain electrode DE.

The gate electrode GE may protrude from the gate line GL, or may be positioned on one portion of the gate line GL.

The gate electrode GE may include a metal. The gate electrode GE may include nickel, chromium, molybdenum, aluminium, titanium, copper, tungsten, or an alloy thereof. The gate electrode GE may have a single layer structure or a multilayer structure formed by using the metal. For example, the gate electrode GE may be a triple layer in which molybdenum, aluminium, and molybdenum are sequentially stacked, or a double layer in which titanium and copper are sequentially stacked. Alternatively, the gate electrode GE may be may be a single layer including an alloy of titanium and copper.

The gate insulating layer GI may be disposed on the gate electrode GE.

The semiconductor pattern SM may be disposed on the gate insulating layer GI. The semiconductor layer SM may be positioned above the gate electrode GE while the gate insulating layer GI may be disposed between the semiconductor layer SM and the gate electrode GE. The semiconductor pattern SM may partially overlap the gate electrode GE along a direction orthogonal to an upper surface of the first base substrate BS1. The semiconductor pattern SM may be a doped or undoped silicon layer. The silicon layer may be amorphous or crystalline. The semiconductor pattern SM may be amorphous or crystalline oxide semiconductor layer.

The source electrode SE may branch from the data line DL. The source electrode SE may include an ohmic contact layer, and may partially overlap the gate electrode GE along the direction orthogonal to the upper surface of the first base substrate BS1.

The drain electrode DE may be spaced apart from the source electrode SE while the semiconductor pattern SM is positioned between the drain electrode DE and the source electrode SE along the direction orthogonal to the upper surface of the first base substrate BS1. The drain electrode DE may be formed on the ohmic contact layer, and may partially overlap the gate electrode GE.

The source electrode SE and the drain electrode DE may each include nickel, chromium, molybdenum, aluminium, titanium, copper, tungsten, or an alloy thereof. The source electrode SE and the drain electrode DE may each have a single layer structure or a multilayer structure including the metal. For example, the source electrode SE and the drain electrode DE may be a double layer in which titanium and copper are sequentially stacked. Alternatively, the source electrode SE and the drain electrode DE may be a single layer made of an alloy of titanium and copper.

As the source electrode SE and the drain electrode DE are spaced apart from each other, an upper surface of the semiconductor pattern SM between the source electrode SE and the drain electrode DE may be exposed along the direction orthogonal to the upper surface of the first base substrate BS1.

The semiconductor pattern SM between the source electrode SE and the drain electrode DE may form a conductive channel between the source electrode SE and the drain electrode DE depending on whether a voltage is applied to the gate electrode GE.

The storage electrode may include a storage line SL extending in the first direction D1, and a first branch electrode LSL and a second branch electrode RSL branched from the storage line SL and extending in the second direction D2.

The pixel electrode PE may be connected to the drain electrode DE while a passivation layer PSV is disposed between the pixel electrode PE and the drain electrode DE. The pixel electrode PE may partially overlap the storage line SL, the first branch electrode LSL, and the second branch electrode RSL along the direction orthogonal to the upper surface of the first base substrate BS1. The pixel electrode PE may partially overlap the storage line SL, the first branch electrode LSL, and the second branch electrode RSL to form a storage capacitor.

The passivation layer PSV may substantially cover the source electrode SE, the drain electrode DE, the channel, and the gate insulating layer GI, and may include a contact hole CH exposing a portion of the drain electrode DE. For example, the passivation layer PSV may include silicon nitride or silicon oxide. In an embodiment of the present invention, the passivation layer PSV may have a single layer structure; however, embodiments of the present invention are not limited thereto. An insulating layer such as the passivation layer PSV may have a multilayer structure.

The pixel electrode PE may be connected to the drain electrode DE through the contact hole CH formed in the passivation layer PSV. The pixel electrode PE may include a first domain divider PEDD which divides the pixel PX into a plurality of domains. The first domain divider PEDD may be a cutout or a protrusion formed by patterning the pixel electrode PE. The cutout may be an aperture or a slit formed by removing one portion of the pixel electrode PE. The first domain divider PEDD may include a horizontal portion extending in parallel with the first direction D1 or the second direction D2 so as to bisect a longitudinal direction area of the pixel PX, and an oblique portion slanted with respect to the first direction D1 or the second direction D2. The oblique portion may be substantially axisymmetric (e.g., longer) with respect to the horizontal portion.

The pixel electrode PE may include a transparent conductive material. For example, the pixel electrode PE may include a transparent conductive oxide. The transparent conductive oxide may include indium tin oxide (ITO), indium zinc oxide (IZO), indium tin zinc oxide (ITZO), or the like.

The first alignment layer ALN1 may be disposed on the pixel electrode PE. The first alignment layer ALN1 may align liquid crystal molecules of a liquid crystal layer LC. The first alignment layer ALN1 may include a polymer polymerized with a monomer represented by Chemical Formula 3.

The second substrate SUB2 may include a second base substrate BS2, a color filter CF, a black matrix BM, an electrode unit CE, and a second alignment layer ALN2. The electrode unit CE disclosed in this example can function as a common electrode. However, according to other examples of present invention, an electrode unit CE can be a common electrode and/or a pixel electrode. Herein after in this embodiment the electrode unit CE can be described as common electrode or pixel electrode for the purpose of clear explanation.

Color filter CF may be included in each pixel PX on the second base substrate BS2. Each color filter CF may display red, green, or blue. However, embodiments of the present invention are not limited thereto, and various colors such as white, yellow, cyan, magenta, for example, may be displayed.

The black matrix BM may be positioned between the color filters CF, or may substantially surround the color filter CF. The black matrix BM may block light between adjacent pixels PX.

In an embodiment of the present invention, the color filter CF and the black matrix BM may be positioned on the second substrate SUB2; however, a position of the color filter CF and/or the black matrix BM is not limited thereto. In an embodiment of the present invention, the color filter CF and the black matrix BM may be positioned on the first substrate SUB1.

The common electrode CE may be formed on the color filter CF and the black matrix BM, and may drive the liquid crystal layer LC by forming an electric field together with the pixel electrode PE. The common electrode CE may include a transparent conductive material. For example, the common electrode CE may include conductive metal oxide such as indium tin oxide (ITO), indium zinc oxide (IZO), or indium tin zinc oxide (ITZO).

The common electrode CE may include a second domain divider CEDD which divides the pixel PX into a plurality of domains. The second domain divider CEDD may be a cutout or a protrusion formed by patterning the common electrode CE. The cutout may be an aperture formed by removing one portion of the common electrode CE. The second domain divider CEDD may include a horizontal portion and/or a vertical portion extending in parallel in the first direction D1 or the second direction D2 so as to bisect a longitudinal direction area of the pixel PX, and an oblique portion slanted with respect to the first direction D1 or the second direction D2. The oblique portion may be substantially axisymmetric (e.g., longer) with respect to the horizontal portion.

The horizontal portion of the first domain divider PEDD and the horizontal portion of the second domain divider CEDD may be disposed on substantially a same line (e.g., along the first direction D1). The oblique portion of the first domain divider PEDD and the oblique portion of the second domain divider CEDD may be arranged substantially in parallel with each other along a same direction. The oblique portion of the first domain divider PEDD and the oblique portion of the second domain divider CEDD may be alternatingly arranged.

The second alignment layer ALN2 may be disposed on the common electrode CE. The second alignment layer ALN2 may align liquid crystal molecules of the liquid crystal layer LC. The second alignment layer ALN2 may include a polymer polymerized with a monomer represented by Chemical Formula 3.

The liquid crystal layer LC including a liquid crystal composition may be positioned between the first substrate SUB1 and the second substrate SUB2. As an example, the liquid crystal layer LC may include a liquid crystal composition according to an embodiment of the present invention described herein.

In the liquid crystal display, when a gate signal is applied to the gate line GL, the thin film transistor may be turned on. Thus, the data signal applied to the data line DL may be applied to the pixel electrode PE through the thin film transistor. When the thin film transistor is turned on and the data signal is applied to the pixel electrode PE, an electric field may be formed between the pixel electrode PE and the common electrode CE. The liquid crystal molecules may be driven by the electric field generated by a difference between voltages respectively applied to the common electrode CE and the pixel electrode PE. Thus, the amount of light passed through the liquid crystal layer LC may be controlled to display an image.

Referring to FIGS. 4 and 5, a liquid crystal display according to an embodiment of the present invention will be described in more detail below. Descriptions with reference to FIGS. 4 and 5 that are the same as those above with reference to FIGS. 1 to 3 may be omitted.

Referring to FIGS.4 and 5, a liquid crystal display according to an embodiment of the present invention may include the first substrate SUB1, the second substrate SUB2 facing the first substrate SUB1, and the liquid crystal layer LC positioned between the first substrate SUB1 and the second substrate SUB2.

The pixel PX may include the thin film transistor TR, the pixel electrode PE connected to the thin film transistor TR, and a storage electrode.

The pixel electrode PE may have a shape different from that of an embodiment of the present invention described above. The pixel electrode PE may include a stem PEa and a plurality of branches PEb extending radially from the stem Pea. The branches PEb may be adjacent to each other with a slit therebetween. Portions of the stem PEa or the branches PEb may be connected to the drain electrode DE through the contact hole CH.

The stem PEa may have various shapes. For example, the stem PEa may have a cross shape. The pixel PX may be divided into a plurality of domains by the stem Pea having the cross shape, and the branches PEb may respectively correspond to the domains and may respectively extend in different directions in the domains. Referring to FIG. 4, a case where the pixel has four domains is shown as an example. The plurality of branches PEb may be spaced apart from each other and thus the plurality of respective branches PEb might not be in contact with an adjacent branch PEb. As an example, each plurality of respective branches may extend in parallel in one respective region formed by the stem PEa (e.g., the stem Pea having the cross shape). Slits between adjacent branches PEb may be spaced apart from each other by a distance of micrometers. Each slit may be used for aligning the liquid crystal molecules of the liquid crystal layer LC at a predetermined angle by being arranged on a plane substantially parallel to an upper surface of the base substrate (e.g., base substrate BS1).

The second substrate SUB2 may include the second base substrate BS2, and the color filter CF, the black matrix BM, the common electrode CE, and the second alignment layer ALN2 positioned on the second base substrate BS2. The common electrode CE need not have a separate domain divider, and thus the common electrode CE may be formed of a single plate.

According to an embodiment of the present invention, two gate lines and one data line may be connected to one pixel, or one gate line and two data lines may be connected to one pixel. Alternatively, one pixel may have two sub-pixels to which two different voltages are applied. In this case, a relatively high voltage may be applied to one sub-pixel and a relatively low voltage may be applied to the other sub-pixel. According to an embodiment of the present invention, elements in the pixel, for example, a gate electrode, a source electrode, a drain electrode, and the like, may be arranged differently than as illustrated in FIGS. 1 to 5, as desired.

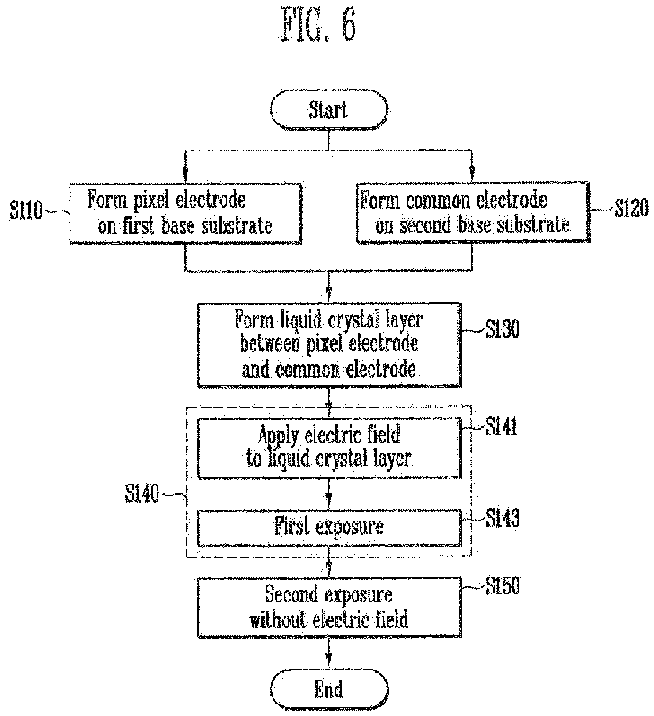

FIG.6 is a flowchart showing a manufacturing method of a liquid crystal display according to an embodiment of the present invention.

Referring to FIG.6, in a manufacturing method of a liquid crystal display according to an embodiment of the present invention, a pixel electrode. is formed on a first base substrate (S110), and a common electrode is formed on a second base substrate (S120). Next, a liquid crystal layer is formed between the pixel electrode and the common electrode (S130). The liquid crystal layer includes reactive mesogens. Next, a first exposure (S143) is performed on the liquid crystal layer at substantially a same time that an electric field is applied to the liquid crystal layer (S141) to form an alignment layer (S140). After the electric field is removed, a second exposure is performed without an electric field (S150) on the liquid crystal layer. The method of manufacturing the liquid crystal display will be described in more detail below.

A gate pattern may be formed on the first base substrate BS1. The gate pattern may include the gate line GL and a storage electrode. The gate pattern may be formed by a photolithography process. The gate insulating layer GI may be formed on the gate pattern. The semiconductor layer SM may be formed on the gate insulating layer GI. The semiconductor layer SM may include an active pattern and an ohmic contact layer on the active pattern. The semiconductor layer SM may be formed by a photolithography process. A data pattern may be formed on the semiconductor layer SM. The data pattern may include the data line DL, the source electrode SE, and the drain electrode DE. The data pattern may be formed by a photolithography process. In this case, the semiconductor layer SM and the data pattern may be formed by using a half mask, or a diffraction mask. The passivation layer PSV may be formed on the data pattern. The passivation layer PSV may include the contact hole CH exposing a portion of the drain electrode DE, and may be formed by a photolithography process. The pixel electrode PE, connected to the drain electrode DE through the contact hole CH, may be formed on the passivation layer PSV. The pixel electrode PE may be formed by a photolithography process.

The second substrate SUB2 may be manufactured separately from the first substrate SUB1.

The second base substrate BS2 may be prepared, and the color filter CF displaying color may be formed on the second base substrate BS2. The common electrode CE may be formed on the color filter CF. Each of the color filter CF and the common electrode CE may be formed by using various methods, and may be formed by a photolithography process. The first substrate SUB1 and the second substrate SUB2 may face each other, and the liquid crystal layer LC may be formed between the first substrate SUB1 and the second substrate SUB2 by using the liquid crystal composition described herein. The liquid crystal layer LC may have a negative dielectric anisotropy, but embodiments of the present invention are not limited thereto. The liquid crystal molecules of the liquid crystal layer LC may have a positive dielectric anisotropy.

An electric field may be applied to the liquid crystal composition. The electric field may be formed by applying different voltages to the pixel electrode PE and the common electrode CE, respectively. A first exposure may be performed by irradiating light, for example, ultraviolet light onto the liquid crystal layer LC in the state in which the electric field is applied to the liquid crystal composition.

When the liquid crystal layer LC is irradiated by a first light, the first alignment layer and the second alignment layer ALN1 and ALN2 may be respectively formed on an upper surface of the first substrate SUB1 and an upper surface of the second substrate SUB2. For example, in a case where the electric field is applied to the liquid crystal molecules of the liquid crystal layer LC, the reactive mesogens (RM) may be aligned in substantially the same direction as the liquid crystal molecules of the liquid crystal layer LC around the reactive mesogens (RM). When light is irradiated to the liquid crystal layer LC, polymerization of the reactive mesogens (RM) may occur through a chain reaction. Thus, the reactive mesogens (RM) may polymerize with each other in response to the light to form a network between the reactive mesogens (RM). A first reactive mesogen (RM) may combine with an adjacent second reactive mesogen (RM) to form a side chain. Thus, since the reactive mesogens (RM) may form the network in a state where the liquid crystal molecules of the liquid crystal layer LC are aligned, the reactive mesogen (RM) have a specific orientation in an average alignment direction of the liquid crystal molecules of the liquid crystal layer LC. Thus, even when the electric field is removed, liquid crystal molecules of the liquid crystal layer LC adjacent to the network may have a pretilt angle.

Next, light may be irradiated in a state where the electric field is removed to perform a second exposure.

The light irradiated while the electric field is removed may have a shorter wavelength than light irradiated while the electric field is applied.

A liquid crystal display, which includes the liquid crystal layer LC, the first alignment layer ALN1, and the second alignment layer ALN2 according to an embodiment of the present invention, may be manufactured by the method described above.

### [Example]

### 1. Physical properties of liquid crystal composition

### (1) Comparative Example 1

Example physical properties of a liquid crystal composition according to Comparative Example 1 are shown in Table 1. R and R' are each independently -H or C₁-C₅ alkyl at a provided position.

**(Table 1)**

| Liquid crystal compound | Contents (wt%) |
|---|---|
| 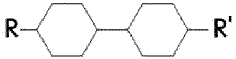 | 27 |
| 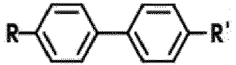 | 9 |
| 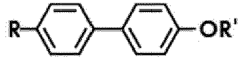 | 6 |
| 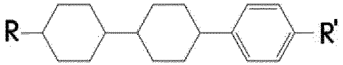 | 11 |
| 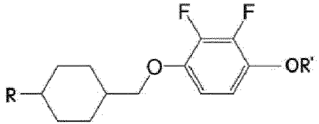 | 14 |
| 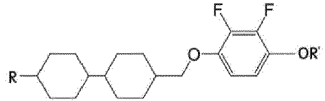 | 19 |
| 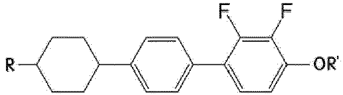 | 14 |
| Reactive mesogen | 0.3 |
| Δn | 0.102 |
| Δε | -2.9 |
| γ1 (mPa·s) | 128 |

### (2) Comparative Example 2

Example physical properties of a liquid crystal composition according to Comparative Example 2 are shown in Table 2. R and R' are each independently -H or C₁-C₅ alkyl at a provided position.

**(Table 2)**

| Liquid crystal compound | Contents (wt%) |
|---|---|
| 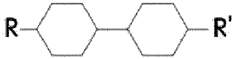 | 25.5 |
| 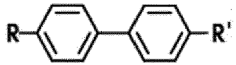 | 12.7 |
| 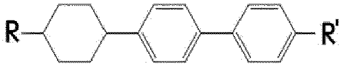 | 10.5 |
| 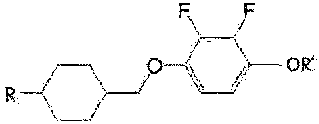 | 12.5 |
| 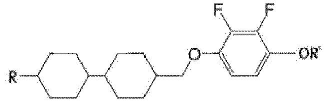 | 16.8 |
| 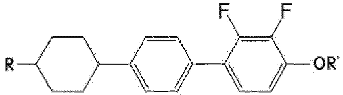 | 22 |
| Reactive mesogen | 0.3 |
| Δn | 0.112 |
| Δε | -3.2 |
| γ1 (mPa·s) | 126 |

### (3) Example 1

Example physical properties of a liquid crystal composition according to Example 1 are shown in Table 3. In the following liquid crystal composition, reactive mesogens may be added in an amount of about 0.3 wt% with respect to 100 wt% of the total liquid crystal composition. R and R' are each independently-H or C₁-C₅ alkyl at a provided position.

**(Table 3)**

| Liquid crystal compound | Contents (wt%) |
|---|---|
| 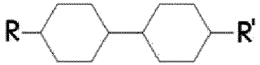 | 28.5 |
| 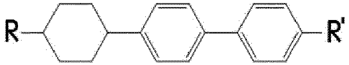 | 16.0 |
| 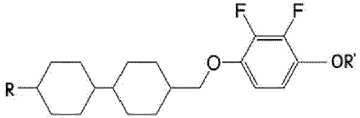 | 3.0 |
| 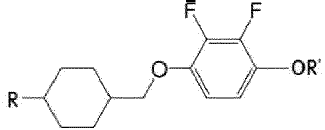 | 4.0 |
| 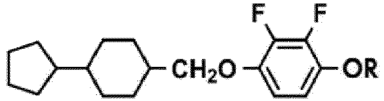 | 9.0 |
| 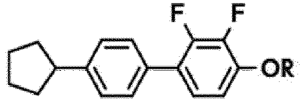 | 8.0 |
| 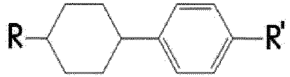 | 8.5 |
| 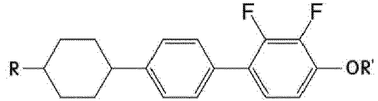 | 22.0 |
| 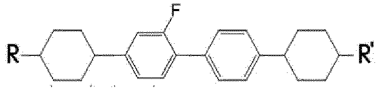 | 1.0 |
| Reactive mesogen | 0.3 |
| Δn | 0.110 |
| Δε | -3.5 |
| γ1 (mPa·s) | 143 |

### (4) Example 2

Example physical properties of a liquid crystal composition according to Example 2 are shown in Table 4. In the following liquid crystal composition, reactive mesogens may be added in an amount of about 0.3 wt% with respect to 100 wt% of the total liquid crystal composition. R and R' are each independently -H or C₁-C₅ alkyl at a provided position.

**(Table 4)**

| Liquid crystal compound | Contents (wt%) |
|---|---|
| 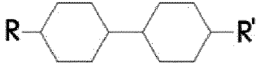 | 26.5 |
| 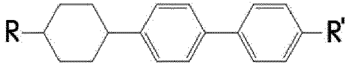 | 16.0 |
| 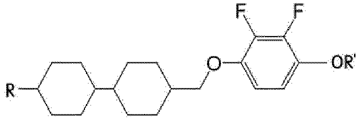 | 1.0 |
| 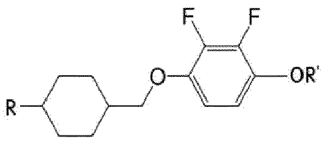 | 7.0 |
| 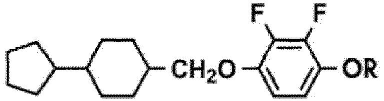 | 15.0 |
| 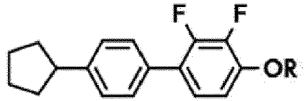 | 5.0 |
| 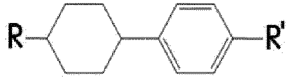 | 6.5 |
| 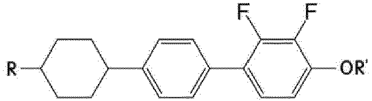 | 23.0 |
| Reactive mesogen | 0.3 |
| Δn | 0.110 |
| Δε | -3.6 |
| γ1 (mPa·s) | 135 |

### (5) Example 3

Example physical properties of a liquid crystal composition according to Example 3 are shown in Table 5. In the following liquid crystal composition, reactive mesogens may be added in an amount of about 0.3 wt% with respect to 100 wt% of the total liquid crystal composition. R and R' are each independently -H or C₁-C₅ alkyl at a provided position.

**(Table 5)**

| Liquid crystal compound | Contents (wt%) |
|---|---|
| 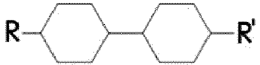 | 26.0 |
| 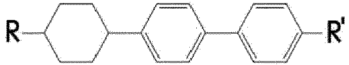 | 16.0 |
| 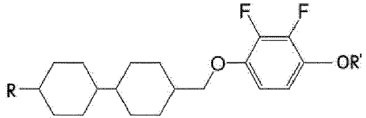 | 22.0 |
| 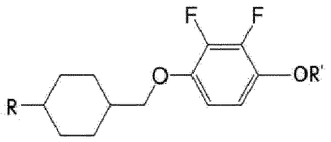 | 9.5 |
| 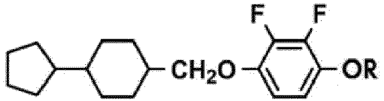 | 7.5 |
| 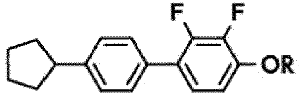 | 3.0 |
| 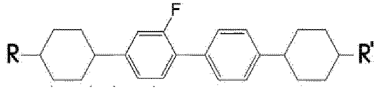 | 2.0 |
| 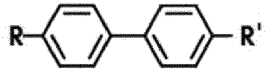 | 14.0 |
| Reactive mesogen | 0.3 |
| Δn | 0.108 |
| Δε | -3.5 |
| γ1 (mPa·s) | 133 |

### (6) Example 4

Example physical properties of a liquid crystal composition according to Example 4 are shown in Table 6. In the following liquid crystal composition, reactive mesogens may be added in an amount of about 0.3 wt% with respect to 100 wt% of the total liquid crystal composition. R and R' are each independently-H or C₁-C₅ alkyl at a provided position.

**(Table 6)**

| Liquid crystal compound | Contents (wt%) |
|---|---|
| 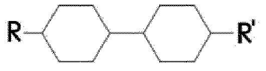 | 26.5 |
| 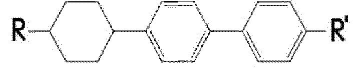 | 14.5 |
| 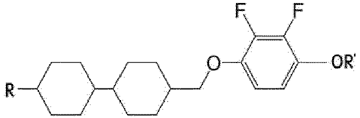 | 25.0 |
| 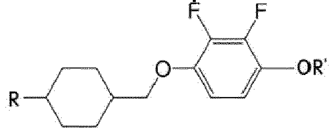 | 6.0 |
| 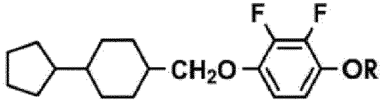 | 3.5 |
| 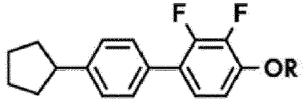 | 6.5 |
| 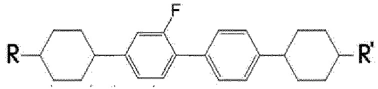 | 2.0 |
| 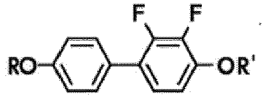 | 6.0 |
| 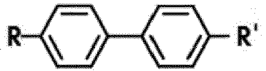 | 10.0 |
| Reactive mesogen | 0.3 |
| Δn | 0.109 |
| Δε | -3.6 |
| γ1 (mPa·s) | 140 |

The liquid crystal compositions of Examples 1 to 4 include a liquid crystal compound having a cyclopentyl group, but may have substantially the same refractive anisotropy, substantially the same dielectric anisotropy, and substantially the same rotational viscosity as Comparative Examples 1 and 2 which do not include the liquid crystal compound having a cyclopentyl group.

### 2. Evaluation of voltage holding ratio (VHR)

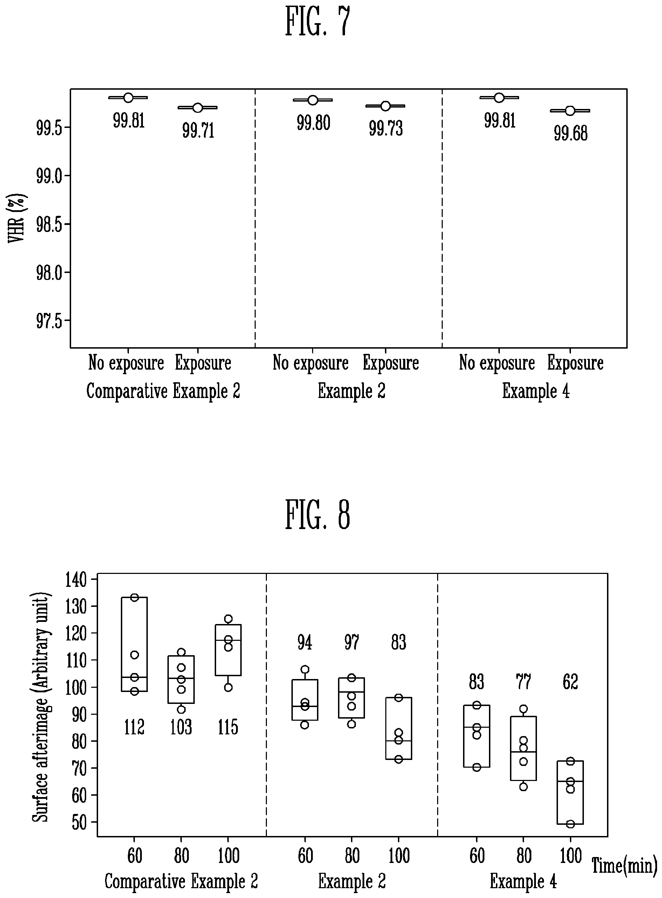

FIG.7 shows data of a voltage holding ratio of Comparative Example 2, Example 2, and Example 4. Referring to FIG.7, after two substrates having electrodes are positioned to face each other, a liquid crystal composition may be formed, and then, four-domain liquid crystal cell having a size of about 2.5 inches may be manufactured. A voltage holding ratio may be measured when a voltage of 1 V is applied at 60 Hz at 60°C before and after exposure. All the conditions of Comparative Example 2, Example 2, and Example 4 are the same, but liquid crystal compositions thereof are different from one another.

Referring to FIG.7, Comparative Example 2, Example 2, and Example 4 may respectively have voltage holding ratios of 99.81 %, 99.80 %, and 99.81 % before exposure, and may respectively have voltage holding ratios of 99.71 %, 99.73 %, and 99.68 % after exposure. Thus, it may be confirmed that the voltage holding ratio of Examples 2 and 4 using a liquid crystal composition having a cyclopentyl group may be substantially the same level as the voltage holding ratio of Comparative Example 2.

### 3. Evaluation of surface afterimage

FIG.8 shows data of a surface afterimage of Comparative Example 2, Example 2, and Example 4 described above. Referring to FIG.8, after two substrates having electrodes are positioned to face each other, a liquid crystal composition may be formed, and a first exposure may be performed through the same process as described above. Liquid crystal cells may be manufactured by respectively performing second exposures on Comparative Example 2, Example 2, and Example 4 for 60 minutes, 80 minutes, and 100 minutes, respectively. Next, the liquid crystal cell may be driven for 168 hours at 7V and 60Hz, and may be released for 1 hour, and then, a grayscale in which a surface afterimage is not visible may be confirmed.

Referring to FIG.8, Comparative Example 2 may have a surface afterimage at a grayscale of 100 or more as a whole, but Example 2 may have a surface afterimage at a grayscale between about 85 and about 95. Example 4 may have a surface afterimage at a grayscale between about 60 and about 85. Thus, it may be confirmed that the surface afterimage of Example 2 and 4 are significantly decreased compared with surface afterimage of Comparative Example 2.
While the present invention has been shown and described with reference to certain embodiments thereof, it will be understood by those skilled in the art that various changes in forms and details may be made therein without departing from the scope of the present invention.

## Claims

1. A liquid crystal display comprising:
a first base substrate;
a second base substrate facing the first base substrate;
an electrode unit disposed on at least one of the first base substrate and the second base substrate;
a liquid crystal layer positioned between the first base substrate and the second base substrate and comprising a liquid crystal composition; and
an alignment layer positioned between at least one of the first base substrate and the liquid crystal layer or between the second base substrate and the liquid crystal layer,
wherein the liquid crystal composition includes at least one of liquid crystal compound represented by Chemical Formula 1, at least one of liquid crystal compound represented by Chemical Formula 2-A and at least one of liquid crystal compound represented by Chemical Formula 2-B, and wherein the liquid crystal compound of Chemical Formula 2-A includes a liquid crystal compound having both a cyclohexylene and a phenylene 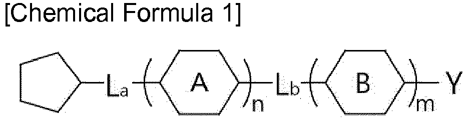 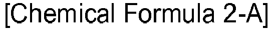 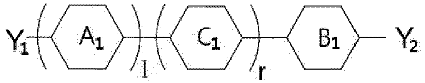 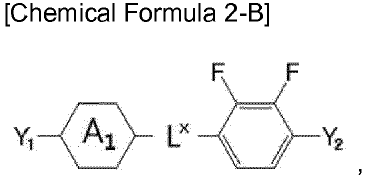
wherein A and B are independently 1,4-cyclohexylene or 1,4-phenylene, wherein each -H of A and B is unsubstituted or is independently substituted with -F, -CI, -OCF₃, -CF₃, -CHF₂, -CH₂F, C₁-C₂ alkyl, or C₁-C₂ alkoxy,
Y is -H, C₁-C₅ alkyl, or C₁-C₅ alkoxy,
wherein when Y is C₁-C₅ alkyl, or C₁-C₅ alkoxy, each -CH₂- group of Y is unsubstituted or is independently substituted with -C=C-, -CH=CH-, -CF₂O-, -O-, -CO-O-, -O-CO- or -O-CO-O- in such a way that oxygen atoms of adjacent groups are not directly connected to each other, and each hydrogen atom of Y is unsubstituted or is substituted with halogen,
n and m are independently an integer selected from 0 to 2,
Lₐ and L_{b} are independently a single bond, -C=C-, -COO-, -OCO-, -CF₂O-, - OCF₂-, -CH₂O-, -CO-, -O-, -(CH₂)₂-, or -CH=CH-,
Y₁ and Y₂ are independently -H, -F, -CI, or C₁-C₁₅ alkyl,
wherein when Y₁ and/or Y₂ is C₁-C₁₅ alkyl, each -CH₂- group is unsubstituted or is independently substituted with -C=C-, -CF₂O-, -CH=CH-, -CO-, -O-, -CO-O-, -O-CO- or -O-CO-O- in such a way that oxygen atoms of adjacent groups are not directly connected to each other, and each hydrogen atom of Y₁ and/or Y₂ is unsubstituted or is substituted with halogen,
A₁, B₁, and C₁ are independently 1,4-cyclohexylene or 1,4-phenylene, each -H of A₁, B₁, and C₁ is unsubstituted or is independently substituted with -F, -CI, -OCF₃, - CF₃, -CHF₂, -CH₂F, C₁-C₂ alkyl, or C₁-C₂ alkoxy,
I and r are independently an integer selected from 0 to 2,
and L^{x} is a single bond, -C=C-, -COO-, -OCO-, -CF₂O-, -OCF₂-, -CH₂O-, -CO-, - O-, - (CH₂)₂-, or -CH=CH-,
wherein the alignment layer includes a polymer polymerized with a monomer represented by Chemical Formula 3 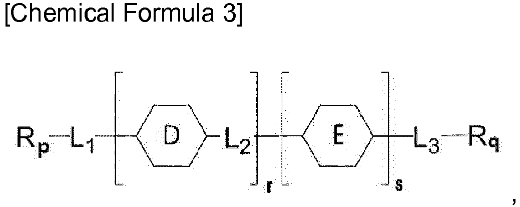
wherein D and E are independently cyclohexylene, phenylene, thiophenylene, benzothiophenylene, or polycyclic aromatic or aliphatic,
wherein each -H of D and E is unsubstituted or is independently substituted with -F, -CI, -OCF₃, -CF₃, -CHF₂, -CH₂F, C₁-C₂ alkyl, or C₁-C₂ alkoxy,
Rₚ and R_{q} are each a reactive group which independently causes polymerization, wherein Rₚ and R_{q} are independently an C₁-C₁₂ acrylate group, a methacrylate group, an epoxy group, an oxetane group, a vinyl-ether group, or a styrene group,
L₁ to L₃ are independently a single bond, C₁-C₅ alkylene, ether, carbonyl, or carboxyl,
wherein when L₁, L₂ or L₃ is C₁-C₅ alkylene or ether, each -CH₂- group is unsubstituted or is independently substituted with -CO-, -O-, -CO-O-, -O-CO- or -O-COO- in such a way that oxygen atoms of adjacent groups are not directly connected to each other, and each -H of L₁, L_{2 or} L₃ is unsubstituted or is substituted with -F, -CI, - OCF₃, -CF₃, -CHF₂, or -CH₂,
and r and s are independently an integer selected from 0 to 2.

2. A liquid crystal display according to claim 1, wherein
the liquid crystal compound of Chemical Formula 1 includes at least one of liquid crystal compounds represented by Chemical Formulae 1-1 to 1-6 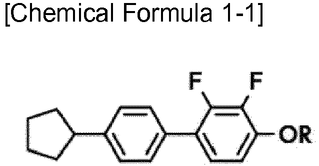 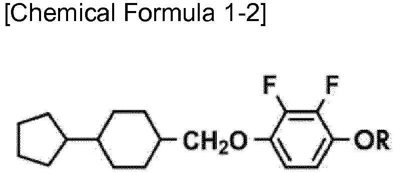 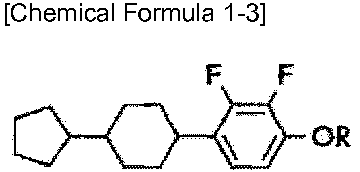 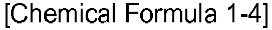 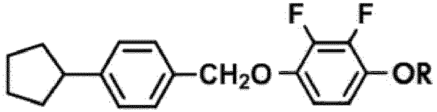 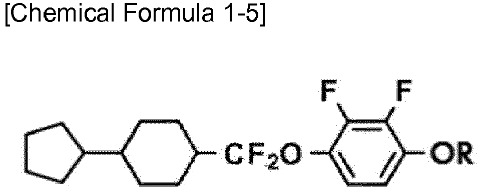 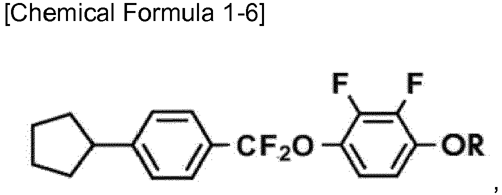
wherein R is -H or C₁-C₅ alkyl, and
wherein when R is C₁-C₅ alkyl, each -CH₂- group is unsubstituted or is independently substituted with -C=C-, -CH=CH-, -CF₂O-, -O-, -CO-O-, -O-CO- or -O-CO-O- in such a way that oxygen atoms of adjacent groups are not directly connected to each other, and each hydrogen atom of R is unsubstituted or is substituted with halogen.

3. A liquid crystal display according to claim 2, wherein
the liquid crystal compound of Chemical Formula 1 includes at least one of liquid crystal compounds represented by Chemical Formulae 1-1-A and 1-1-B

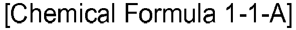

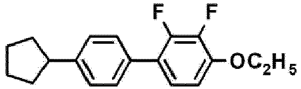

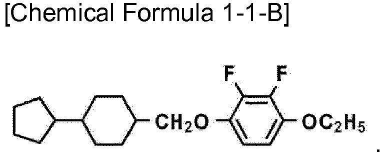

4. A liquid crystal display according to any one of claims 1 to 3, wherein
the liquid crystal compound of Chemical Formula 2-A includes at least one of liquid crystal compounds represented by Chemical Formulae 2-1 to 2-11 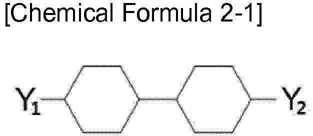 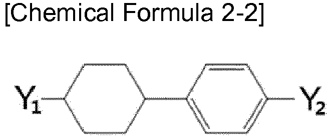 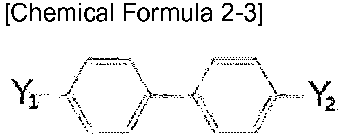 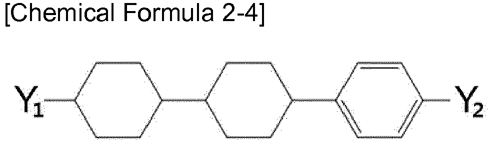 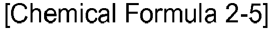 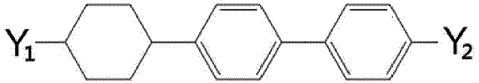 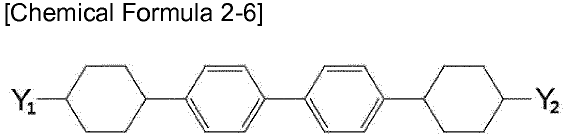 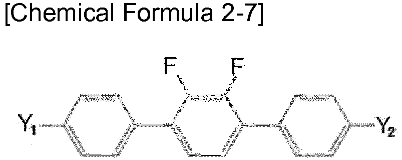 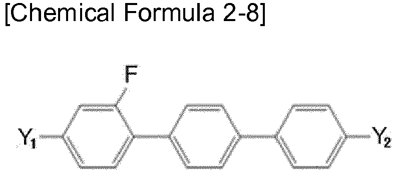 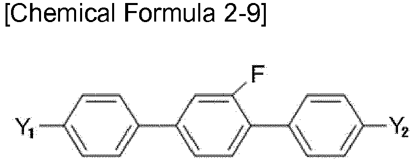 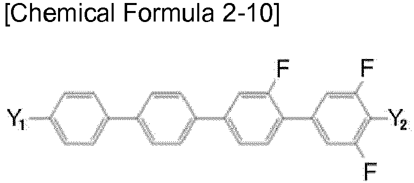 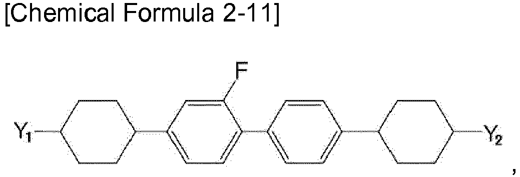 wherein Y₁ and Y₂ are the same as defined in claim 1.

5. A liquid crystal display according to any one of claims 1 to 4, wherein
the liquid crystal compound of Chemical Formula 2-B includes at least one of liquid crystal compounds represented by Chemical Formulae 2-12 to 2-15 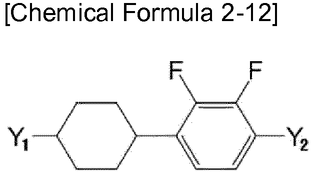 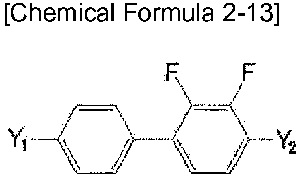 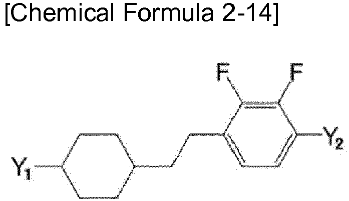 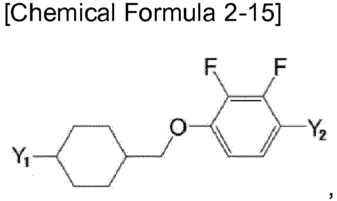 wherein Y₁ and Y₂ are the same as defined in claim 1.

6. A liquid crystal display according to any one of claims 1 to 5, wherein
the liquid crystal composition further includes at least one of liquid crystal compounds represented by Chemical Formula 2-C 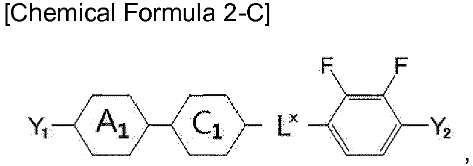 wherein Y₁, Y₂, A₁, B₁, C₁ and L^{x} are the same as defined in claim 1.

7. A liquid crystal display according to claim 6, wherein
the liquid crystal compound of Chemical Formula 2-C includes at least one of liquid crystal compounds represented by Chemical Formulae 2-16 to 2-18

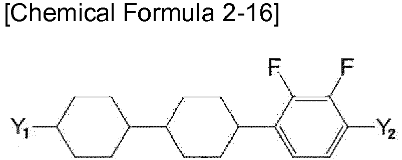

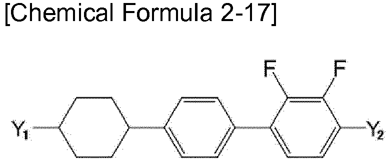

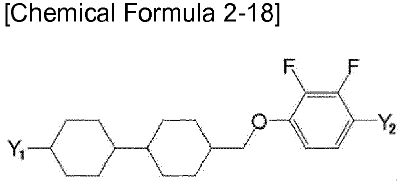

8. A liquid crystal display according to any one of claims 1 to 7, wherein the liquid crystal composition has negative dielectric anisotropy.

9. A liquid crystal display according to any one of claims 1 to 8, wherein
a monomer of Chemical Formula 3 includes at least one of monomers represented by Chemical Formulae 3-1 to 3-31

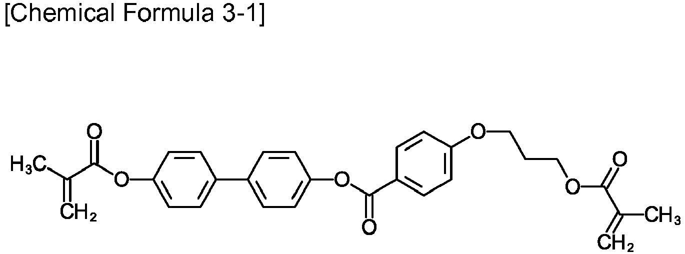

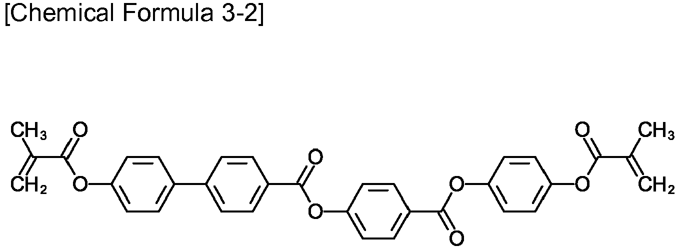

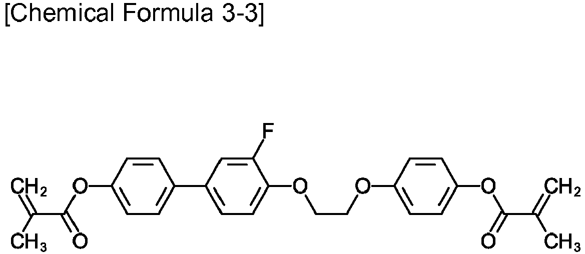

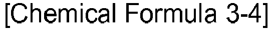

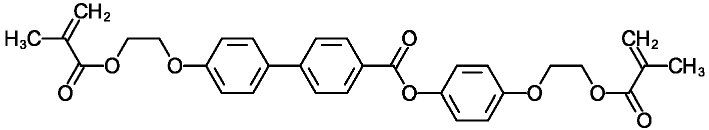

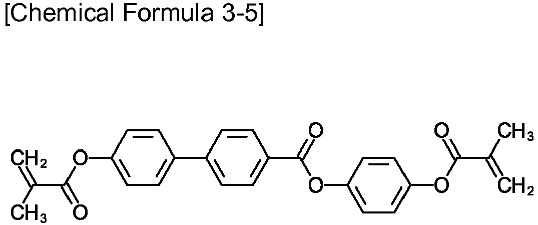

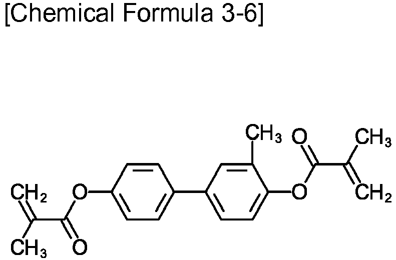

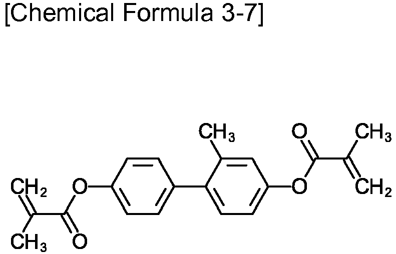

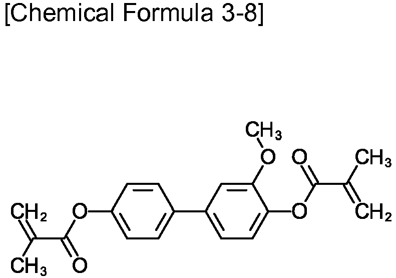

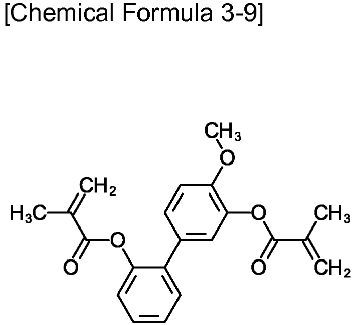

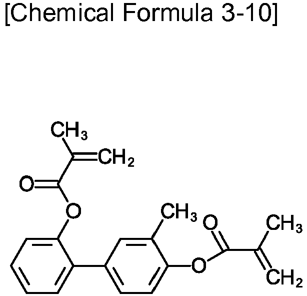

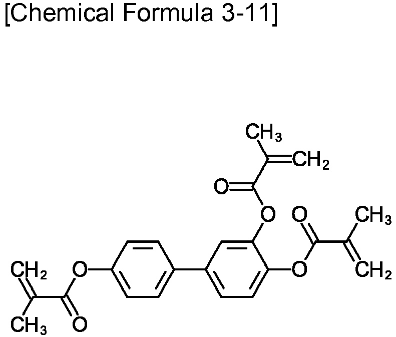

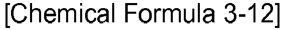

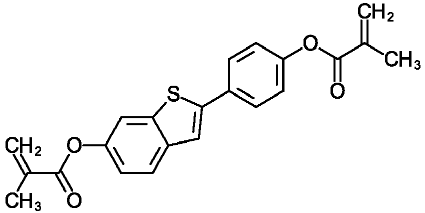

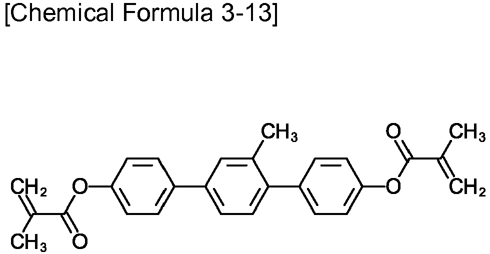

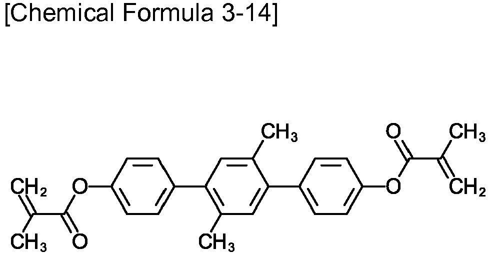

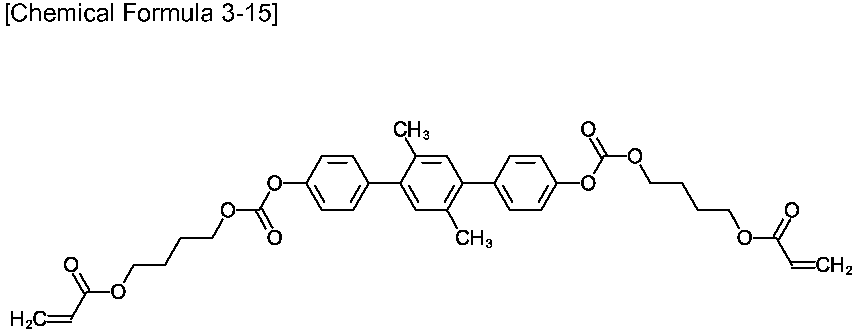

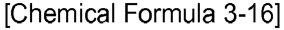

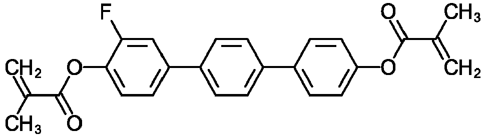

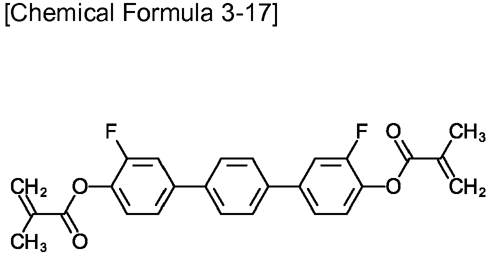

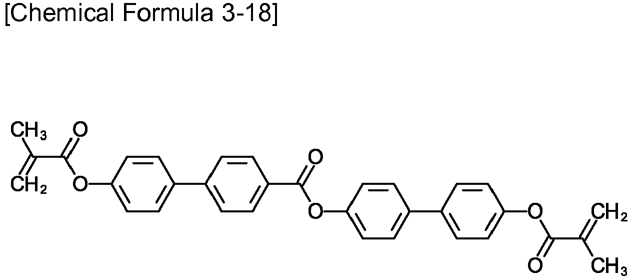

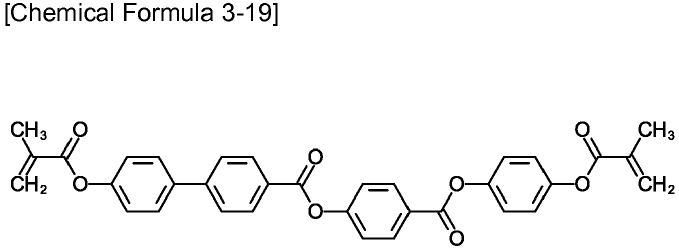

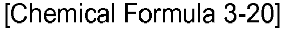

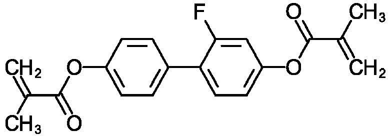

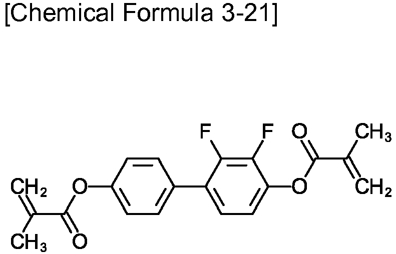

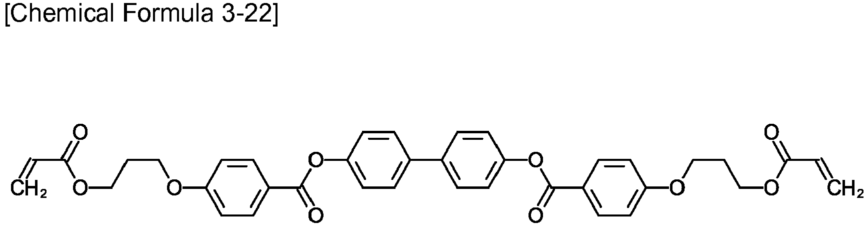

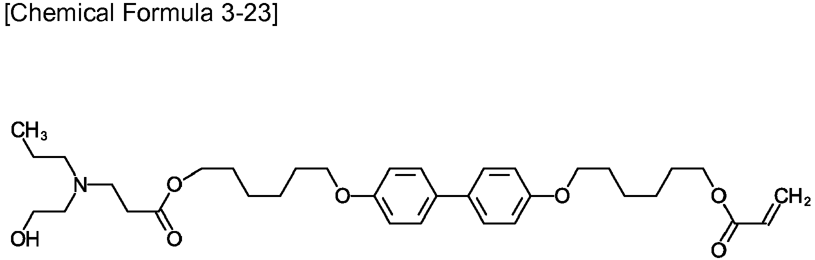

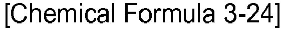

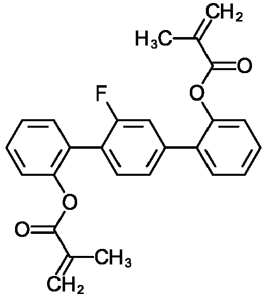

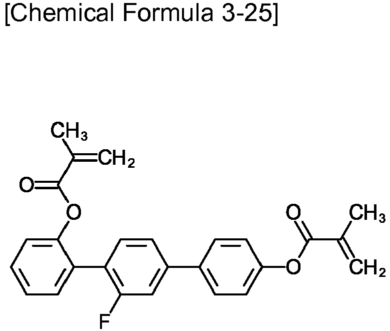

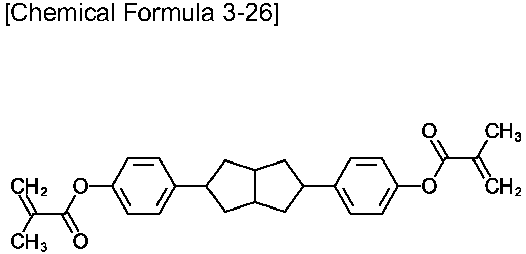

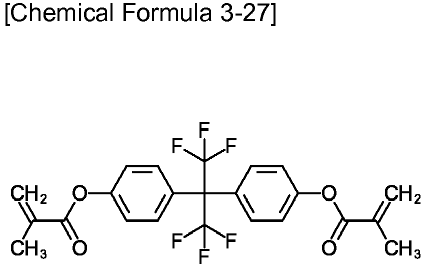

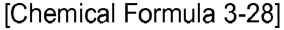

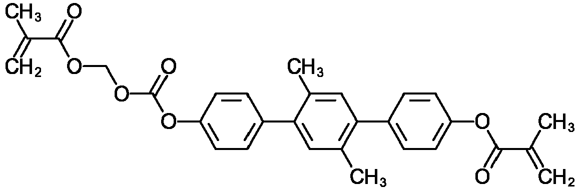

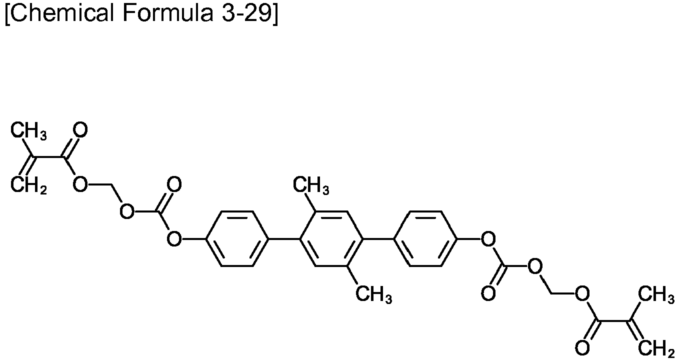

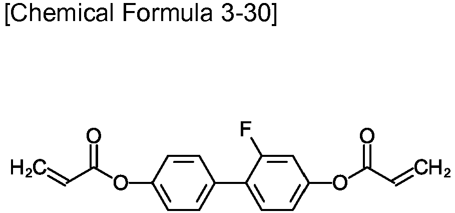

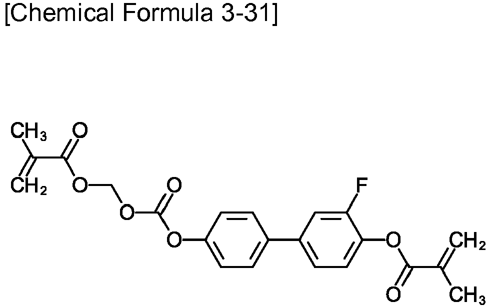

10. A liquid crystal display according to claims 1 to 9, wherein
the liquid crystal layer is driven in a vertical aligned mode

11. A liquid crystal composition for use in a liquid crystal display comprising:
at least one of a liquid crystal compound represented by Chemical Formula 1, at least one of a liquid crystal compound represented by Chemical Formula 2-A and at least one of a liquid crystal compound represented by Chemical Formula 2-B, wherein the liquid crystal compound of Chemical Formula 2-A includes a liquid crystal compound having both a cyclohexylene and a phenylene 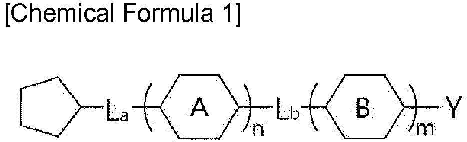 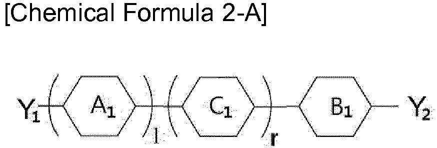 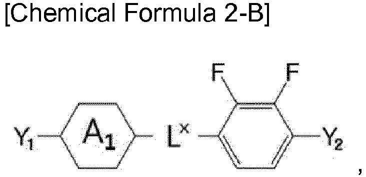
wherein A and B are independently 1, 4-cyclohexylene or 1, 4-phenylene, wherein each -H of A and B is unsubstituted or is independently substituted with -F, -CI, -OCF₃, -CF₃, -CHF₂, -CH₂F, C₁-C₂ alkyl, or C₁-C₂ alkoxy,
Y is -H, C₁-C₅ alkyl, or C₁-C₅ alkoxy,
wherein when Y is C₁-C₅ alkyl, or C₁-C₅ alkoxy, each -CH₂- group of Y is unsubstituted or independently substituted with -C=C-, -CH=CH-, -CF₂O-, -O-, -CO-O-, - O-CO- or -O-CO-O- in such a way that oxygen atoms of adjacent groups are not directly connected to each other, and each hydrogen atom of Y is unsubstituted or is substituted with halogen,
n and m are independently an integer selected from 0 to 2,
Lₐ and L_{b} are independently a single bond, -C=C-, -COO-, -OCO-, -CF₂O-, - OCF₂-, -CH₂O-, -CO-, -O-, -(CH₂)₂-, or -CH=CH-,
Y₁ and Y₂ are independently -H, -F, -CI, or C₁-C₁₅ alkyl,
wherein when Y1 and/or Y2 is C₁-C₁₅ alkyl, each -CH₂- group is unsubstituted or is independently substituted with -C=C-, -CF₂O-, -CH=CH-, -CO-, -O-, -CO-O-, -O-CO- or -O-CO-O- in such a way that oxygen atoms of adjacent groups are not directly connected to each other, and each hydrogen atom of Y₁ and/or Y₂ is unsubstituted or is substituted with halogen,
A₁, B₁, and C₁ are independently 1, 4-cyclohexylene or 1, 4-phenylene, each -H of A₁, B₁, and C₁ is unsubstituted or is independently substituted with -F, -CI, -OCF₃, - CF₃, -CHF₂, -CH₂F, C₁-C₂ alkyl, or C₁-C₂ alkoxy,
I and r are independently an integer selected from 0 to 2,
and L^{x} is a single bond, -C=C-, -COO-, -OCO-, -CF₂O-, -OCF₂-, -CH₂O-, -CO-, - O-, - (CH₂)₂-, or -CH=CH-.

12. A liquid crystal composition according to claim 11, wherein
the liquid crystal compound of Chemical Formula 1 includes at least one of liquid crystal compounds represented by Chemical Formulae 1-1 to 1-6 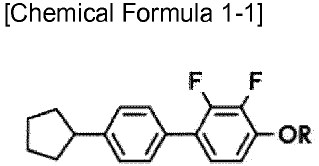 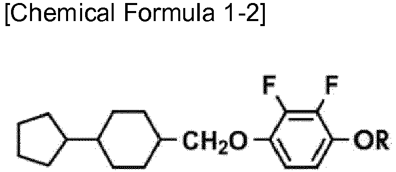 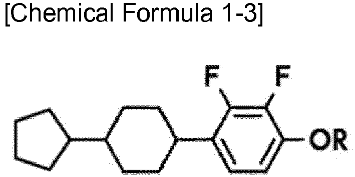 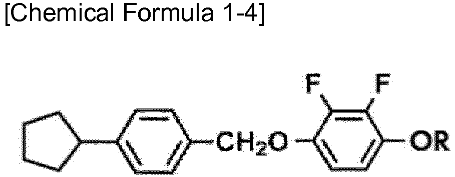 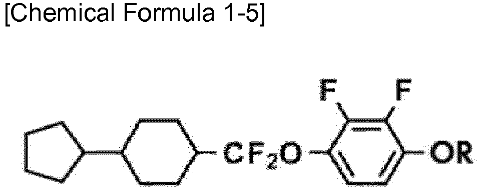 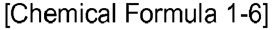 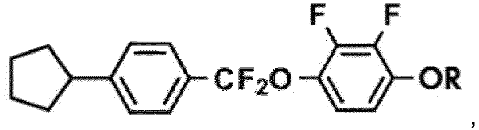
wherein R is -H or C₁-C₅ alkyl, and
wherein when R is C₁-C₅ alkyl, each -CH₂- group of R is unsubstituted or is independently substituted with -C=C-, -CH=CH-, -CF₂O-, -O-, -CO-O-, -O-CO- or -O-CO-O- in such a way that oxygen atoms of adjacent groups are not directly connected to each other, and each hydrogen atom of R is unsubstituted or is substituted with halogen.

13. A liquid crystal composition according to claim 12, wherein
the liquid crystal compound of Chemical Formula 1-1 includes at least one of liquid crystal compounds represented by Chemical Formulae 1-1-A and 1-1-B

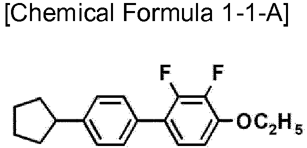

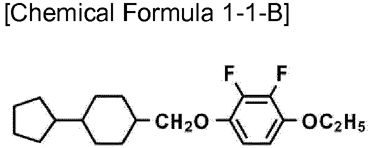

14. A liquid crystal composition according to any one of claims 11 to 13, wherein
the liquid crystal compound of Chemical Formula 2-A includes at least one of liquid crystal compounds represented by Chemical Formulae 2-1 to 2-11 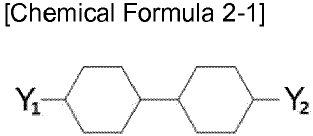 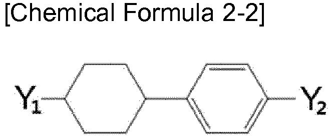 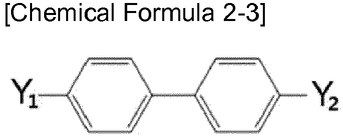 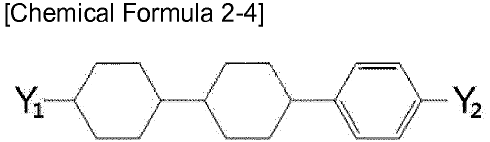 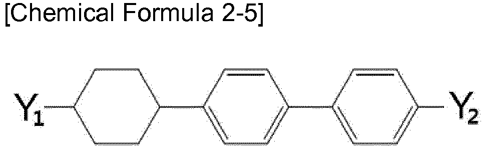 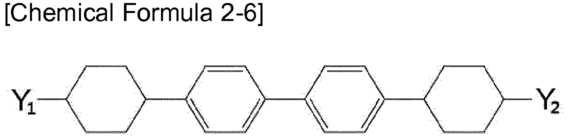 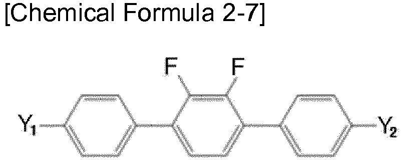 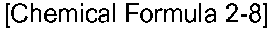 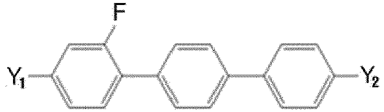 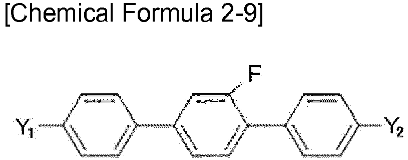 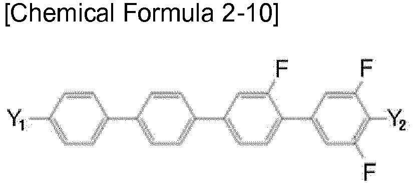 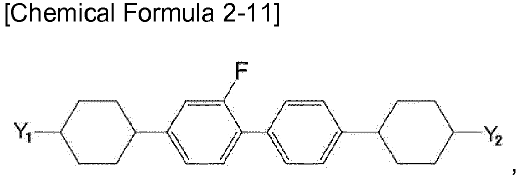 wherein Y₁ and Y₂ are the same as defined in claim 12.

15. A liquid crystal composition according to any one of claims 11 to 14, wherein
the liquid crystal compound of Chemical Formula 2-B includes at least one of liquid crystal compounds represented by Chemical Formulae 2-12 to 2-15 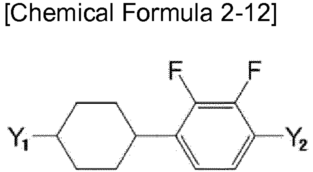 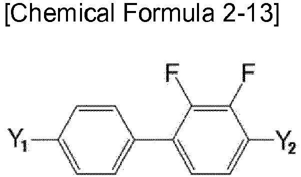 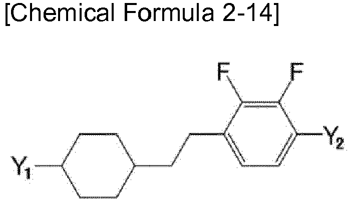 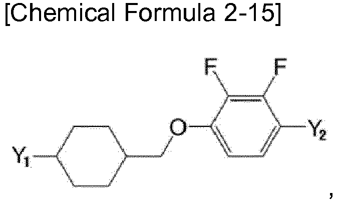 wherein Y₁ and Y₂ are the same as defined in claim 12.

16. A liquid crystal composition according to any one of claims 11 to 15, wherein
the liquid crystal composition further includes at least one of liquid crystal compounds represented by Chemical Formula 2-C 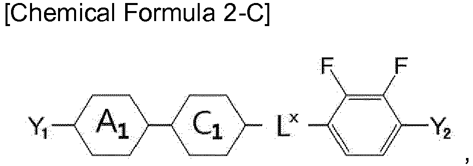 wherein Y₁, Y₂, A₁, B₁, C₁ and L^{x} are the same as defined in claim 12.

17. A liquid crystal composition according to claim 16, wherein
the liquid crystal compound of Chemical Formula 2-C includes at least one of liquid crystal compounds represented by Chemical Formulae 2-16 to 2-18

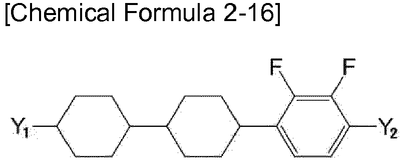

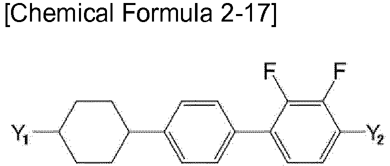

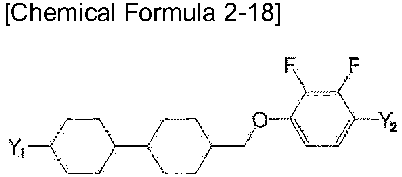

18. A liquid crystal composition according to any one of claims 11 to 17, further comprising a monomer represented by Chemical Formula 3 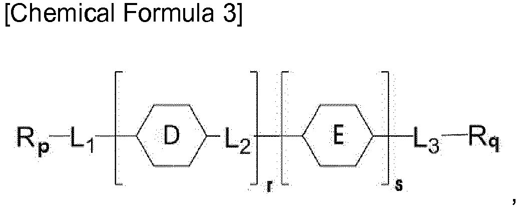
wherein D and E are independently cyclohexylene, phenylene, thiophenylene, benzothiophenylene, or polycyclic aromatic or aliphatic, and each -H of D and E is unsubstituted or is independently substituted with -F, -CI, -OCF₃, -CF₃, -CHF₂, -CH₂F, C₁-C₂ alkyl, or C₁-C₂ alkoxy,
Rₚ and R_{q} are each a reactive group which independently causes polymerization, wherein Rₚ and R_{q} are independently an C₁-C₁₂ acrylate group, a methacrylate group, an epoxy group, an oxetane group, a vinyl-ether group, or a styrene group,
L₁ to L₃ are independently a single bond, C₁-C₅ alkylene, ether, carbonyl, or carboxyl,
wherein when L₁, L₂ or L₃ is C₁-C₅ alkylene or ether, each -CH₂- group is unsubstituted or is independently substituted with -CO-, -O-, -CO-O-, -O-CO- or -O-COO- in such a way that oxygen atoms of adjacent groups are not directly connected to each other, and each -H is unsubstituted or is independently substituted with -F, -CI, - OCF₃, -CF₃, -CHF₂, or -CH₂,
and r and s are independently an integer selected from 0 to 2.

19. The liquid crystal composition of claim 18, wherein
the monomer of Chemical Formula 3 includes at least one of monomers represented by Chemical Formulae 3-1 to 3-31

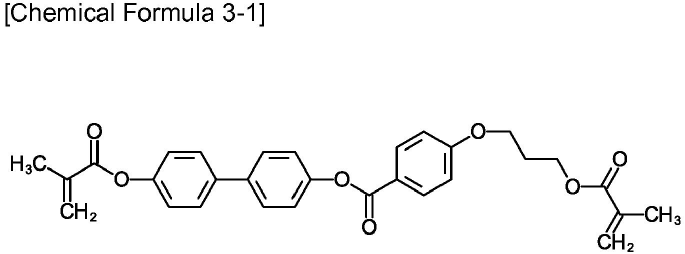

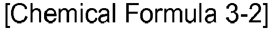

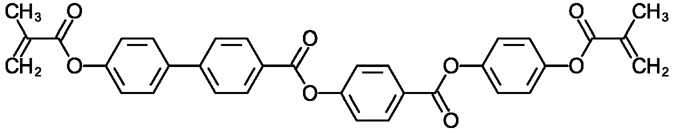

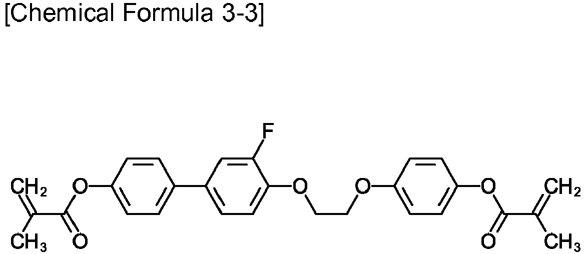

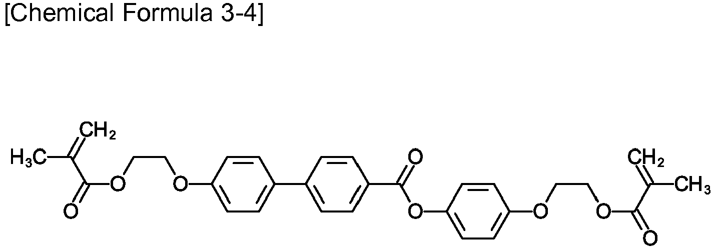

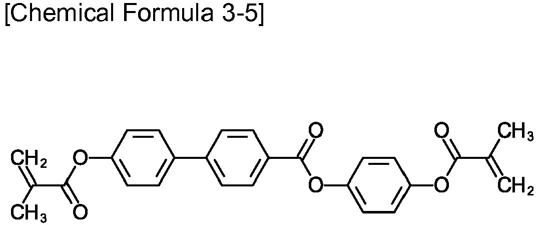

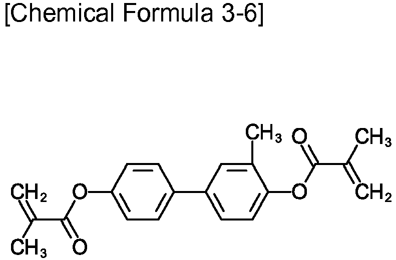

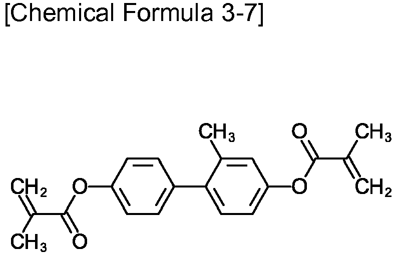

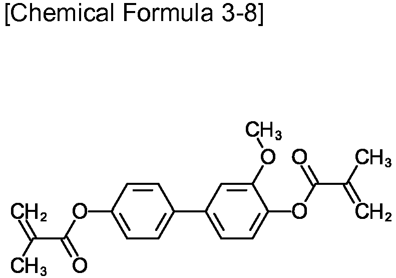

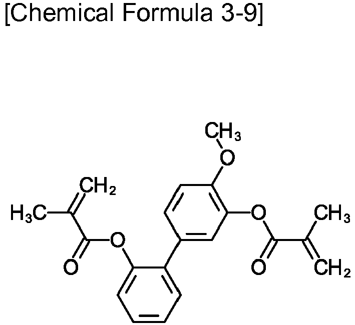

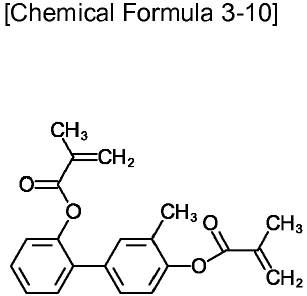

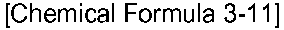

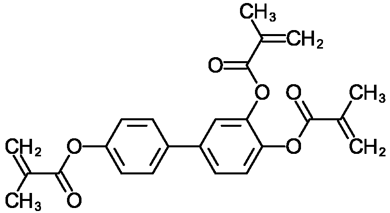

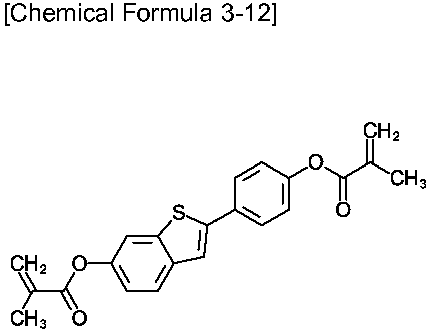

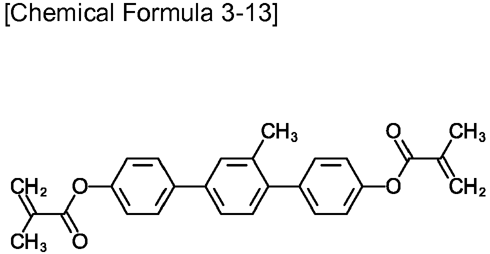

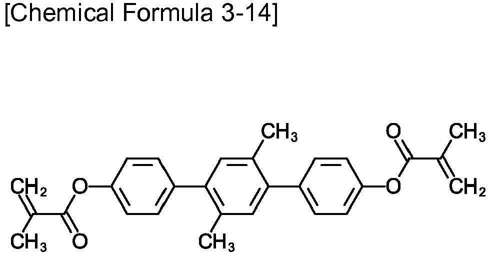

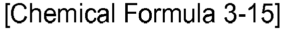

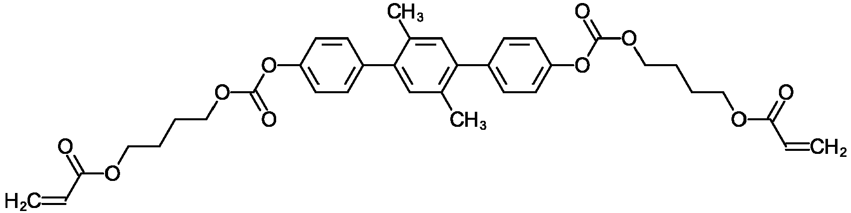

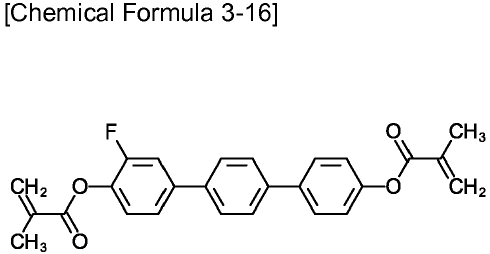

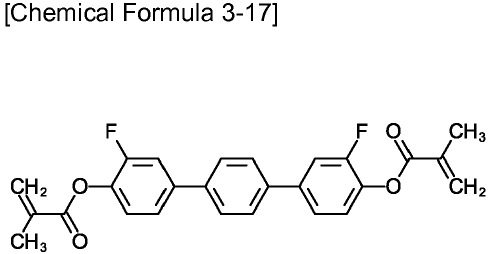

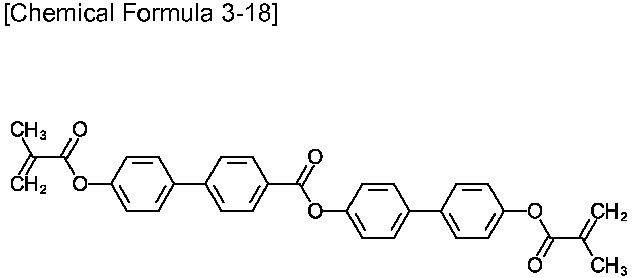

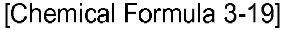

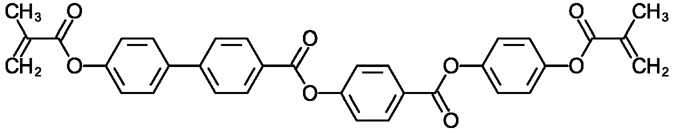

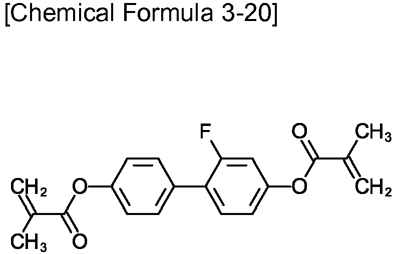

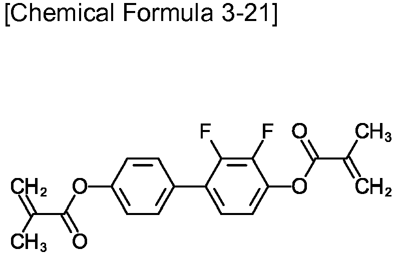

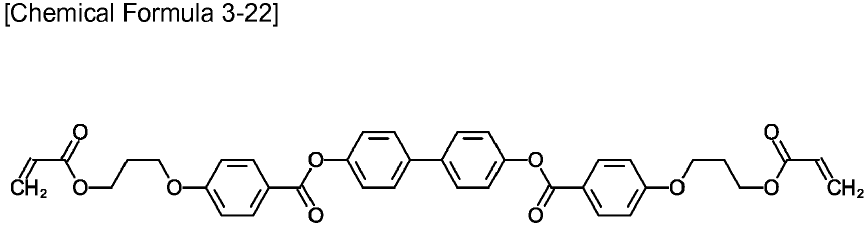

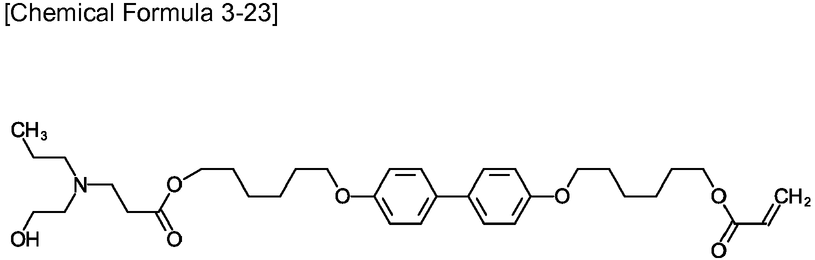

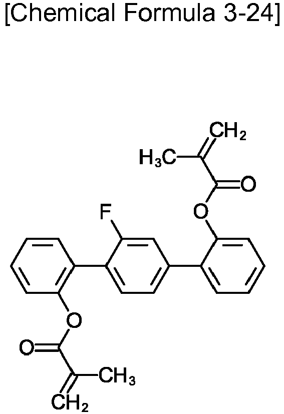

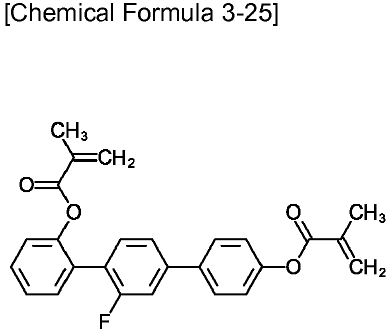

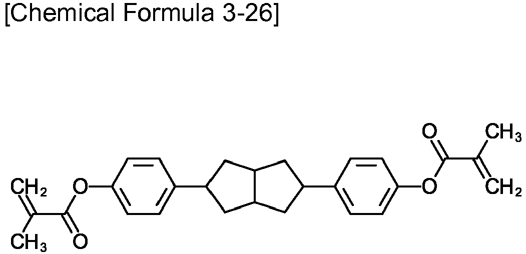

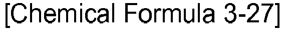

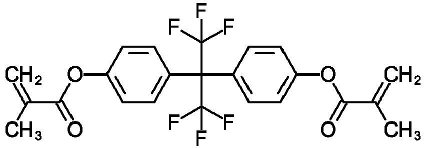

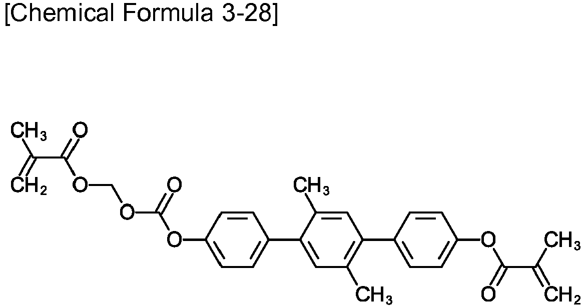

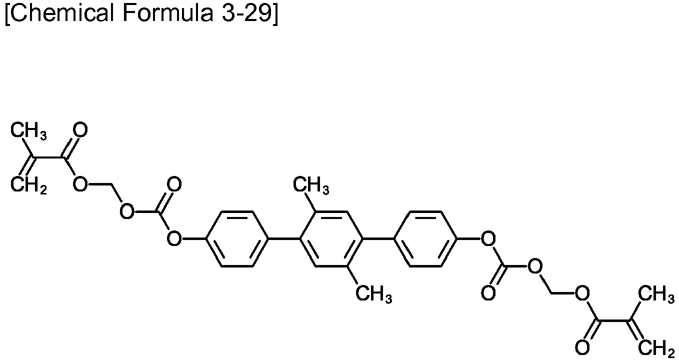

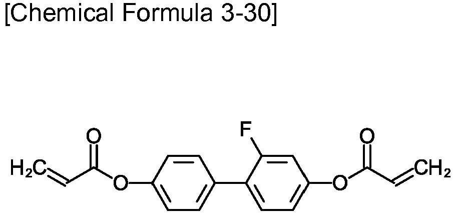

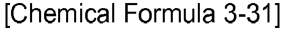

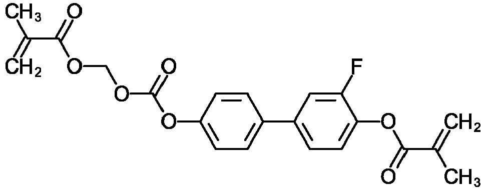

## Patentansprüche

1. Flüssigkristall-Display, umfassend:
ein erstes Basissubstrat;
ein zweites Basissubstrat, das dem ersten Basissubstrat zugewandt ist;
eine Elektrodeneinheit, die auf dem ersten Basissubstrat und / oder dem zweiten Basissubstrat angeordnet ist;
eine Flüssigkristall-Schicht, die eine Position zwischen dem ersten Basissubstrat und dem zweiten Basissubstrat einnimmt und eine Flüssigkristall-Zusammensetzung umfasst, und
eine Orientierungsschicht, die eine Position zwischen dem ersten Basissubstrat und / oder der Flüssigkristall-Schicht oder zwischen dem zweiten Basissubstrat und / oder der Flüssigkristall-Schicht einnimmt,
wobei die Flüssigkristall-Zusammensetzung mindestens eine Flüssigkristall-Verbindung einschließt, die durch die Chemische Formel 1 dargestellt ist, mindestens eine Flüssigkristall-Verbindung einschließt, die durch die Chemische Formel 2-A dargestellt ist, mindestens eine Flüssigkristall-Verbindung einschließt, die durch die Chemische Formel 2-B dargestellt ist, und wobei die Flüssigkristall-Verbindung der Chemischen Formel 2-A eine Flüssigkristall-Verbindung einschließt, die sowohl ein Cyclohexylen als auch ein Phenylen einschließt: 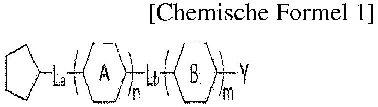 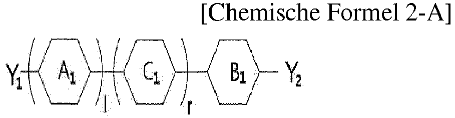 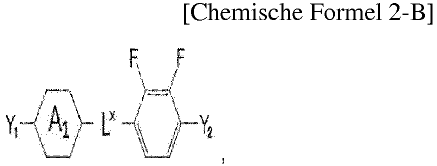
worin A und B unabhängig voneinander 1,4-Cyclohexylen oder 1,4-Phenylen sind, worin jedes -H von A und B unsubstituiert oder unabhängig voneinander substituiert ist mit -F, -Cl, -OCF₃, -CF₃, -CHF₂, -CH₂F, C₁-C₂-Alkyl oder C₁-C₂-Alkoxy,
Y -H, C₁-C₅-Alkyl oder C₁-C₅-Alkoxy ist,
wobei, wenn Y C₁-C₅-Alkyl oder C₁-C₅-Alkoxy ist, jede -CH₂-Gruppe von Y unsubstituiert ist oder unabhängig in einer solchen Weise substituiert ist mit -C=C-, -CH = CH-, -CF₂O-, -O-, -CO-O-, -O-CO- oder -O-CO-O-, dass Sauerstoffatome von benachbarten Gruppen nicht direkt miteinander verbunden sind und jedes Wasserstoffatom von Y unsubstituiert ist oder substituiert ist mit Halogen,
n und m unabhängig voneinander eine ganze Zahl sind, die ausgewählt ist aus 0 bis 2, und
Lₐ und L_{b} unabhängig voneinander eine Einfachbindung, -C=C-, -COO-, -OCO-, - CF₂O-, OCF₂-, -CH₂O-, -CO-, -(CH₂)₂- oder -CH=CH- sind,
Y₁ und Y₂ unabhängig voneinander -H, -F, -C1 oder C₁-C₁₅-Alkyl sind,
wobei, wenn Y₁ und/oder Y₂ C₁-C₁₅-Alkyl sind, jede -CH₂-Gruppe unsubstituiert ist oder unabhängig voneinander in einer solchen Weise substituiert ist mit -C=C-, -CF₂O-, -CH=CH-, -CO-, -O-, -CO-O- oder -O-CO-O-, dass Sauerstoffatome von benachbarten Gruppen nicht direkt miteinander verbunden sind, und jedes Wasserstoffatom von Y₁ und / oder Y₂ unsubstituiert ist oder substituiert ist mit Halogen,
A₁, B₁ und C₁ unabhängig voneinander 1,4-Cyclohexylen oder 1,4-Phenylen sind, wobei jedes -H von A₁, B₁ und C₁ unsubstituiert ist oder unabhängig voneinander substituiert ist mit -F, -C1, -OCF₃, -CF₃, -CHF₂, -CH₂F, C₁-C₂-Alkyl oder C₁-C₂-Alkoxy,
I und r unabhängig voneinander eine ganze Zahl ist, die ausgewählt ist aus 0 bis 2, und L^{x} eine Einfachbindung, -C≡C-, -COO-, -OCO-, -CF₂O-, -OCF₂, -CH₂O-,-CO-, -O-, -(CH₂)₂- oder -CH=CH- ist,
wobei die Orientierungsschicht ein Polymer einschließt, das mit einem Monomer polymerisiert ist, das dargestellt wird durch die Chemische Formel 3 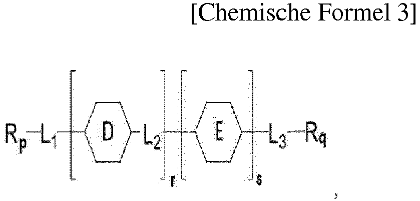
worin D und E unabhängig Cyclohexylen, Phenylen, Thiophenylen, Benzothiophenylen oder polycyclisch aromatisch oder aliphatisch sind,
worin jedes -H von D und E unsubstituiert ist oder unabhängig substituiert ist mit -F, -C1, -OCF₃, -CF₃, -CHF₂, -CH₂F, C₁-C₂-Alkyl oder C₁-C₂-Alkoxy,
Rₚ und R_{q} jeweils eine reaktionsfähige Gruppe sind, die unabhängig voneinander eine Polymerisation bewirkt, wobei Rₚ und R_{q} unabhängig voneinander eine C₁-C₁₂-Acrylat-Gruppe, eine Methacrylat-Gruppe, eine Epoxy-Gruppe, eine Oxetan-Gruppe, eine Vinylether-Gruppe oder eine Styrol-Gruppe sind,
L₁ bis L₃ unabhängig eine Einfachbindung, C₁-C₅-Alkylen, Ether, Carbonyl oder Carboxyl sind,
wobei, wenn L₁, L₂ oder L₃ C₁-C₅-Alkylen oder Ether ist, jede -CH₂-Gruppe unsubstituiert ist oder unabhängig voneinander in einer solchen Weise substituiert ist mit -CO-, -O-, -CO-O-, -O-CO- oder -O-CO-O-, dass Sauerstoffatome von benachbarten Gruppen nicht direkt miteinander verbunden sind, und jedes -H von L₁, L₂ oder L₃ unsubstituiert ist oder substituiert ist mit -F, -Cl, -OCF₃, -CF₃, -CHF₂ oder -CH₂,
und r und s unabhängig eine ganze Zahl sind, die ausgewählt ist von 0 bis 2.

2. Flüssigkristall-Display nach Anspruch 1, wobei die Flüssigkristall-Verbindung der Chemischen Formel 1 mindestens eine der Flüssigkristall-Verbindungen einschließt, die dargestellt ist durch die Chemische Formeln 1-1 bis 1-6 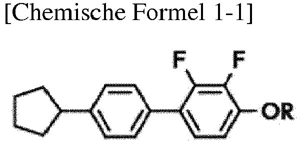 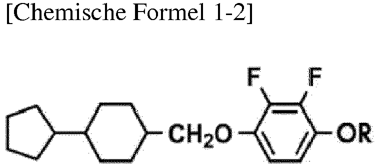 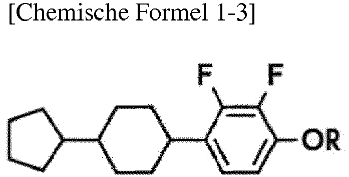 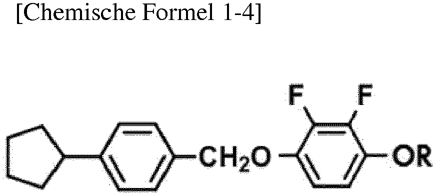 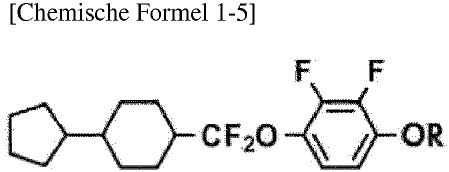 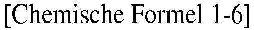 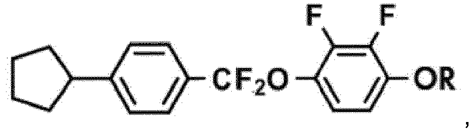
worin R -H oder C₁-C₅-Alkyl ist und
wobei, wenn R C₁-C₅-Alkyl ist, jede -CH₂-Gruppe unsubstituiert ist oder unabhängig in einer solchen Weise substituiert ist mit -C≡C-, -CH=CH-, -CF₂O-, -O-, - CO-O-, -O-CO- oder -O-CO-O, dass Sauerstoffatome von benachbarten Gruppen miteinander nicht direkt verbunden sind und jedes Wasserstoffatom von R unsubstituiert ist oder substituiert ist mit Halogen.

3. Flüssigkristall-Display nach Anspruch 2, wobei die Flüssigkristall-Verbindung der Chemischen Formel 1 mindestens eine der Flüssigkristall-Verbindungen einschließt, die dargestellt ist durch die Chemischen Formeln 1-1-A und 1-1-B

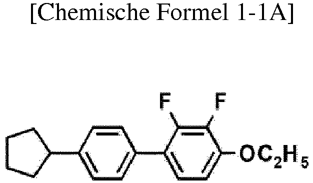

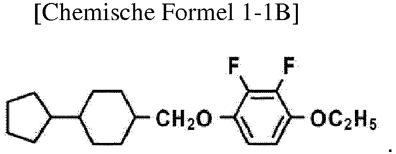

4. Flüssigkristall-Display nach einem der Ansprüche 1 bis 3, wobei die Flüssigkristall-Verbindung der Chemischen Formel 2-A mindestens eine der Flüssigkristall-Verbindungen einschließt, die dargestellt sind durch die Chemischen Formeln 2-1 bis 2-11 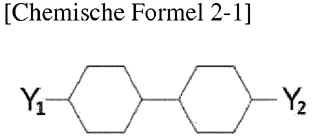 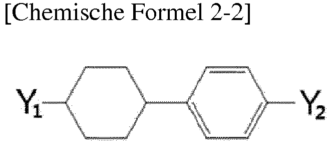 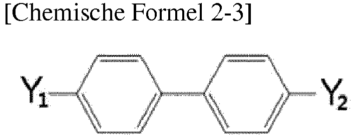 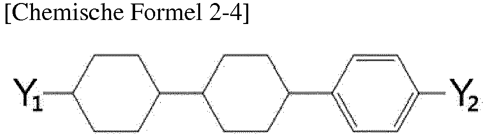 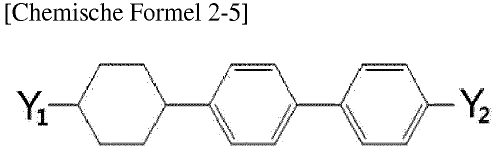 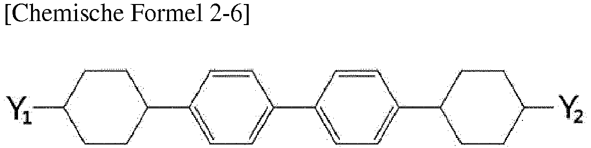 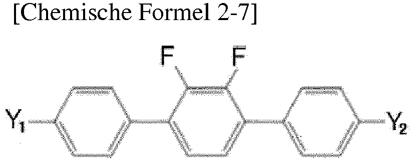 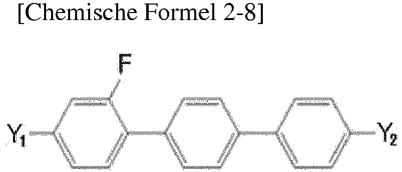 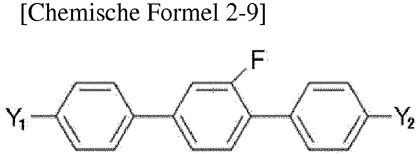 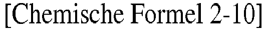 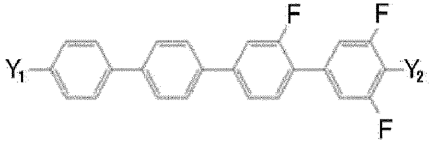 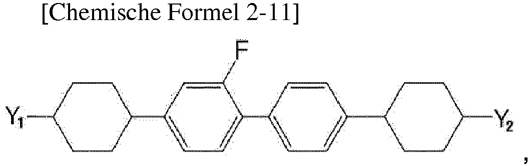 worin Y₁ und Y₂ die Gleichen sind, wie sie unter Anspruch 1 festgelegt wurden.

5. Flüssigkristall-Display nach einem der Ansprüche 1 bis 4, wobei die Flüssigkristall-Verbindung der Chemischen Formel 2-B mindestens eine der Flüssigkristall-Verbindungen einschließt, die dargestellt sind durch die Chemischen Formeln 2-12 bis 2-15 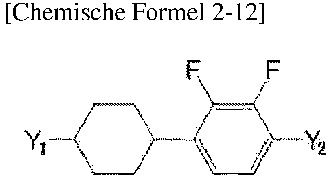 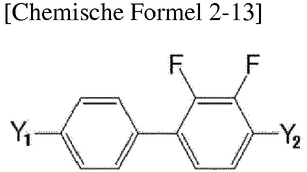 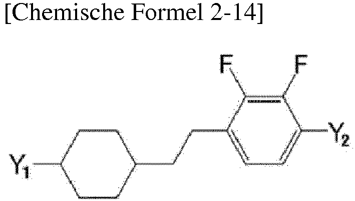 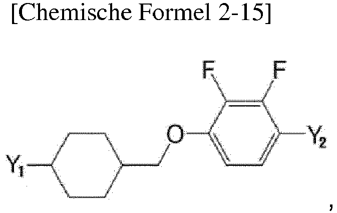 worin Y₁ und Y₂ die Gleichen sind, wie sie unter Anspruch 1 festgelegt wurden.

6. Flüssigkristall-Display nach einem der Ansprüche 1 bis 5, wobei die Flüssigkristall-Zusammensetzung ferner mindestens eine der Flüssigkristall-Verbindungen einschließt, die dargestellt sind durch Chemische Formel 2-C 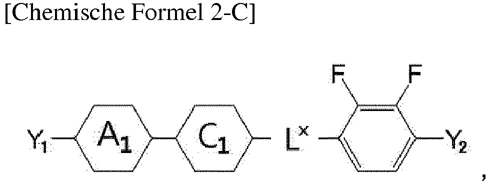 worin Y₁, Y₂, A₁, B₁, C₁ und L^{x} die Gleichen sind, wie in Anspruch 1 festgelegt wurde.

7. Flüssigkristall-Display nach Anspruch 6, wobei die Flüssigkristall-Verbindung der Chemischen Formel 2-C mindestens eine der Flüssigkristall-Verbindungen einschließt, die dargestellt ist durch die Chemischen Formeln 2-16 bis 2-18

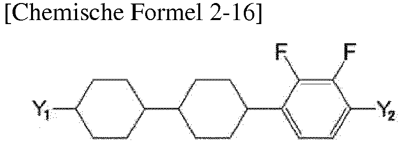

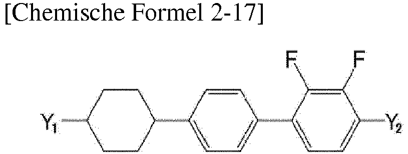

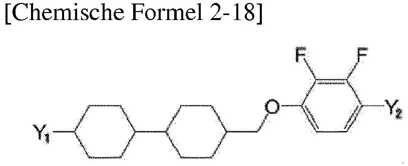

8. Flüssigkristall-Display nach einem der Ansprüche 1 bis 7, wobei die Flüssigkristall-Zusammensetzung eine negative dielektrische Anisotropie aufweist.

9. Flüssigkristall-Display nach einem der Ansprüche 1 bis 8, wobei
ein Monomer der Chemischen Formel 3 mindestens eines der Monomere einschließt, die dargestellt sind durch die Chemischen Formeln 3-1 bis 3-31

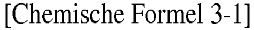

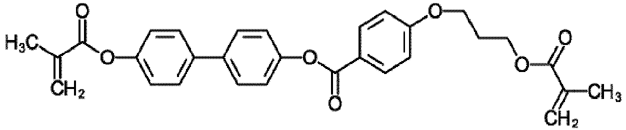

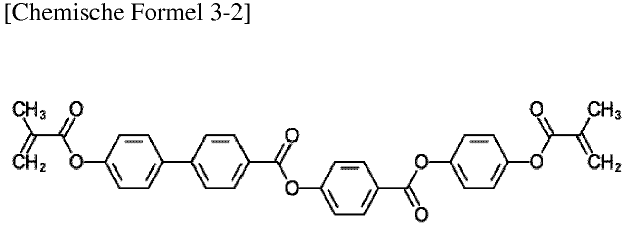

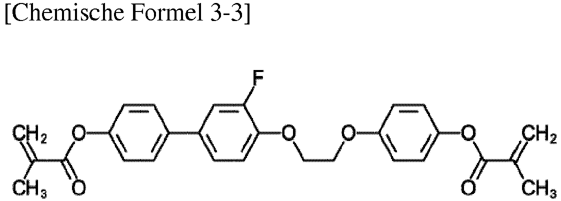

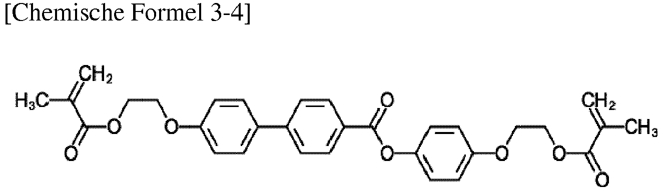

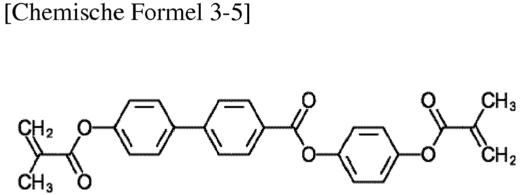

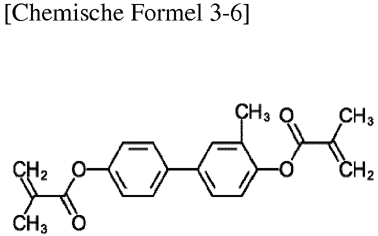

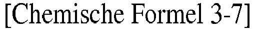

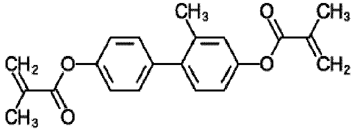

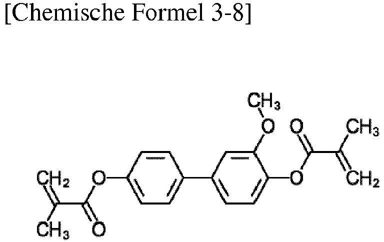

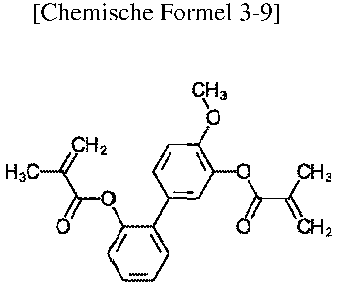

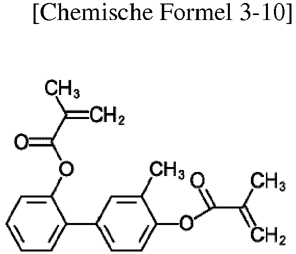

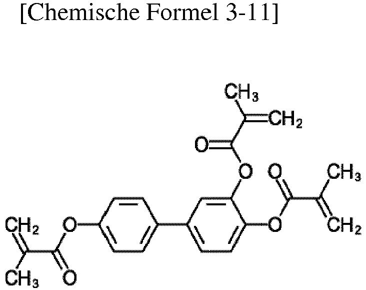

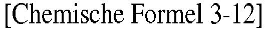

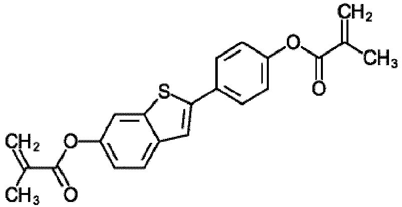

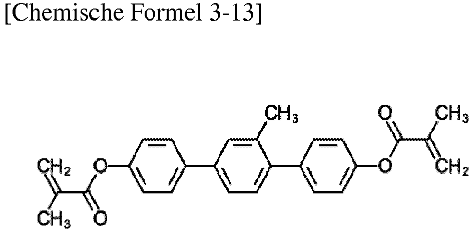

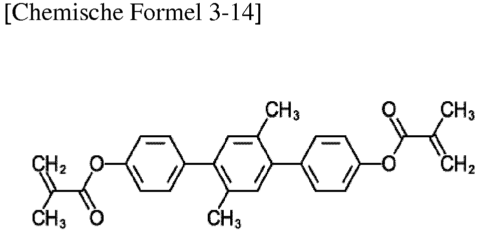

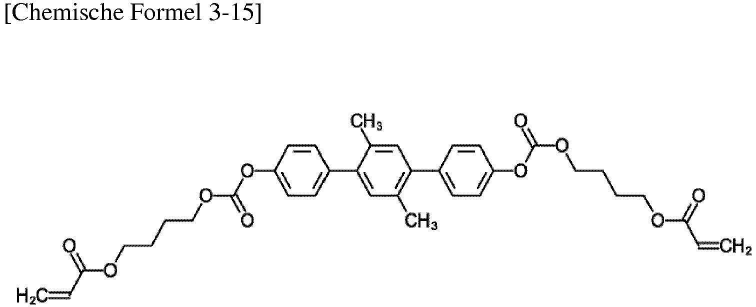

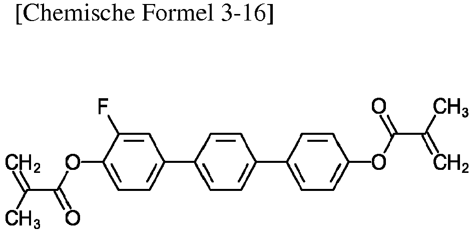

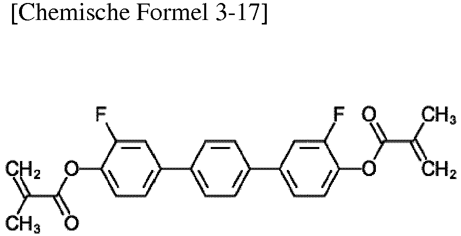

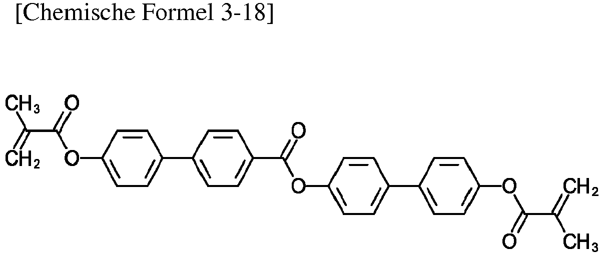

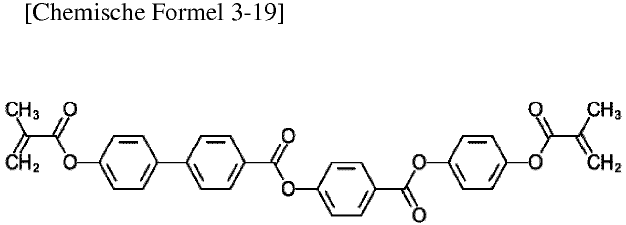

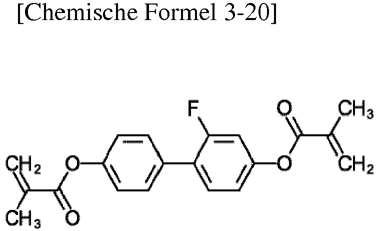

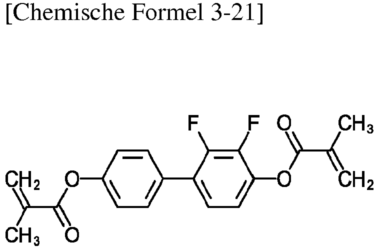

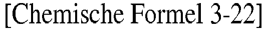

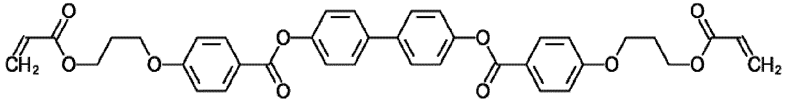

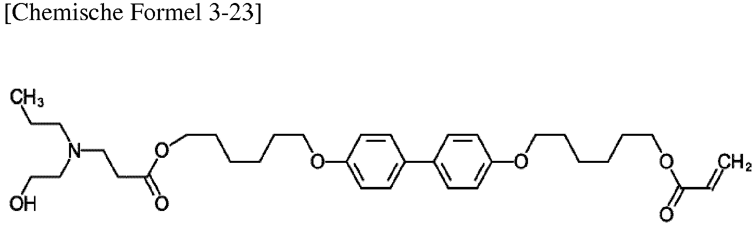

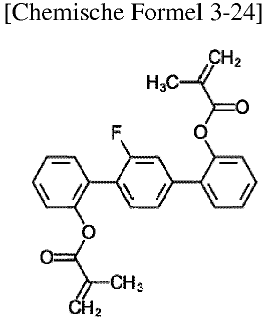

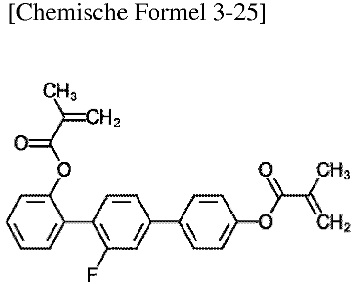

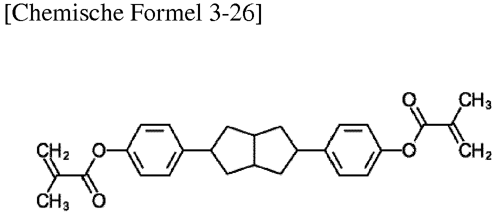

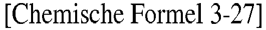

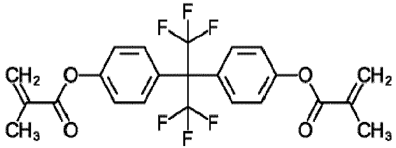

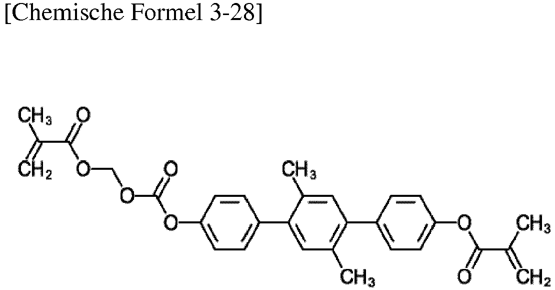

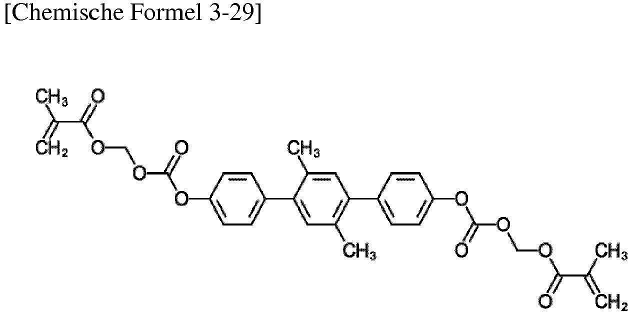

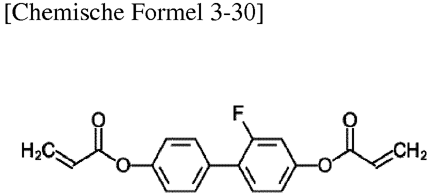

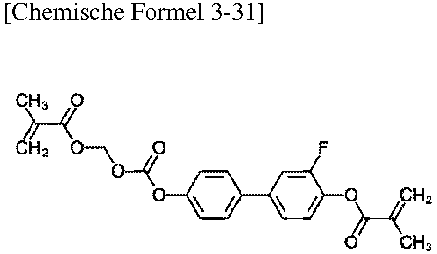

10. Flüssigkristall-Display nach den Ansprüchen 1 bis 9, wobei die Flüssigkristall-Schicht in einem vertikal orientierten Modus angesteuert wird.

11. Flüssigkristall-Zusammensetzung zur Verwendung in einer Flüssigkristall-Display, umfassend:
mindestens eine Flüssigkristall-Verbindung, die dargestellt wird durch die Chemische Formel 1, mindestens eine Flüssigkristall-Verbindung, die dargestellt wird durch die Chemische Formel 2-A, mindestens eine Flüssigkristall-Verbindung, die dargestellt wird durch die Chemische Formel 2-B, wobei die Flüssigkristall-Verbindung der chemischen Formel 2-A eine Flüssigkristall-Verbindung einschließt, die sowohl ein Cyclohexylen als auch ein Phenylen aufweist 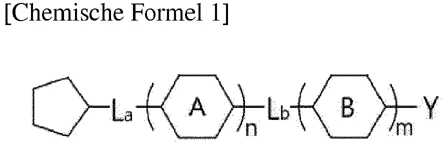 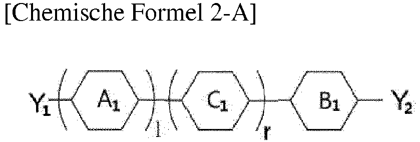 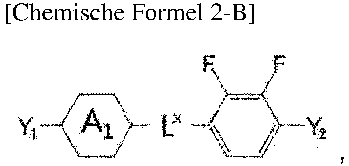
worin A und B unabhängig voneinander 1,4-Cyclohexylen oder 1,4-Phenylen sind, worin jedes -H von A und B unsubstituiert ist oder unabhängig voneinander substituiert ist mit -F, -Cl, -OCF₃, -CF₃, -CHF₂, -CH₂F, C₁-C₂-Alkyl oder C₁-C₂-Alkoxy,
Y -H, C₁-C5-Alkyl oder C₁-C₅-Alkoxy ist,
wobei, wenn C₁-C₅-Alkyl oder C₁-C₅-Alkoxy ist, jede -CH₂-Gruppe von Y unsubstituiert ist oder unabhängig in einer solchen Weise substituiert ist mit -C=C-, -CH = CH-, -CF₂O-, -O-, -CO-O-, -O-CO- oder -O-CO-O-, dass Sauerstoffatome von benachbarten Gruppen nicht direkt miteinander verbunden sind, und jedes Wasserstoffatom von Y unsubstituiert ist oder mit Halogen substituiert ist,
n und m unabhängig voneinander eine ganze Zahl sind, die ausgewählt ist aus 0 bis 2,
Lₐ und L_{b} unabhängig voneinander eine Einfachbindung, -C=C-, -COO-, -OCO-, - CF₂O-, -OCF₂-, -CH₂O-, -CO-, -O-, -(CH₂-CH₂)₂- oder -CH=CH- sind,
Y₁ und Y₂ unabhängig voneinander -H, -F, -Cl oder C₁-C₁₅-Alkyl sind,
wobei, wenn Y₁ und/oder Y₂ C₁-C₁₅-Alkyl sind, jede -CH₂-Gruppe unsubstituiert ist oder unabhängig in einer solchen Weise substituiert ist mit -C≡C-, -CF₂O-, -CH=CH-, -CO-, -O-, -CO-O-, -O-CO- oder -O-CO-O-, dass Sauerstoffatome von benachbarten Gruppen nicht direkt miteinander verbunden sind und jedes Wasserstoffatom von Y₁ und/oder Y₂ unsubstituiert ist oder substituiert ist mit Halogen,
A₁, B₁ und C₁ unabhängig 1,4-Cyclohexylen oder 1,4-Phenylen sind, wobei jedes -H von A₁, B₁ und C₁ unsubstituiert ist oder unabhängig substituiert ist mit -F, -Cl, - OCF₃, -CF₃, -CHF₂, -CH₂F, C₁-C₂-Alkyl oder C₁-C₂-Alkoxy,
I und r unabhängig eine ganze Zahl ist, die ausgewählt ist aus 0 bis 2,
und L^{x} eine Einfachbindung, -C=C-, -COO-, -OCO-, -CF₂O-, -OCF₂, -CH₂O-,-CO-, -O-, -(CH₂)₂- oder -CH=CH- ist.

12. Flüssigkristall-Zusammensetzung nach Anspruch 11, wobei die Flüssigkristall-Verbindung der Chemischen Formel 1 mindestens eine der Flüssigkristall-Verbindungen der Chemischen Formeln 1-1 bis 1-6 einschließt 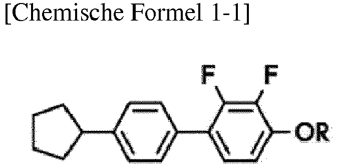 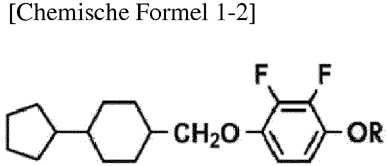 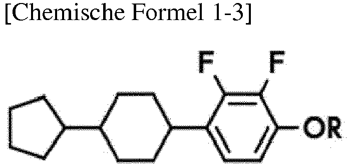 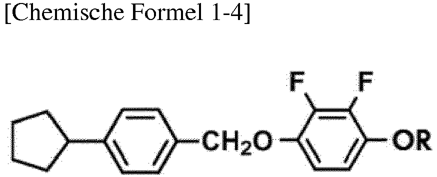 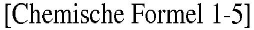 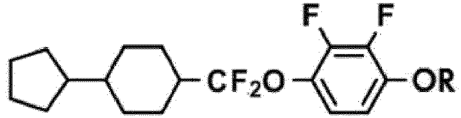 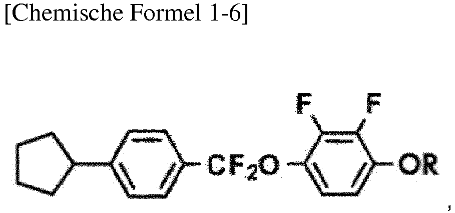
worin R -H oder C₁-C₅-Alkyl ist, und
wobei, wenn R C₁-C₅-Alkyl ist, jede -CH₂-Gruppe von R unsubstituiert ist oder unabhängig in einer solchen Weise substituiert ist mit -C=C-, -CH = CH-, -CF₂O-, -O-, - CO-O-, -O-CO- oder -O-CO-O-, dass Sauerstoffatome von benachbarten Gruppen nicht direkt miteinander verbunden sind und jedes Wasserstoffatom von R unsubstituiert ist oder substituiert ist mit Halogen.

13. Flüssigkristall-Zusammensetzung nach Anspruch 12, wobei die Flüssigkristall-Verbindung der chemischen Formel 1-1 mindestens eine der Flüssigkristall-Verbindungen einschließt, die dargestellt ist durch die Chemischen Formeln 1-1-A und 1-1-B

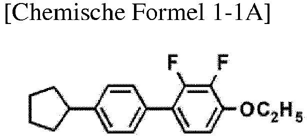

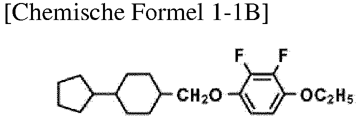

14. Flüssigkristall-Zusammensetzung nach einem der Ansprüche 11 bis 13, wobei die Flüssigkristall-Verbindung der Chemischen Formel 2-A mindestens eine der Flüssigkristall-Verbindungen einschließt, die dargestellt sind durch die Chemischen Formeln 2-1 bis 2-11 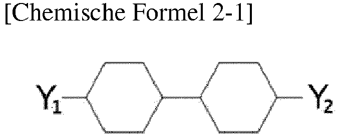 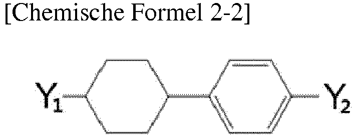 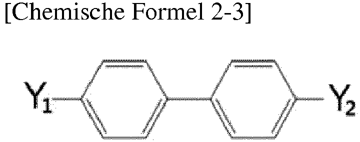 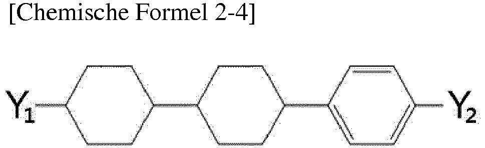 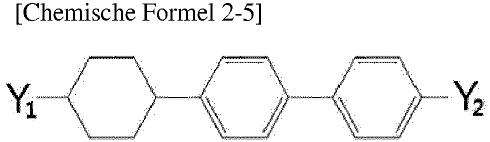 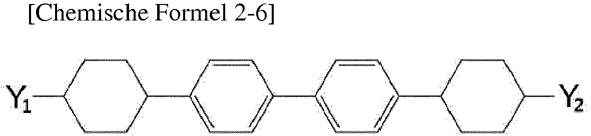 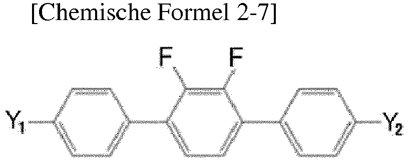 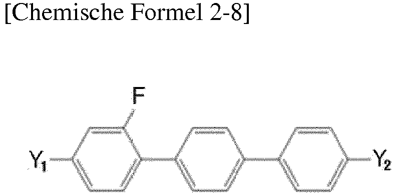 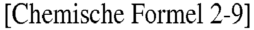 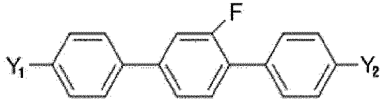 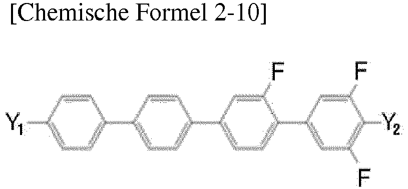 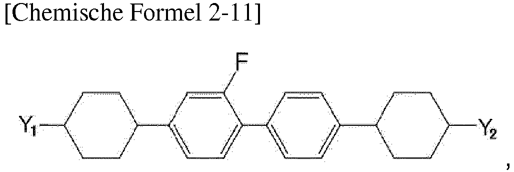 wobei Y₁ und Y₂ die Gleichen sind, wie sie in Anspruch 12 festgelegt wurden.

15. Flüssigkristall-Zusammensetzung nach einem der Ansprüche 11 bis 14, wobei die Flüssigkristall-Verbindung der Chemischen Formel 2-B mindestens eine der Flüssigkristall-Verbindungen einschließt, die dargestellt sind durch die Chemischen Formeln 2-12 bis 2-15 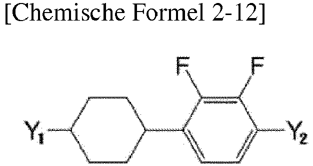 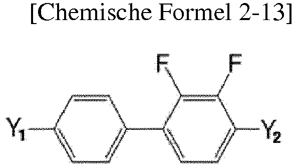 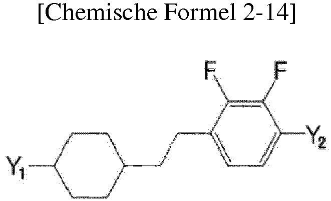 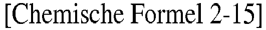 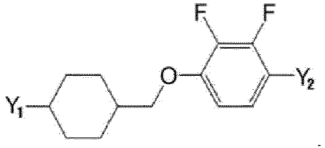 wobei Y₁ und Y₂ die Gleichen sind, wie sie in Anspruch 12 festgelegt wurden.

16. Flüssigkristall-Zusammensetzung nach einem der Ansprüche 11 bis 15, wobei die Flüssigkristall-Verbindung ferner mindestens eine der Flüssigkristall-Verbindungen einschließt, die dargestellt sind durch die Chemische Formel 2-C 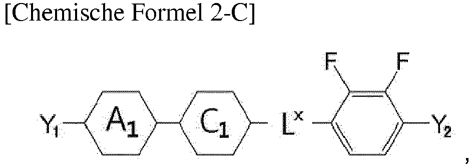 worin Y₁, Y₂, A₁, B₁, C₁ und L^{x} die Gleichen sind, wie sie in Anspruch 12 festgelegt wurden.

17. Flüssigkristall-Zusammensetzung nach Anspruch 16, wobei die Flüssigkristall-Verbindung der Chemischen Formel 2-C mindestens eine der Flüssigkristall-Verbindungen einschließt, die dargestellt sind durch die Chemischen Formeln 2-16 bis 2-18

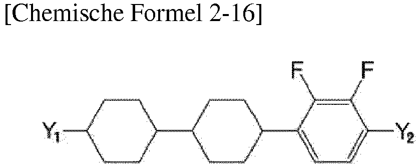

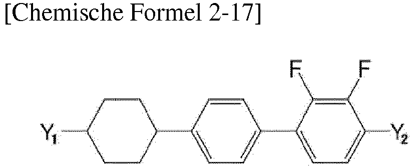

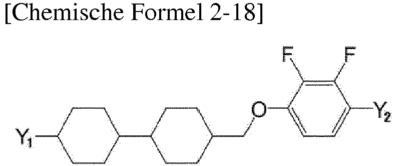

18. Flüssigkristall-Zusammensetzung nach einem der Ansprüche 11 bis 17, ferner umfassend ein Monomer, das dargestellt ist durch die Chemische Formel 3 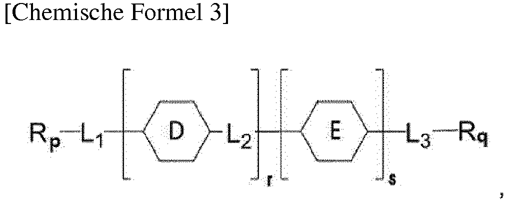
worin D und E unabhängig Cyclohexylen, Phenylen, Thiophenylen, Benzothiophenylen oder polycyclisch aromatisch oder aliphatisch sind, und jedes -H von D und E unsubstituiert ist oder unabhängig substituiert ist mit -F, -Cl, -OCF₃, -CF₃, - CHF₂, -CH₂F, C₁-C₂-Alkyl oder C₁-C₂-Alkoxy,
Rₚ und R_{q} jeweils eine reaktionsfähige Gruppe sind, die unabhängig voneinander eine Polymerisation bewirkt, wobei Rₚ und R_{q} unabhängig voneinander eine C₁-C₁₂-Acrylat-Gruppe, eine Methacrylat-Gruppe, eine Epoxy-Gruppe, eine Oxetan-Gruppe, eine Vinylether-Gruppe oder eine Styrol-Gruppe sind,
L₁ bis L₃ unabhängig voneinander eine Einfachbindung, C₁-C₅-Alkylen, Ether, Carbonyl oder Carboxyl sind,
wobei, wenn L₁, L₂ oder L₃ C₁-C₅-Alkylen oder Ether ist, jede -CH₂-Gruppe unsubstituiert ist oder unabhängig voneinander in einer solchen Weise substituiert ist mit -CO-, -O-, -CO-O-, -O-CO- oder -O-CO-O-, dass Sauerstoffatome von benachbarten Gruppen nicht direkt miteinander verbunden sind, und jedes -H unsubstituiert ist oder unabhängig substituiert ist mit -F, -Cl, -OCF₃, -CF₃, -CHF₂ oder -CH₂,
und r und s unabhängig eine ganze Zahl sind, die ausgewählt ist von 0 bis 2.

19. Flüssigkristall-Zusammensetzung nach Anspruch 18, wobei das Monomer der Chemischen Formel 3 mindestens eines der Monomere einschließt, die dargestellt sind durch die Chemischen Formeln 3-1 bis 3-31

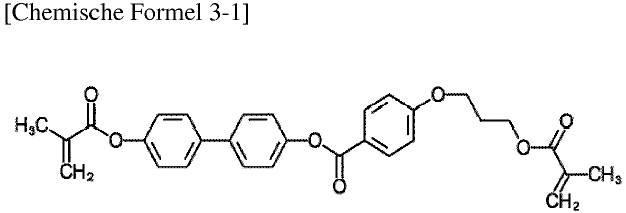

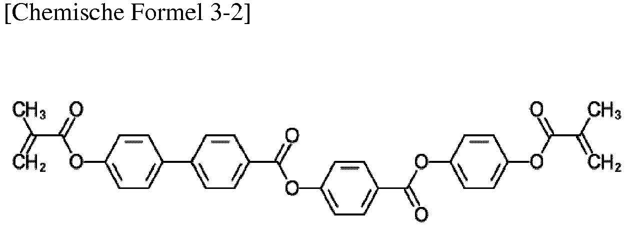

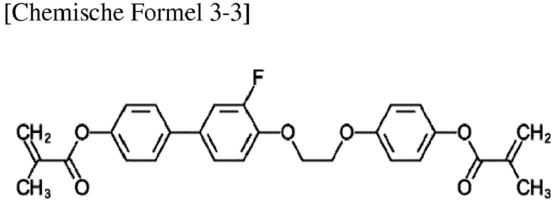

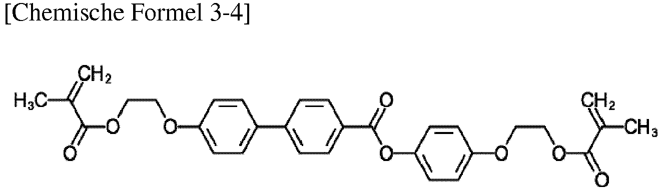

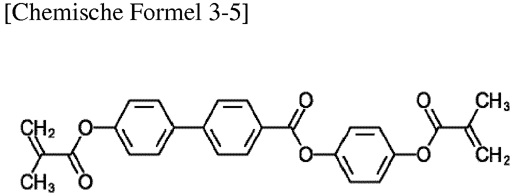

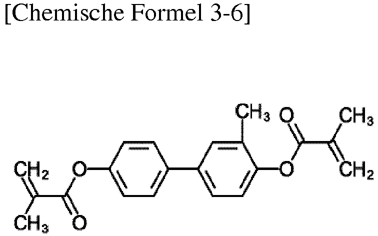

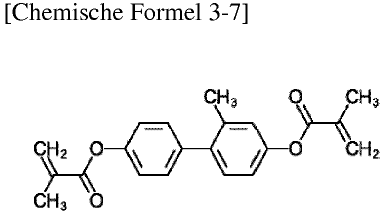

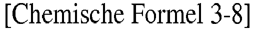

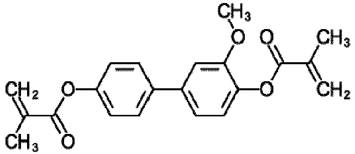

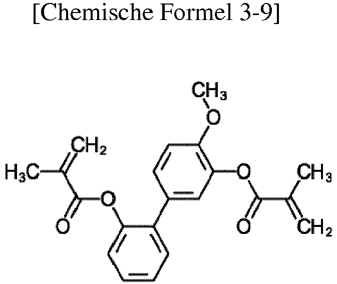

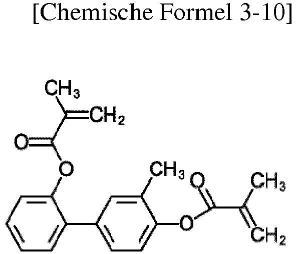

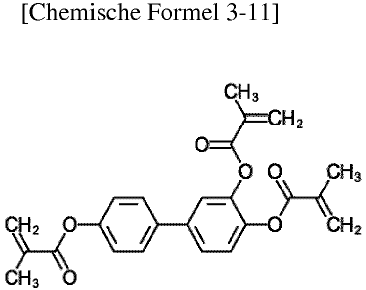

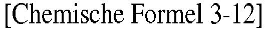

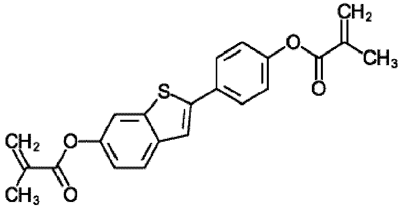

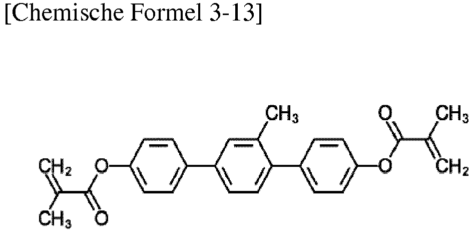

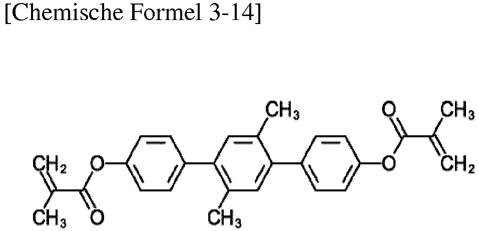

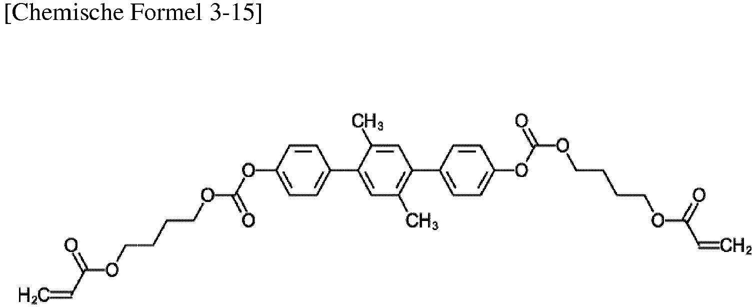

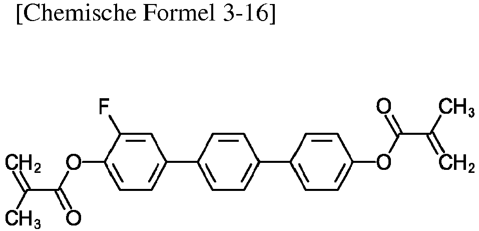

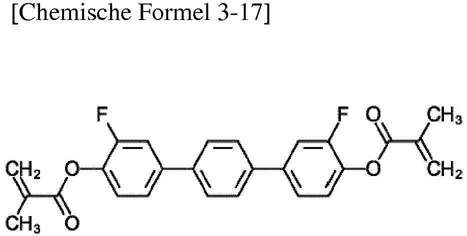

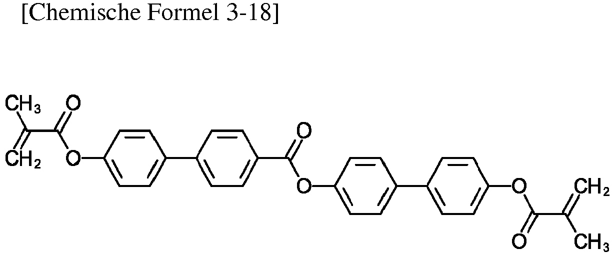

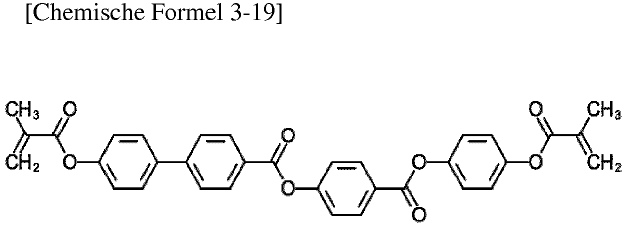

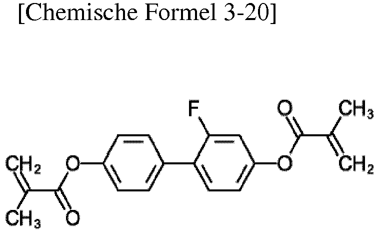

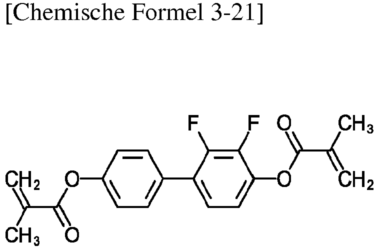

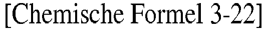

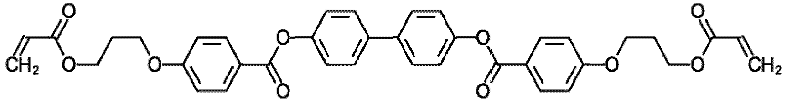

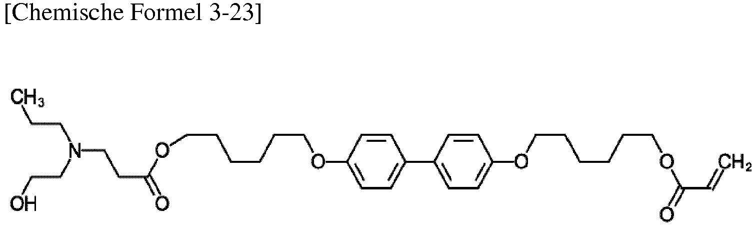

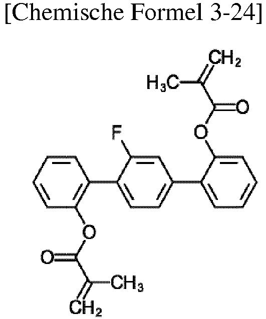

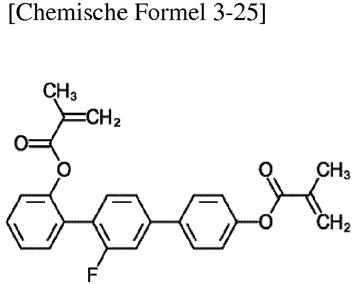

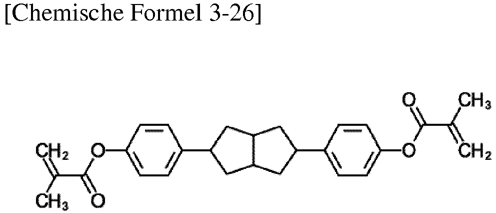

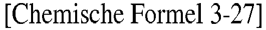

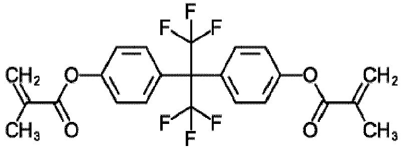

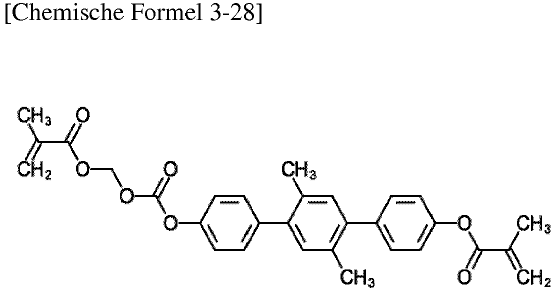

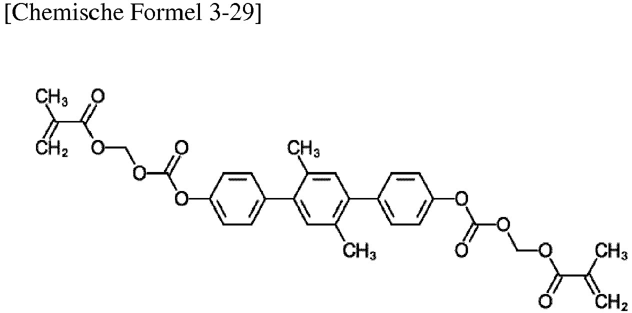

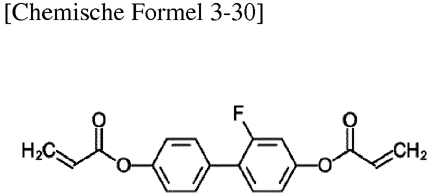

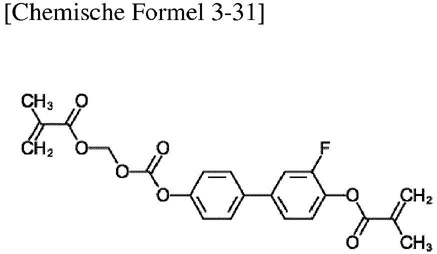

## Revendications

1. Affichage à cristaux liquides comprenant:
un premier substrat de base;
un second substrat de base faisant face au premier substrat de base;
une unité d'électrode placée sur au moins un du premier substrat de base et du second substrat de base;
une couche de cristaux liquides positionnée entre le premier substrat de base et le second substrat de base et comprenant une composition de cristaux liquides; et
une couche d'alignement positionnée entre au moins un du premier substrat de base et la couche de cristaux liquides ou entre le second substrat de base et la couche de cristaux liquides,
dans lequel la composition de cristaux liquides inclut au moins un d'un composé de cristaux liquides représenté par la Formule Chimique 1, au moins un d'un composé de cristaux liquides représenté par la Formule Chimique 2-A et au moins un d'un composé de cristaux liquides représenté par la Formule Chimique 2-B et dans lequel le composé de cristaux liquides de la Formule Chimique 2-A inclut un composé de cristaux liquides possédant à la fois un cyclohexylène et un phénylène: 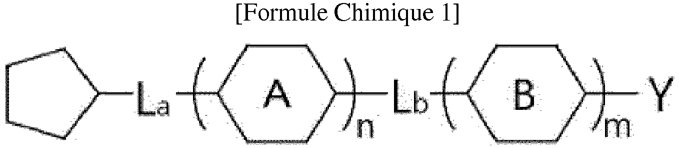 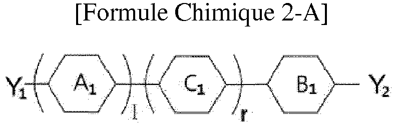 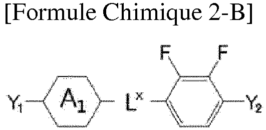
dans lequel A et B sont indépendamment un 1,4-cyclohexylène ou un 1,4-phénylène, dans lequel chaque -H de A et B est non substitué ou est indépendamment substitué avec -F, -Cl, -OCF₃, -CF₃, -CHF₂, -CH₂F, un C₁-C₂ alkyle ou un C₁-C₂ alcoxy,
Y est -H, un C₁-C₅ alkyle ou un C₁-C₅ alcoxy,
dans lequel, lorsque Y est un C₁-C₅ alkyle ou un C₁-C₅ alcoxy, chaque groupe-CH₂- de Y est non substitué ou est indépendamment substitué avec -C≡C-, -CH=CH-,-CF₂O-, -O-, -CO-O-, -O-CO- ou -O-CO-O- de sorte que des atomes d'oxygène de groupes adjacents ne sont pas directement reliés l'un à l'autre et chaque atome d'hydrogène de Y est non substitué ou est substitué avec un halogène,
n et m sont indépendamment un nombre entier choisi parmi 0 à 2,
Lₐ et L_{b} sont indépendamment une liaison simple, -C≡C-, -COO-, -OCO-, -CF₂O-, -OCF₂-, -CH₂O-, -CO-, -O-, -(CH₂)₂- ou -CH=CH-,
Y₁ et Y₂ sont indépendamment -H, -F, -C1 ou un C₁-C₁₅ alkyle,
dans lequel, lorsque Y₁ et/ou Y₂ est un C₁-C₁₅ alkyle, chaque groupe -CH₂- est non substitué ou est indépendamment substitué avec -C≡C-, -CF₂O-, -CH=CH-, -CO-, -O-, -CO-O-, -O-CO- ou -O-CO-O- de sorte que des atomes d'oxygène de groupes adjacents ne sont pas directement reliés l'un à l'autre et chaque atome d'hydrogène de Y₁ et/ou Y₂ est non substitué ou est substitué avec un halogène
A₁, B₁ et C₁ sont indépendamment un 1,4-cyclohexylène ou un 1,4-phénylène, chaque -H de A₁, B₁ et C₁ est non substitué ou est indépendamment substitué avec -F, -Cl, -OCF₃, -CF₃, -CHF₂, -CH₂F, un C₁-C₂ alkyle ou un C₁-C₂ alcoxy,
I et r sont indépendamment un nombre entier choisi parmi 0 à 2,
et L^{x} est une liaison simple, -C≡C-, -COO-, -OCO-, -CF₂O-, -OCF₂-, -CH₂O-,-CO-, -O-, -(CH₂)₂- ou -CH=CH-,
dans lequel la couche d'alignement inclut un polymère polymérisé avec un monomère représenté par la Formule Chimique 3: 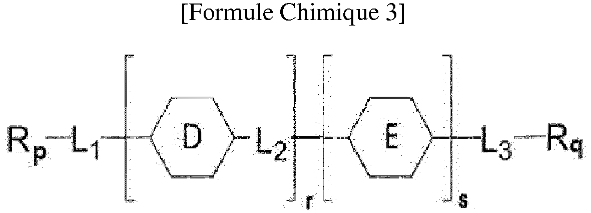
dans lequel D et E sont indépendamment un cyclohexylène, un phénylène, un thiophénylène, un benzothiophénylène ou un aromatique ou aliphatique polycyclique,
dans lequel chaque -H de D et E est non substitué ou est indépendamment substitué avec -F, -Cl, -OCF₃, -CF₃, -CHF₂, -CH₂F, un C₁-C₂ alkyle ou un C₁-C₂ alcoxy,
Rₚ et R_{q} sont chacun un groupe réactif qui entraîne indépendamment une polymérisation, dans lequel Rₚ et R_{q} sont indépendamment un groupe C₁-C₁₂ acrylate, un groupe méthacrylate, un groupe époxy, un groupe oxétane, un groupe vinyl-éther ou un groupe styrène,
L₁ à L₃ sont indépendamment une liaison simple, un C₁-C₅ alkylène, un éther, un carbonyle ou un carboxyle,
dans lequel, lorsque L₁, L₂ ou L₃ est un C₁-C₅ alkylène ou un éther, chaque groupe -CH₂- est non substitué ou est indépendamment substitué avec -CO-, -O-, -CO-O-, -O-CO- ou -O-CO-O- de sorte que des atomes d'oxygène de groupes adjacents ne sont pas directement reliés l'un à l'autre et chaque -H de L₁, L₂ ou L₃ est non substitué ou est substitué avec -F, -Cl, -OCF₃, -CF₃, -CHF₂ ou -CH₂,
et r et s sont indépendamment un nombre entier choisi parmi 0 à 2.

2. Affichage à cristaux liquides selon la revendication 1, dans lequel le composé de cristaux liquides de la Formule Chimique 1 inclut au moins un des composés de cristaux liquides représentés par les Formules Chimiques 1-1 à 1-6: 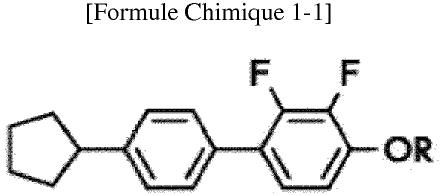 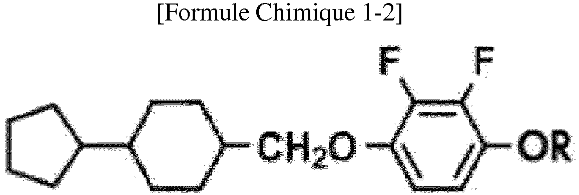 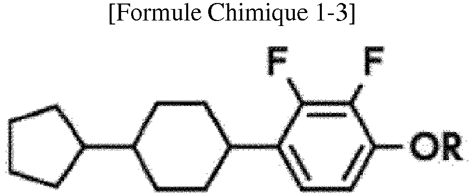 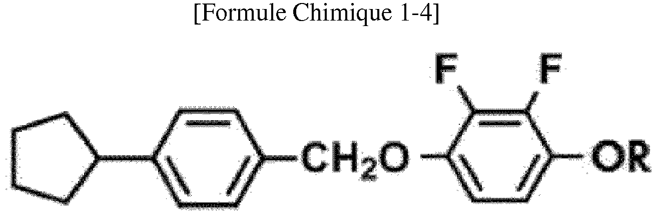 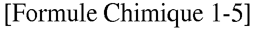 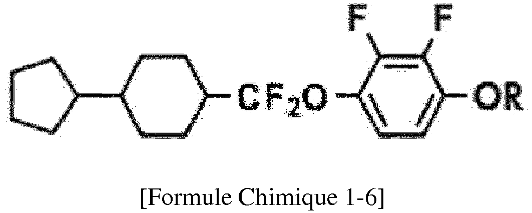 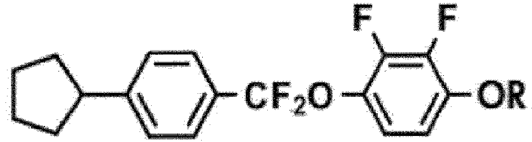
dans lequel R est -H ou un C₁-C₅ alkyle, et
dans lequel, lorsque est R est un C₁-C₅ alkyle, chaque groupe -CH₂- est non substitué ou est indépendamment substitué avec -C≡C-, -CH=CH-, -CF₂O-, -O-, -CO-O-, -O-CO- ou -O-CO-O- de sorte que des atomes d'oxygène de groupes adjacents ne sont pas directement reliés l'un à l'autre et chaque atome d'hydrogène de R est non substitué ou est substitué avec un halogène.

3. Affichage à cristaux liquides selon la revendication 2, dans lequel le composé de cristaux liquides de la Formule Chimique 1 inclut au moins un des composés de cristaux liquides représentés par les Formules Chimiques 1-1-A et 1-1-B:

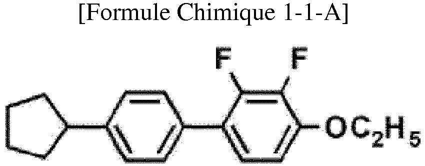

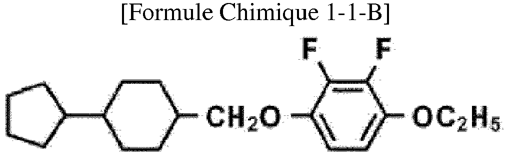

4. Affichage à cristaux liquides selon l'une quelconque des revendications 1 à 3, dans lequel le composé de cristaux liquides de la Formule Chimique 2-A inclut au moins un des composés de cristaux liquides représentés par les Formules Chimiques 2-1 à 2-11: 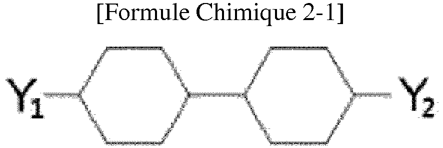 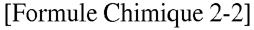 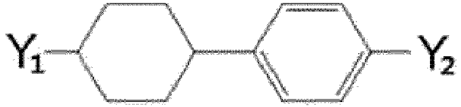 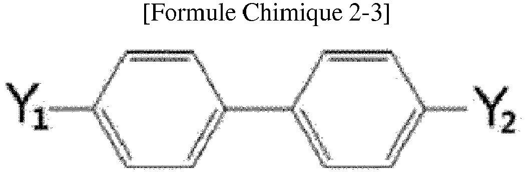 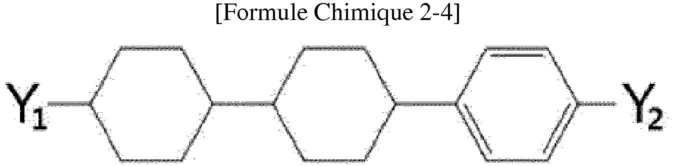 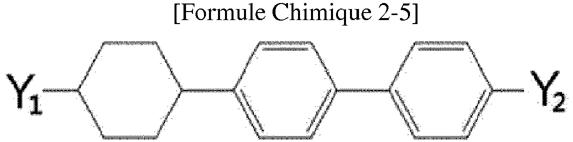 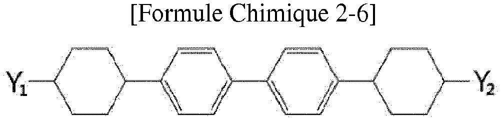 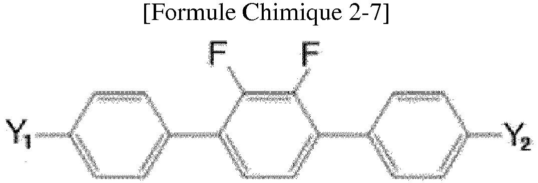 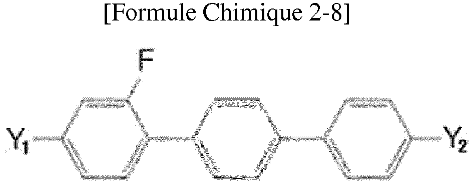 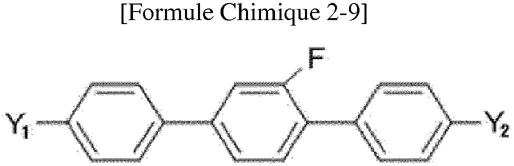 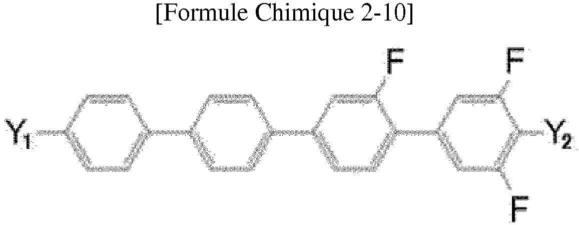 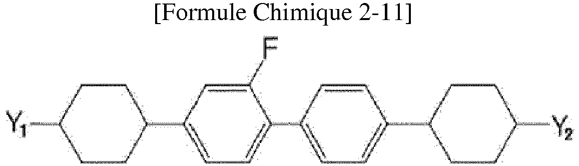 dans lequel Y₁ et Y₂ sont les mêmes que ce qui est défini dans la revendication 1.

5. Affichage à cristaux liquides selon l'une quelconque des revendications 1 à 4, dans lequel le composé de cristaux liquides de la Formule Chimique 2-B inclut au moins un des composés de cristaux liquides représentés par les Formules Chimiques 2-12 à 2-15: 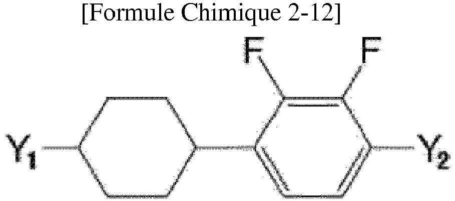 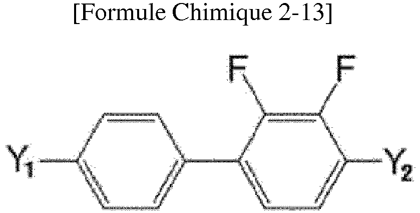 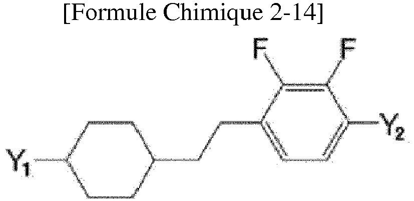 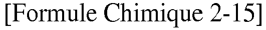 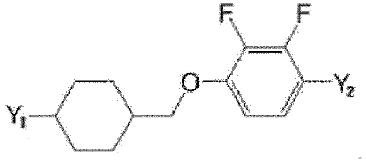 dans lequel Y₁ et Y₂ sont les mêmes que ce qui est défini dans la revendication 1.

6. Affichage à cristaux liquides selon l'une quelconque des revendications 1 à 5, dans lequel la composition de cristaux liquides inclut en outre au moins un des composés de cristaux liquides représentés par la Formule Chimique 2-C: 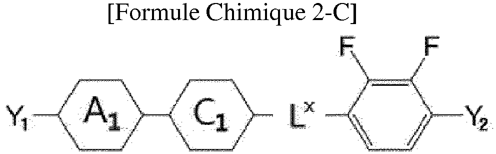 dans lequel Y₁, Y₂, A₁, B₁, C₁ et L^{x} sont les mêmes que ce qui est défini dans la revendication 1.

7. Affichage à cristaux liquides selon la revendication 6, dans lequel le composé de cristaux liquides de la Formule Chimique 2-C inclut au moins un des composés de cristaux liquides représentés par les Formules Chimiques 2-16 à 2-18:

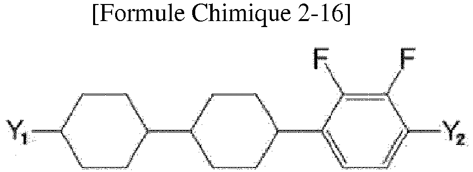

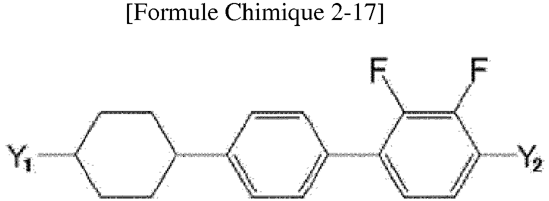

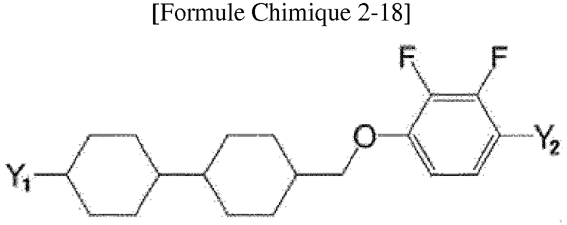

8. Affichage à cristaux liquides selon l'une quelconque des revendications 1 à 7, dans lequel la composition de cristaux liquides a une anisotropie diélectrique négative.

9. Affichage à cristaux liquides selon l'une quelconque des revendications 1 à 8, dans lequel:
un monomère de la Formule Chimique 3 inclut au moins un des monomères représentés par les Formules Chimiques 3-1 à 3-31:

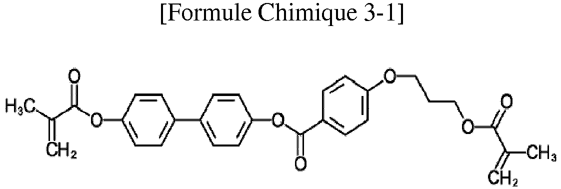

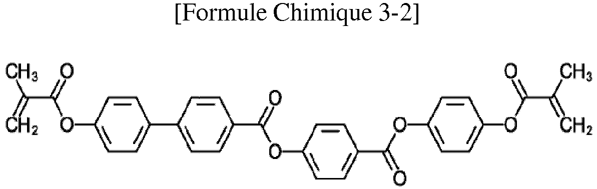

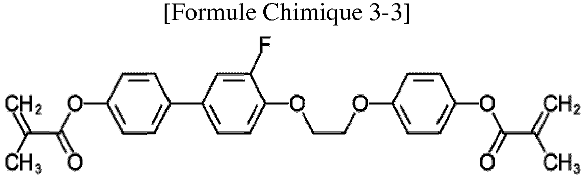

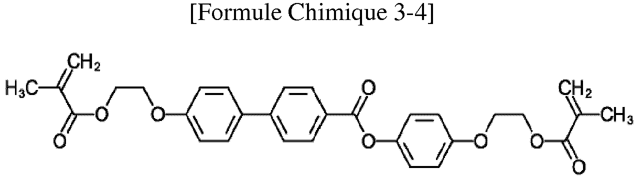

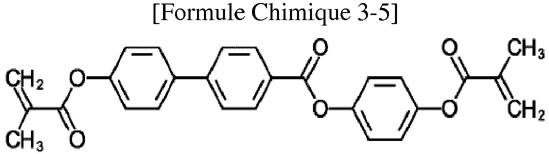

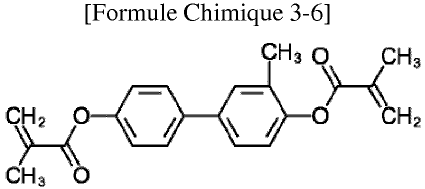

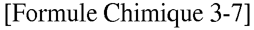

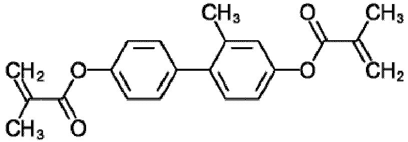

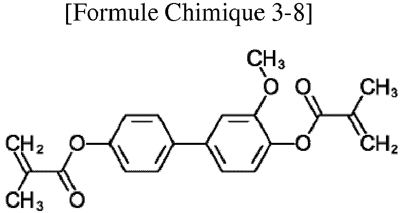

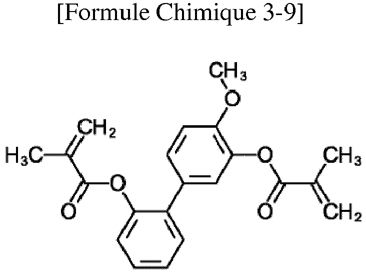

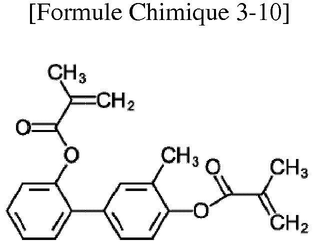

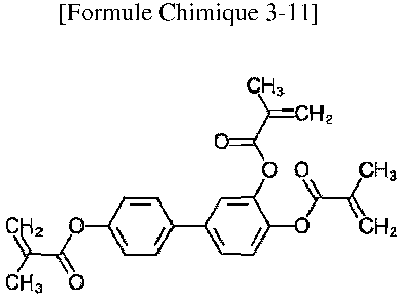

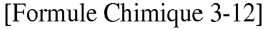

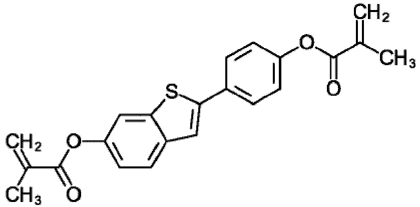

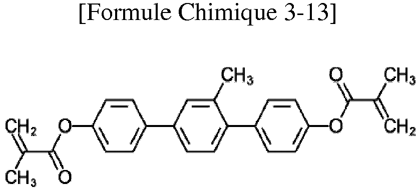

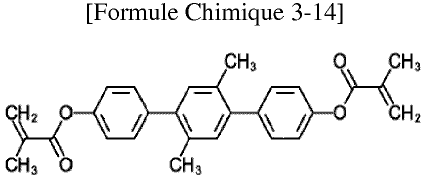

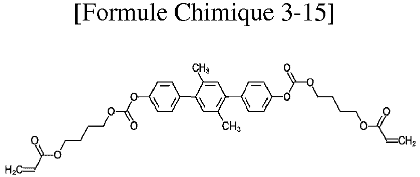

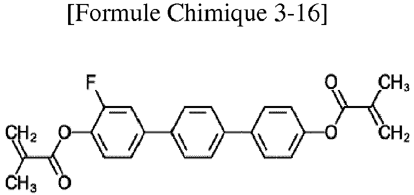

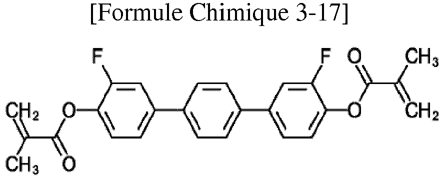

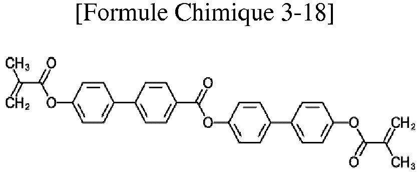

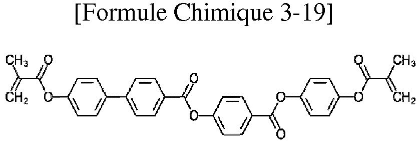

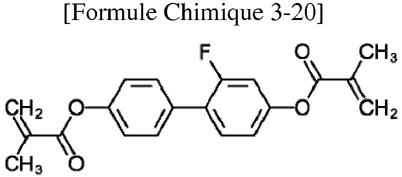

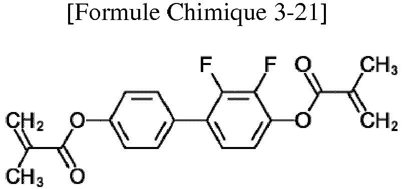

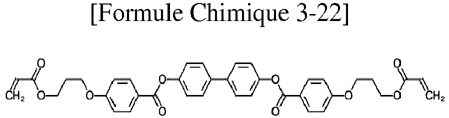

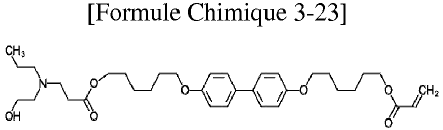

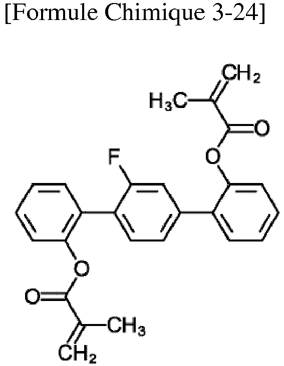

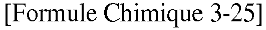

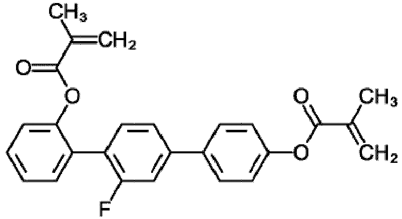

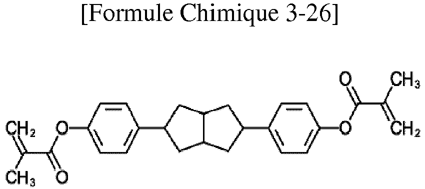

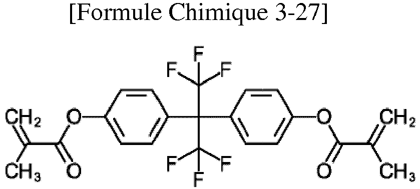

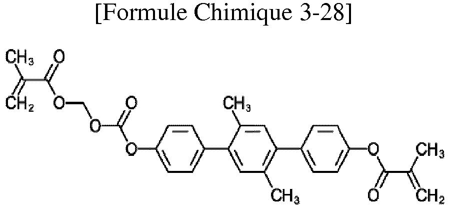

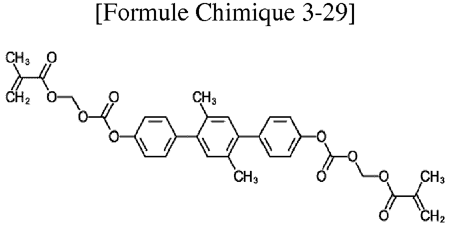

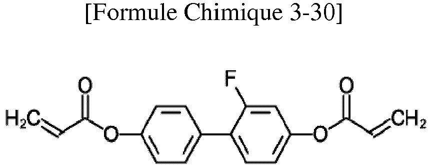

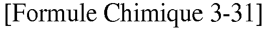

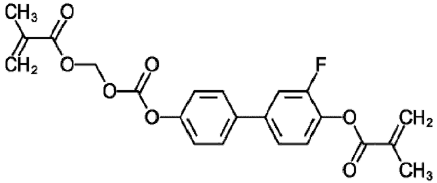

10. Affichage à cristaux liquides selon les revendications 1 à 9, dans lequel la couche de cristaux liquides est conduite dans un mode aligné vertical.

11. Composition de cristaux liquides pour une utilisation dans un affichage à cristaux liquides comprenant:
au moins un d'un composé de cristaux liquides représenté par la Formule Chimique 1, au moins un d'un composé de cristaux liquides représenté par la Formule Chimique 2-A et au moins un d'un composé de cristaux liquides représenté par la Formule Chimique 2-B, dans laquelle le composé de cristaux liquides de la Formule Chimique 2-A inclut un composé de cristaux liquides possédant à la fois un cyclohexylène et un phénylène: 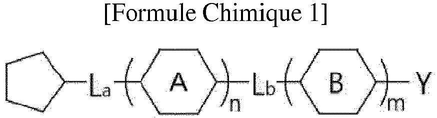 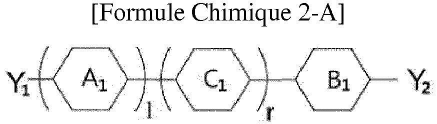 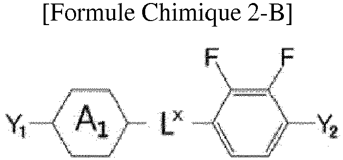
dans laquelle A et B sont indépendamment un 1,4-cyclohexylène ou un 1,4-phénylène, dans laquelle chaque -H de A et B est non substitué ou est indépendamment substitué avec -F, -Cl, -OCF₃, -CF₃, -CHF₂, -CH₂F, un C₁-C₂ alkyle ou un C₁-C₂ alcoxy,
Y est -H, un C₁-C₅ alkyle ou un C₁-C₅ alcoxy,
dans laquelle, lorsque Y est un C₁-C₅ alkyle ou un C₁-C₅ alcoxy, chaque groupe-CH₂- de Y est non substitué ou est indépendamment substitué avec -C≡C-, -CH=CH-,-CF₂O-, -O-, -CO-O-, -O-CO- ou -O-CO-O- de sorte que des atomes d'oxygène de groupes adjacents ne sont pas directement reliés l'un à l'autre et chaque atome d'hydrogène de Y est non substitué ou est substitué avec un halogène,
n et m sont indépendamment un nombre entier choisi parmi 0 à 2,
Lₐ et L_{b} sont indépendamment une liaison simple, -C≡C-, -COO-, -OCO-, -CF₂O-, -OCF₂-, -CH₂O-, -CO-, -O-, -(CH₂)₂- ou -CH=CH-,
Y₁ et Y₂ sont indépendamment -H, -F, -Cl ou un C₁-C₁₅ alkyle,
dans laquelle, lorsque Y₁ et/ou Y₂ est un C₁-C₁₅ alkyle, chaque groupe -CH₂- est non substitué ou est indépendamment substitué avec -C≡C-, -CF₂O-, -CH=CH-, -CO-, -O-, -CO-O-, -O-CO- ou -O-CO-O- de sorte que des atomes d'oxygène de groupes adjacents ne sont pas directement reliés l'un à l'autre et chaque atome d'hydrogène de Y₁ et/ou Y₂ est non substitué ou est substitué avec un halogène,
A₁, B₁ et C₁ sont indépendamment un 1,4-cyclohexylène ou un 1,4-phénylène, chaque -H de A₁, B₁ et C₁ est non substitué ou est indépendamment substitué avec -F, -Cl, -OCF₃, -CF₃, -CHF₂, -CH₂F, un C₁-C₂ alkyle ou un C₁-C₂ alcoxy,
I et r sont indépendamment un nombre entier choisi parmi 0 à 2,
et L^{x} est une liaison simple, -C≡C-, -COO-, -OCO-, -CF₂O-, -OCF₂-, -CH₂O-, - CO-, -O-, -(CH₂)₂- ou -CH=CH-.

12. Composition de cristaux liquides selon la revendication 11, dans laquelle le composé de cristaux liquides de la Formule Chimique 1 inclut au moins un des composés de cristaux liquides représentés par les Formules Chimiques 1-1 à 1-6: 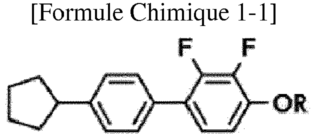 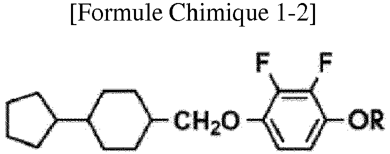 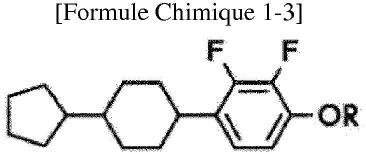 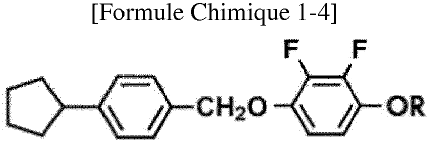 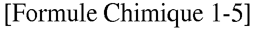 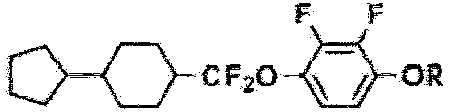 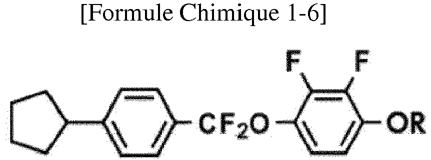
dans laquelle R est -H ou un C₁-C₅ alkyle, et
dans laquelle, lorsque R est un C₁-C₅ alkyle, chaque groupe -CH2- de R est non substitué ou est indépendamment substitué avec -C≡C-, -CH=CH-, -CF₂O-, -O-, -CO-O-, -O-CO- ou -O-CO-O- de sorte que des atomes d'oxygène de groupes adjacents ne sont pas directement reliés l'un à l'autre et chaque atome d'hydrogène de R est non substitué ou est substitué avec un halogène.

13. Composition de cristaux liquides selon la revendication 12, dans laquelle le composé de cristaux liquides de la Formule Chimique 1-1 inclut au moins un des composés de cristaux liquides représentés par les Formules Chimiques 1-1-A et 1-1-B:

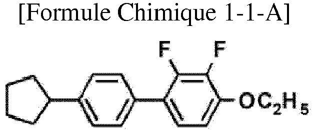

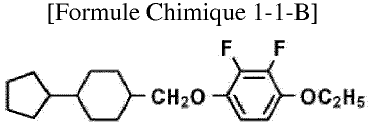

14. Composition de cristaux liquides selon l'une quelconque des revendications 11 à 13, dans laquelle le composé de cristaux liquides de la Formule Chimique 2-A inclut au moins un des composés de cristaux liquides représentés par les Formules Chimiques 2-1 à 2-11: 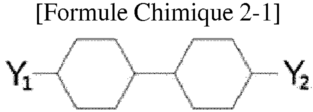 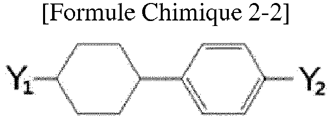 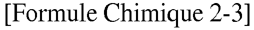 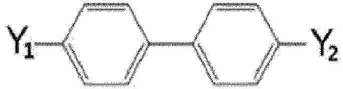 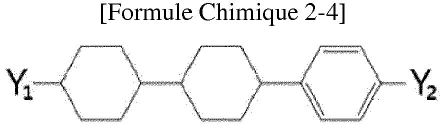 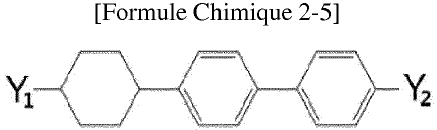 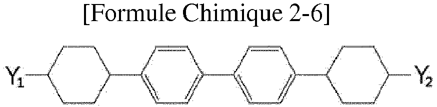 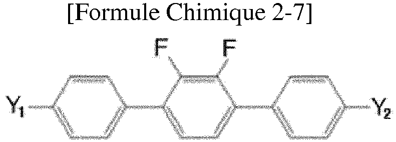 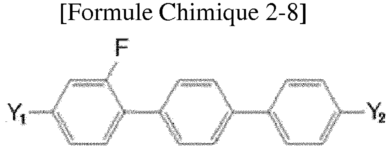 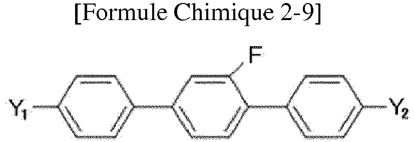 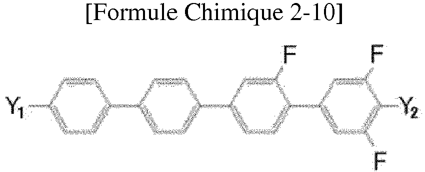 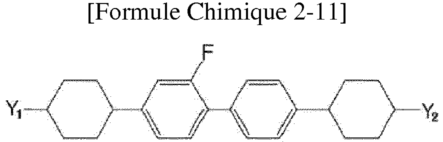 dans laquelle Y₁ et Y₂ sont les mêmes que ce qui est défini dans la revendication 12.

15. Composition de cristaux liquides selon l'une quelconque des revendications 11 à 14, dans laquelle le composé de cristaux liquides de la Formule Chimique 2-B inclut au moins un des composés de cristaux liquides représentés par les Formules Chimiques 2-12 à 2-15: 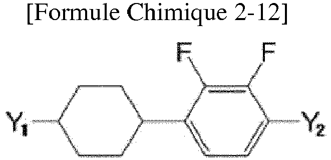 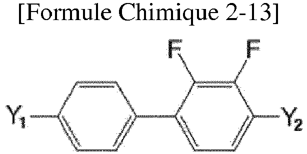 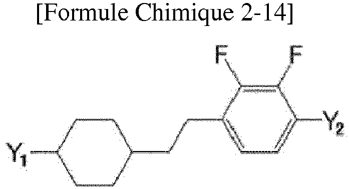 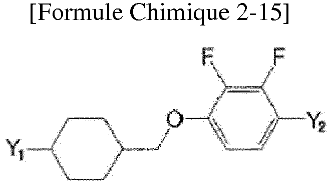 dans laquelle Y₁ et Y₂ sont les mêmes que ce qui est défini dans la revendication 12.

16. Composition de cristaux liquides selon l'une quelconque des revendications 11 à 15, où la composition de cristaux liquides inclut en outre au moins un des composés de cristaux liquides représentés par la Formule Chimique 2-C: 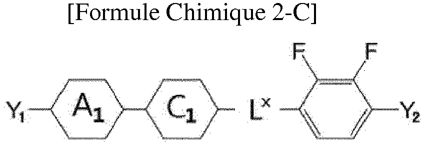 dans laquelle Y₁, Y₂, A₁, B₁, C₁ et L^{x} sont les mêmes que ce qui est défini dans la revendication 12.

17. Composition de cristaux liquides selon la revendication 16, dans laquelle le composé de cristaux liquides de la Formule Chimique 2-C inclut au moins un des composés de cristaux liquides représentés par les Formules Chimiques 2-16 à 2-18:

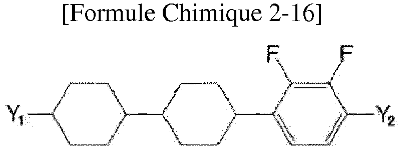

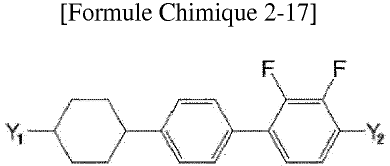

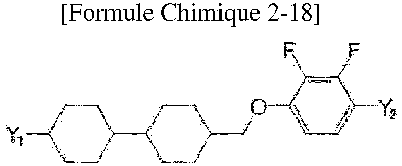

18. Composition de cristaux liquides selon l'une quelconque des revendications 11 à 17, comprenant en outre un monomère représenté par la Formule Chimique 3: 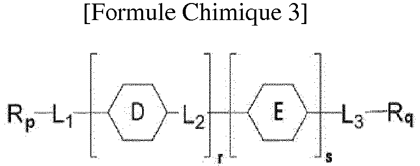
dans laquelle D et E sont indépendamment un cyclohexylène, un phénylène, un thiophénylène, un benzothiophénylène ou un aromatique ou aliphatique polycyclique et chaque -H de D et E est non substitué ou est indépendamment substitué avec -F, -Cl, - OCF₃, -CF₃, -CHF₂, -CH₂F, un C₁-C₂ alkyle ou un C₁-C₂ alcoxy,
Rₚ et R_{q} sont chacun un groupe réactif qui entraîne indépendamment une polymérisation, dans laquelle Rₚ et R_{q} sont indépendamment un groupe C₁-C₁₂ acrylate, un groupe méthacrylate, un groupe époxy, un groupe oxétane, un groupe vinyl-éther ou un groupe styrène,
L₁ à L₃ sont indépendamment une liaison simple, un C₁-C₅ alkylène, un éther, un carbonyle ou un carboxyle,
dans lequel, lorsque L₁, L₂ ou L₃ est un C₁-C₅ alkylène ou un éther, chaque groupe -CH₂- est non substitué ou est indépendamment substitué avec -CO-, -O-, -CO-O-, -O-CO- ou -O-CO-O- de sorte que des atomes d'oxygène de groupes adjacents ne sont pas directement reliés l'un à l'autre et chaque -H est non substitué ou est indépendamment substitué avec -F, -Cl, -OCF₃, -CF₃, -CHF₂ ou -CH₂,
et r et s sont indépendamment un nombre entier choisi parmi 0 à 2.

19. Composition de cristaux liquides selon la revendication 18, dans laquelle le monomère de la Formule Chimique 3 inclut au moins un des monomères représentés par les Formules Chimiques 3-1 à 3-31:
